(19) Europäisches Patentamt
European Patent Office
Office européen des brevets

(11) **EP 4 573 281 B1**

(12) **EUROPEAN PATENT SPECIFICATION**

(45) Date of publication and mention
of the grant of the patent:
**15.07.2026 Bulletin 2026/29**

(21) Application number: **23783298.5**

(22) Date of filing: **18.08.2023**

(51) International Patent Classification (IPC):
***F03B 13/06*** *(2006.01)*

(52) Cooperative Patent Classification (CPC):
**F03B 13/06;** F05B 2240/97; F05B 2260/422

(86) International application number:
**PCT/CZ2023/050052**

(87) International publication number:
**WO 2024/037681 (22.02.2024 Gazette 2024/08)**

(54) **A MODULAR PUMPED-STORAGE POWER PLANT**

MODULARES PUMPSPEICHERKRAFTWERK

CENTRALE ÉLECTRIQUE À ACCUMULATION PAR POMPAGE MODULAIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **19.08.2022 CZ 20220345**
**19.08.2022 CZ 20220346**
**03.07.2023 CZ 20230258**

(43) Date of publication of application:
**25.06.2025 Bulletin 2025/26**

(73) Proprietors:
• **Vysoká Skola Bánská-Technická Univerzita Ostrava**
**70800 Ostrava (CZ)**

• **Cerny, Otakar**
**73601 Havirov (CZ)**

(72) Inventors:
• **HONUS, Stanislav**
**74719 Bohuslavice (CZ)**
• **CERNÝ, Otakar**
**73601 Havírov (CZ)**

(74) Representative: **Poljak, Michal**
**Nove sady 988/2**
**602 00 Brno (CZ)**

(56) References cited:
EP-A1- 3 085 950        DE-A1- 102012 008 876
DE-A1- 102019 118 725        ES-A1- 2 798 158

## Description

Technical field

The invention relates to a pumped-storage power plant with a floating reservoir or with stationary reservoirs.

Background of the invention

There has been a significant discrepancy between electricity consumption and generation since the beginning.

The consumption of electricity is very variable and requires that its production is adjusted operatively; the production of electricity, on the other hand, requires the most uniform consumption. Thermal power generation can adapt to the demands of consumption, although often at the cost of large losses from unused energy or unused production capacity.

Recently, the use of renewable energy sources has been increasing significantly, especially in wind and solar power plants, which are favoured over fossil fuel power plants in every possible way. However, their electricity production depends on the current climatic conditions, time of day and season, so the electrical output is quite difficult to predict, which has a strong destabilizing effect on the power grid.

The interconnectedness of today's electricity transmission grids allows for some mutual assistance between regions to overcome peaks in demand or outages of certain large energy sources. However, the persistent technical and political differences between countries do not allow this problem to be solved on a continental scale.

The result is a very tense situation, with increasingly frequent and widespread power outages.

Effective balancing of the disproportion between consumption and production of electricity, faster development of renewable energy plants and reduction of operation of fuel-fired power plants is fundamentally hampered by a complete lack of economically and environmentally friendly energy storage with high power, capacity and efficiency.

Pumped-storage power plants are by far the most used for this purpose, as they offer the largest capacity, have the longest lifetime, and show the highest cost-effectiveness. They are based on storing the gravitational potential energy of water by pumping it from a lower reservoir to an upper reservoir.

The water level in the upper reservoir is higher than the water level in the lower reservoir.

The difference in height between the water level in the lower reservoir and the water level in the upper reservoir is also called the pumping height or height gradient.

Pumped-storage power plants are most often designed with stationary reservoirs.

However, the implementation of the existing types of such pumped-storage power plants is only feasible under very specific conditions.

In a pumped-storage power plant with stationary reservoirs, the distance between the upper reservoir and the lower reservoir is constant, both reservoirs are placed stably on the ground surface.

In stationary reservoirs, the difference in height between the water level in the lower reservoir and the upper reservoir changes during pumping.

Water level fluctuations in natural reservoirs damage their banks and the biology of life.

By pumping huge amounts of water between stationary reservoirs, the specific load on their bedrock changes periodically, which can trigger earthquakes or landslides.

Although surface pumped-storage power plants with stationary reservoirs usually use as a lower reservoir some surface or underground natural reservoir or an artificial reservoir that was historically created earlier, they require additional significant space in a mountainous terrain for the upper reservoir and therefore their further construction is increasingly encountering resistance due to legitimate landscape and nature conservation concerns. They cannot be built in flat or in densely populated areas.

Underground pumped-storage power plants with stationary reservoirs are threatened by geological influences and corrosive aggressive environments.

In existing pumped-storage power plants with stationary reservoirs, the height difference between the reservoirs is created by the morphology of the terrain and the upper reservoir is carried above the lower reservoir by the natural earth mass.

There is a well-known wave hydroelectric power plant, where a stand (an intermediate piece) is placed in the sea, which serves as a lower reservoir, directly on its bottom or on its shore or base, and the upper reservoir is placed thereon. This power plant does not have, nor does it need, any additional self-supporting lower reservoir on the base. This power plant is used to generate electricity from the varying difference in water level between the lower and upper reservoirs caused by the regular natural wave action of the sea or the tides and is not used as a pumped-storage power plant to store surplus electricity and consume it to compensate for the random differences between consumption and generation on the electricity grid.

Pumped-storage power plants can be created with a reservoir floating in a base reservoir, e. g. in a lake or in the sea. A reservoir is floating if it is affected by the buoyancy of the water in the base reservoir and is not stably fixed to the bottom of the base reservoir.

According to the prior art, the floating reservoir comprises a lower reservoir and the base reservoir is the upper reservoir, or the floating reservoir comprises an upper reservoir and the base reservoir is the lower reservoir.

According to the prior art, the pumping of water between the floating reservoir and the base reservoir changes the height of the floating reservoir relative to the base reservoir.

Usually, the height difference between the water level in the floating reservoir and in the base reservoir is also partly changed during pumping because the outer horizontal cross-section of the floating reservoir float is usually larger than the inner horizontal cross-section of the floating reservoir.

During the operation of a floating reservoir with a lower reservoir, water is transferred from the base reservoir, i. e. the upper reservoir, through a turbine to the lower reservoir in the floating reservoir and the floating reservoir is thus submerged. When water is pumped from the lower reservoir in the floating reservoir to the base reservoir, i. e. the upper reservoir, by means of a pump, the floating reservoir rises.

During the operation of a floating reservoir with an upper reservoir, water is pumped from the base reservoir, i. e. the lower reservoir, to the upper reservoir in the floating reservoir and the floating reservoir is thus submerged. When water is transferred from the upper reservoir in the floating reservoir via a turbine to the base reservoir, i. e. the lower reservoir, the floating reservoir rises.

A well-known solution is an underground pumped-storage power plant, which comprises a vertical cylinder with a bypass pipeline. It is several hundred metres deep and filled with water. A heavy piston made from concrete and iron moves in the cylinder and is sealed against the ingress of water between the cylinder and the piston. The piston is lowered by gravity and pushes the water out from under the piston through a bypass pipeline with a reverse turbine into the space above the piston. In the gravity potential energy storage mode of the piston, the water is then pumped back under the piston and lifts it up. Apart from the frictional losses of the piston in the cylinder, the disadvantage is that the pumped-storage power plant cannot have a very large capacity, as the cylinder diameter must be limited for reasons of strength and cost. Also, considerable maintenance costs for friction surfaces and sealing elements can be expected. This is not a pumped-storage power plant with a floating reservoir.

A known arrangement is disclosed in US 2021221351. The lower reservoir is stationary and is arranged below the water level in a base, upper reservoir or the lower reservoir is formed in a floating reservoir. In other embodiments, the upper reservoir is also stationary and is arranged on the shore of the base, lower reservoir. The fluid pumped herein is a gas or liquid.

A well-known arrangement is a floating pumped-storage power plant according to EP 3085951, which comprises a floating reservoir with a lower reservoir, which in the base reservoir, i. e. in the upper reservoir, rises or submerges according to the amount of seawater deposited when floating at sea level; a water turbine arranged at the inlet pipeline in the floating reservoir generates power by pumping water from the sea into the lower reservoir in the floating reservoir, where the water level is made to be lower than the sea level, which is achieved by pumping water from the lower reservoir in the floating reservoir by means of a fixed pipeline which is brought, however, in a very inefficient manner, up to the upper platform of the floating reservoir into the airspace above sea level; the connection between the water space of the floating reservoir and the sea through the pipeline is interrupted by this air space, the pumping height of the pump increases by the height of the air space compared to the height gradient to the turbine and the power consumption for pumping water out of the floating reservoir increases unnecessarily, reducing the efficiency of the pumping energy cycle.

A known arrangement is a floating pumped-storage power plant according to WO 2013163979, comprising a floating reservoir that floats on the surface of the base reservoir. The floating reservoir comprises two chambers - an upper and a lower chamber, which are rigidly constructionally connected. The lower chamber is completely submerged in the base reservoir, it is connected to the air by a vent stack, the upper chamber is fully open to the air at the top, it is situated at the level of the water level in the base reservoir. The two chambers thus simultaneously form a combined float that allows the floating reservoir to float on the surface of the base reservoir. The two chambers of the floating reservoir are connected to each other by a vertical channel and a turbine, with the water flowing in this vertical channel only in one direction down to the turbine. The upper chamber of the floating reservoir is connected to the base reservoir at the water level in the base reservoir by a side channel, such that the upper chamber is functionally a part of the base reservoir. The side channel is lockable to prevent the floating reservoir from sinking if the upper chamber overflows.

When the floating reservoir is submerged, the upper chamber is spontaneously filled by the side channel from the base reservoir, and when the floating reservoir is surfaced, the water spontaneously flows out of the upper chamber into the base reservoir through the side channel, and due to the hydrodynamic resistance in the horizontal channel, there is a pumping height difference between the water level in the upper chamber of the floating reservoir and the water level in the base reservoir, which is the source of losses in the pumping energy balance.

The lower chamber is connected to the base reservoir at its bottom level by a side channel and by a pump, through which side channel the water flows unidirectionally only from the pump to the base reservoir. The lower chamber of the floating reservoir is the lower reservoir, and the base reservoir is the upper reservoir. The upper chamber of the floating reservoir is here a part of the base reservoir, it is not a separate, independent, full-fledged upper reservoir in relation to the lower chamber of the floating reservoir, both in turbine and pumping mode, therefore the floating reservoir moves vertically during pumping.

Pumping is carried out between the base reservoir and the lower chamber in a floating reservoir, which submerges when filling the lower chamber with water from the base reservoir in the turbine mode and returns to surface when pumping water from the lower chamber to the base reservoir.

While in the pumping mode, the connection between the base reservoir and the lower chamber of the floating reservoir is direct, immediate, in the turbine mode, the connection between the base reservoir and the lower chamber of the floating reservoir via the turbine is not direct, immediate, but is interrupted by the open upper chamber, which reduces the usable height gradient:

- filling of the upper chamber of the floating reservoir with water from the base reservoir by means of a side channel is carried out here freely, without energy recovery, wherein the water level in the upper chamber is connected to the air, thus breaking the water column between the water level in the base reservoir and the water level in the upper chamber,
- from the upper chamber the water is passed through a vertical channel directly, immediately, with energy recovery through the turbine to the lower chamber.

In the pumping mode, water is pumped from the lower chamber of the floating reservoir by a pump through a side channel directly, i. e. immediately into the base reservoir, while water from the upper chamber flows freely through the side channel into the base reservoir without energy recovery. The floating reservoir emerges from the lower to the upper operating position. The pumping height during the pumping mode is the difference in height between the water level in the base reservoir and the water level in the lower chamber. In the turbine mode, water from the upper chamber of the floating reservoir is passed through a vertical channel to the lower chamber via the turbine, while water from the base reservoir flows freely through a side channel to the upper chamber without energy recovery. The floating reservoir is submerged from the upper to the lower operating position. In the turbine mode, the height gradient is the difference in height between the water level in the upper chamber and the water level in the lower chamber.

The German patent application DE 102013015082 A1 discloses a similar modular floating pumped-storage power plant arranged in a base reservoir and comprising an upper and a lower chamber. The lower chamber is connected by a pump to the base reservoir and the upper chamber is connected by a turbine to the lower chamber. The upper chamber is connected by a gravity pipe to the base reservoir. The individual modules of a circular horizontal cross-section are connected together as flexible units in an assembly by elastic (i.e. flexible) and damping fasteners (see Figure 2 of said document). These are only semi-flexible connections to ensure that the reservoirs are held together as a group at sea level so as not to restrict the independent vertical movement of the individual floating reservoirs, while ensuring that the floating concrete reservoirs do not bump into each other and damage each other when rocking on the surface of the lake or sea. The height of the modules can be increased by means of an intermediate piece or by increasing the height of the lower chamber, but only towards the depth of the base reservoir, which increases the stress on the walls of the lower chamber. The stability of the modules on the water surface in the base reservoir is ensured by the width of the modules, slimmer modules would have to be loaded with a large additional load located in the lower part of the modules, otherwise they would overturn in the water.

A known pumped-storage power plant is disclosed in EP 2418375 with a floating reservoir for storing water, wherein the power device is connected to the floating reservoir by an articulated or telescopic pipeline and is vertically movable relative to the floating reservoir so that it remains on the surface of the base reservoir even when the floating reservoir is moved for easy accessibility for maintenance.

The water level in the base reservoir, i. e. in the upper reservoir, is at most a few metres higher, i. e. it has a higher energy potential than the water level in the floating reservoir, i. e. in the lower reservoir. As a result, the height difference between the water levels in the base reservoir and in the floating reservoir is handled by the power unit on the downstream side, i. e. in the suction pipeline area, so that the permissible height difference is limited to a few metres to avoid cavitation in the power unit or breakage of the water column at the suction height above the water level in the floating reservoir during pumping. Therefore, only a fraction of the height difference of the total depth of the base reservoir can be exploited by this solution.

A pumped-storage power plant is disclosed in US 2018156185, which comprises mainly two necessary parts:

- a conversion chamber that floats on the surface of the base, upper reservoir and works as a compressor/turbine to pump air between the air and the stationary, lower pressure reservoir (compressed air reservoir),
- a stationary, lower pressure reservoir for accumulating compressed air, which is permanently submerged and anchored to the bottom of the base reservoir, with the two reservoirs connected by a pressurised air pipeline.

Further, the essence of said invention according to US 2018156185 is a method of converting electrical energy into compressed air energy and vice versa, wherein air from the surrounding air is compressed in a floating conversion chamber and stored in a compressed air reservoir or exits the reservoir into the conversion chamber where it expands into the surrounding air.

The conversion chamber is in fact a combined pneumohydraulic power unit - an air single-acting reciprocating compressor/motor to pump air between the air and the compressed air reservoir, where the water level serves as the hydraulic piston driven by a water pump/turbine unit pumping water between the conversion chamber and the base reservoir.

Since the conversion chamber is to be about 100 times smaller than the compressed air storage reservoir and the compression ratio is assumed to be high (about 10, which corresponds approximately to a depth of about 100 m for isothermal compression), the compression must be carried out at least in two stages and with a higher number of conversion chambers in order to ensure the storage or reverse generation of electricity continuously over a longer period of time and without large power fluctuations.

A known pumped-storage power plant is disclosed in CN 206721844. A closed stationary reservoir arranged at the bottom of the sea, submerged completely or partially above the surface of the base reservoir, is filled with water via a turbine arranged at the bottom of the stationary reservoir and sucked out by a pump arranged on the upper platform of the stationary reservoir. The stationary reservoir serves as the lower reservoir, the base reservoir serves as the upper reservoir. The maximum height difference of the liquid levels is determined by the permissible suction height of the pump.

A pumped-storage power plant is disclosed US 2014033700. A floating reservoir, comprising a lower reservoir or an upper reservoir, is vertically movable in a base reservoir which serves accordingly as an upper reservoir or a lower reservoir. In cases where the floating reservoir contains a lower reservoir, the sum of the pumping height and the operable stroke is limited by the immersion depth of the floating reservoir. In cases where the floating reservoir contains an upper reservoir, the pumping height is limited by the depth of immersion of the float (floating reservoir) as the upper reservoir is immediately adjacent to the float.

A pumped-storage power plant according is disclosed in GB 1601398. Three reservoirs are used here. A stationary reservoir is inserted in the water in the base reservoir, which is freely exposed to the air above. The base reservoir is the upper reservoir in this pair, and the embedded stationary reservoir is the lower reservoir relative to it. A vertically movable floating reservoir is placed in the water in an embedded stationary reservoir. In this pair, the embedded stationary reservoir is the upper reservoir, and the floating reservoir is the lower reservoir. Instead of simple pumping between the embedded stationary reservoir and the base reservoir, there is a complicated and therefore more wasteful pumping through the floating reservoir, i. e. successively between the floating reservoir and the embedded stationary reservoir and then between the embedded stationary reservoir and the base reservoir. The pumping height is limited by the immersion depth of the embedded stationary reservoir and the immersion depth of the floating reservoir.

A known arrangement is disclosed in WO 2016128962. A floating compressor station immobile in terms of height blows compressed air into a stationary submersible reservoir arranged on the seabed, while displacing water from the stationary submersible reservoir into the sea. The stationary immersion reservoir is the lower reservoir, the sea is the upper reservoir. The overpressure of the air, i. e. the pumping height, is determined by the immersion depth of the stationary immersion reservoir.

The above-cited floating reservoir pumped-storage power plants, whether they contain a lower or an upper reservoir, only achieve a pumping height that is at most equal to the immersion depth of the floating reservoir in the base reservoir in the optimum embodiment, so that the achievable capacity of these pumped-storage power plants is relatively low.

The walls of both floating and stationary reservoirs, which form the lower reservoir, are extremely disadvantageously loaded by external overpressure and the corrosive effects of the water from the base reservoir, and it is usually necessary to increase the buoyancy force of the lower floating reservoir by additional reservoirs or mechanical devices to achieve the required immersion depth and thus the required pumping height. Their construction is therefore relatively expensive, with a rather short service life, especially for deeper reservoirs.

Overall, the floating reservoir pumped-storage power plants mentioned so far are not economically viable despite the high electricity prices, so this type of pumped-storage power plant is not very widespread.

The Korean patent KR 102019894 B1 discloses a stationary pumped-storage hydroelectric power plant with modular water reservoirs, wherein a plurality of modular units are towed by sea and anchored to the seabed at a suitable location. Only after anchoring can the pumped-storage power plant perform its function since both reservoirs must be empty when towed by sea. The modular units preferably have a polygonal horizontal cross-section, so they can be anchored to the seabed side by side to save space. The modular unit has a float on which float the intermediate piece is arranged and on which intermediate piece the upper reservoir is arranged, these parts being connected to each other. The float serves as the lower reservoir when anchored to the seabed. The intermediate piece also serves as a connecting pipeline between the lower reservoir and the upper reservoir. The modular units only touch each other, they are not connected to each other, their stability against overturning is ensured by anchoring to the seabed. Each modular unit must be individually stable when floating on the sea level, therefore for stability reasons the modular units cannot be too high (in the example a displacement height of 100 m is given). The contact of the modules is not required to be strong, as it is necessary to ensure their independent vertical movement for anchoring to the seabed and for transferability by floating at sea level to the repair dock. The hexagonal shape of the horizontal cross-section is utterly unsuitable for the internal overpressure load on the reservoir, the external overpressure load on the float and the buckling load on the intermediate piece - the individual parts of the modules must therefore be much more dimensioned than if they were circular in cross-section.

The Spanish patent application ES 2798158 A1 discloses a system and a method for generating and storing energy using a stationary or floating pumped-storage power plant. The pumped-storage power plant comprises a head reservoir hydraulically connected to a tail reservoir, wherein the head reservoir comprises a higher density fluid (i.e. a higher density than water, e.g. a muddy suspension of water and >50 vol. % magnetite particles, or a muddy sludge from mine waste) and the tail reservoir comprises a lower density fluid (e.g. water). The head reservoir is connected by a pressure pipeline to a first pressure reservoir arranged at a height below both the head and tail reservoirs, wherein the first pressure reservoir comprises the higher density fluid and a gas (e.g., $N_2$, $CO_2$, He, $CH_4$, $H_2$) in the form of two immiscible phases. The first pressure reservoir is connected by the pressure pipeline to a second pressure reservoir arranged at a height above the first pressure reservoir, wherein the second pressure reservoir comprises a gas and the lower density fluid in the form of two immiscible phases. The second pressure reservoir is connected by the pressure pipeline to the tail reservoir arranged slightly above the second pressure reservoir, the tail reservoir comprising only the lower density fluid. The height difference of the higher density fluid between the first pressure reservoir 3 and the head reservoir 1 serves to pressurize the gas in the pressure reservoirs 3, 5. Between the second pressure reservoir and the head reservoir, a power assembly is arranged in the pressure pipeline, the power assembly comprising: a turbine for directly transferring the lower density fluid from the tail reservoir to the second pressure reservoir and a pump for directly pumping the lower density fluid from the second pressure reservoir to the tail reservoir. The pumped-storage power plant may be located on land or in a mine (i.e. the reservoirs and pressure reservoirs are stationary), on water (i.e. the reservoirs and pressure reservoirs are floating) or on shore (i.e. the head reservoir is floating, the first pressure reservoir is stationary on the bedrock and the second pressure reservoir and the tail reservoir are stationary on land). Visibly, only the two pressure reservoirs have a circular horizontal cross-sectional shape (Figures 1-4, spherical shape of reservoirs 3 and 5 from said document). The disadvantages of this pumped-storage power plant are that the connection between the two reservoirs and the two pressure reservoirs is only hydraulic, the pumped-storage power plant is not modular, and the head and tail reservoirs do not have a circular horizontal cross-sectional shape. In the pumped-storage power plant, pumping takes place between the upper reservoir 5 and the lower reservoir 8. In fact, the pressure reservoir 5 serves simultaneously as the upper reservoir 5. The pumping plant stores the pressure energy of the gas in the pressure reservoirs 3 and 5, so that the difference in height between the upper reservoir 5 and the lower reservoir 8 or the difference in height between the head reservoir 1 and the lower reservoir 8 is essentially irrelevant. The pressure energy is provided by the height difference between the first pressure reservoir 3 and the head reservoir 1 with the higher density fluid. A power unit 7 connects the reservoirs 5 and 8, which are arranged side by side. However, with a small operating difference in the fluid levels in the reservoirs 5 and 8, these reservoirs must have a large width to achieve a large capacity.

The European patent application EP 3085950 A1 discloses a floating pumped-storage power plant comprising an upper and lower reservoir comprising a pumped fluid (e.g. seawater), wherein in the pumping mode the fluid is pumped from the lower to the upper reservoir and in the turbine mode the fluid is pumped from the upper to the lower reservoir. The upper reservoir is arranged around the perimeter of the lower reservoir and these reservoirs are connected by their walls. The disadvantage of this pumped-storage power plant is that the reservoirs have a rectangular horizontal cross-section, and the pumped-storage power plant is not modular. The stability of the structure is ensured by placing the heavier parts inside, closer to the centre of gravity of the pumped-storage power plant.

The German patent application DE 102019118725 A1 discloses a modular stationary pumped-storage power plant located in or on the bottom of a lake serving as an upper reservoir and comprising a plurality of spherical (see Figure 8 of said document) or vertical cylindrical (see Figure 15 of said document) stationary pressure reservoirs serving as lower reservoirs and hydraulically connected to the upper reservoir by turbines and pumps. The pumped-storage power plant may comprise several pressure reservoirs of a uniform modular shape, which have a circular horizontal cross-section, are arranged side by side and in contact with each other by their walls (e.g. in contact by means of closest hexagonal arrangement, see Figures 4 and 6 of said document, or bound by cementitious material filling the space between the reservoirs), are optionally connected hydraulically (by a pressure pipeline, see Figure 8b of said document) or a arranged on a common base (see Figure 15 of said document), the module comprising the lower reservoir. The contact of the walls by layering the lower reservoirs or by aligning the lower reservoirs side by side is intended to ensure the use of the space for storing the lower reservoirs in the lake. The common base below the lower reservoirs is provided for storing or anchoring the lower reservoirs to the bedrock. Once construction is complete, the lower reservoirs are backfilled with rock (or cementitious material) that loads and stabilizes these lower reservoirs and secures them against uplift as a counterbalance to the buoyancy of the water. Both embodiments of the pressure reservoirs, i.e. the lower reservoirs, have the disadvantage that they are only hydraulically connected to each other, not constructionally, so that their integral stiffness is not ensured. Furthermore, the lower reservoirs are made of concrete, which presents a drawback due to their fragility and low compressive, tensile and shear strength of concrete. Consequently, the lower concrete reservoirs can only be subject to stress in such a way that it is external overpressure that prevails at all operational states, which in turn limits their use only to a "submerged" embodiment of lower reservoirs, aided by backfilling the lower reservoirs with rock.

The power units of the existing pumped-storage power plants often damage the fish populations that are usually kept in the reservoirs and erode them by sucking mechanical debris from the bottom of the lower reservoirs.

Existing pumped-storage power plants have an energy efficiency of approximately 75 %, i. e. 25 % of the energy converted is converted into waste heat, which is dissipated without benefit to the surrounding environment mainly by evaporation of heated pumped water in open water reservoirs and convection of water and air around the walls of the connecting pipelines and power plant structures. The heat transfer surfaces are large in relation to the volume of the pumped water and are not thermally insulated in any way, therefore all waste heat is easily removed from the pumped-storage power plant during each pumping cycle and the temperature of the pumped water is therefore not increased. Secondary use of this waste heat from the pumped water is unprofitable, firstly because the pumped water is at a low temperature, which is only minimally different from the ambient temperature, and secondly because pumped-storage facilities are usually built far from populated areas.

The aim of the invention is to provide a pumped-storage power plant which will have a high ratio of capacity per area unit of the pumped-storage power plant, which will make much better use of its surface area due to its efficient embodiment, which will be arranged on a solid surface and on a water surface, which will be stable against overturning in the wind, and which will allow the waste heat generated during pumping to be used. The capacity of a pumped-storage power plant is the product of the weight of the fluid to be pumped, the pumping height and the gravitational acceleration. The area of a pumped-storage power plant means the area occupied on the land by the lower and upper reservoir areas, or the base reservoir if it serves as a lower or upper reservoir.

## Summary of the invention

The invention solves the above-cited problem by a pumped-storage power plant for pumping fluid between a lower reservoir and an upper reservoir. The pumped-storage power plant comprises a pipeline and a power unit for pumping fluid between the lower reservoir and the upper reservoir. The space of the lower reservoir containing the pumped fluid is connected to the space of the upper reservoir containing the pumped fluid by means of the power unit via a pipeline which, in both the lower reservoir and the upper reservoir, has outlets positioned in the pumped fluid. The pumped-storage power plant comprises a first module and a second module, wherein both modules have a vertical cylinder shape with a circular shape of horizontal cross-section, are arranged side by side and connected to each other by their walls.

According to a first alternative, the first module comprises an upper reservoir, a lower reservoir, a base and an intermediate piece. The first module is placed on a stationary bedrock. The intermediate piece is arranged on the base, the lower reservoir is arranged on the base or above the base in the space of the intermediate piece, and the upper reservoir is arranged on the intermediate piece. The intermediate piece has a vertical cylinder shape. The first module, expect for the base, is made of sheet metal and the base is made of concrete.

According to said first alternative, the second module comprises an upper reservoir, a lower reservoir, a base and an intermediate piece. The second module is placed on a stationary bedrock. The intermediate piece is arranged on the base, the lower reservoir is arranged on the base or above the base in the space of the intermediate piece, and the upper reservoir is arranged on the intermediate piece. The intermediate piece has a vertical cylinder shape. The second module, expect for the base, is made of sheet metal and the base is made of concrete.

Within the context of this invention, the upper reservoir and the lower reservoir according to the first alternative are referred to also as stationary reservoirs.

According to a second alternative, the first module comprises a floating reservoir arranged in a liquid in a base reservoir. The floating reservoir comprises an upper reservoir, a float and an intermediate piece. The intermediate piece is arranged on the float and the upper reservoir is arranged on the intermediate piece. The base reservoir is the lower reservoir. The intermediate piece has a vertical cylinder shape. The first module is made of sheet metal.

According to said second alternative, the second module comprises a floating reservoir arranged in a liquid in a base reservoir. The floating reservoir comprises an upper reservoir, a float and an intermediate piece. The intermediate piece is arranged on the float and the upper reservoir is arranged on the intermediate piece. The base reservoir is the lower reservoir. The intermediate piece has a vertical cylinder shape. The second module is made of sheet metal.

According to a third alternative, the first module comprises a floating reservoir arranged in a liquid in a base reservoir. The floating reservoir comprises an upper reservoir and a lower reservoir. The pipeline with the power unit are arranged for directly transferring fluid from the upper reservoir to the lower reservoir and for directly pumping of fluid from the lower reservoir to the upper reservoir. The first module is made of sheet metal.

According to said third alternative, the second module comprises a floating reservoir arranged in a liquid in a base reservoir. The floating reservoir comprises an upper reservoir and a lower reservoir. The pipeline with the power unit are arranged for directly transferring fluid from the upper reservoir to the lower reservoir and for directly pumping of fluid from the lower reservoir to the upper reservoir. The second module is made of sheet metal.

The term "directly" pumping or transferring means within the context of this application "immediately" or "continuously" pumping or transferring, all three terms are used equally herein.

The advantage of the pumped-storage power plant according to the first alternative is a high ratio of capacity per area unit of the pumped-storage power plant, due to the reduction of the area of the pumped-storage power plant because of the location of the lower reservoir in the space of the intermediate piece arranged below the upper reservoir.

The advantage of the pumped-storage power plant according to the second alternative is a high ratio of capacity per area unit of the pumped-storage power plant due to the increase in the capacity of the pumped-storage power plant as a result of the location of the float and the intermediate piece below the upper reservoir, and thus due to the high value of the fluid pumping height in the upper reservoir.

The advantage of the pumped-storage power plant according to the third alternative is a high ratio of capacity per area unit of the pumped-storage power plant, due to the reduction of the area of the pumped-storage power plant as a result of the functional independence from the base reservoir due to the pipelines with power units arranged for directly transferring fluid from the upper reservoir to the lower reservoir and for directly pumping fluid from the lower reservoir to the upper reservoir. This being in a closed circuit outside the base reservoir and without the need for energy waste to pump the fluid between the floating and base reservoirs.

The invention thus offers essentially the following combinations of arrangements.

The pumped-storage power plant with stationary reservoirs arranged on the bedrock comprises a base, a lower reservoir, an intermediate piece and an upper reservoir.

For a pumped-storage power plant with a floating reservoir arranged in the base reservoir:

- the base reservoir is the lower reservoir, and the floating reservoir comprises a float, an intermediate piece and an upper reservoir, or
- the floating reservoir comprises a lower reservoir and an upper reservoir, or
- the floating reservoir comprises a lower reservoir, an intermediate piece and an upper reservoir, or
- the floating reservoir comprises a float, a lower reservoir, an intermediate piece and an upper reservoir.

The pumping and movement of the floating reservoir in the base reservoir and takes place in an environment of two fluids with different densities. Because of gravity, the less dense and therefore lighter fluid stays above the surface of the denser and therefore heavier fluid. The average density of the floating reservoir is less than the density of the denser fluid in the base reservoir and greater than the density of the thinner fluid, therefore the floating reservoir floats on the surface of the denser fluid in the base reservoir.

The fluids with different densities are advantageously a liquid as a fluid with a higher density (hereinafter referred to as liquid) and a gas as a fluid with a lower density (hereinafter referred to as gas). The liquid is advantageously water, the gas is advantageously air.

The fluid pumped may be a higher density fluid or a lower density fluid or both fluids, either simultaneously or separately.

The pumped-storage power plant can advantageously be filled with fresh water from a river or lake, which will better protect the interior of the reservoirs, connecting pipelines and power units against corrosion. This is particularly advantageous in a situation where the floating reservoir with lower and upper reservoirs is arranged in the sea (containing salt water).

Reservoirs can be open to the surroundings or closed.

The pumped-storage power plant according to the invention requires a substrate of a required area for its location. The substrate may have different pliability, strength - from solid rock to mud to liquid.

If a solid bedrock is available as a base, a pumped-storage power plant with stationary reservoirs can be built on it. The bedrock must be sufficiently load-bearing to allow the construction of an efficient power plant on it. If the bedrock is not sufficiently load-bearing, the bedrock has to be reinforced, which increases the construction costs.

If no land with a solid bedrock is available, a water reservoir can be used as a base, in which a pumped-storage power plant with a floating reservoir can be built.

The base reservoir for the placement of a floating reservoir can advantageously be formed by the sea or a river, an artificial body of water, a lake, e. g. advantageously, it may be formed as a pit below the surface or as a pit open to the surface, advantageously it may be formed on the surface as a dredged reservoir, wherein the rock excavated during the dredging of the reservoir may advantageously be used to form an embankment or dike around the dredge to raise the water level and thus the depth of the reservoir.

Areas with elevated groundwater levels or areas that are permanently flooded, e. g. in the Netherlands, can advantageously be used for the construction of basic reservoirs for pumped-storage power plants according to the invention.

Advantageously, the base reservoir should be drainless to reduce the risk that the floating reservoir will be damaged when water is inadvertently or deliberately released from the base reservoir, or due to damage, leakage or permeability of its dam or its bottom, when it reaches the bottom of the base reservoir.

Reservoirs contain a space for thicker and thinner fluids, e. g. a liquid space and a gas space.

In a pumped-storage power plant with an open embodiment of the liquid space of the reservoirs, normal or partially treated water can advantageously be used as the liquid, advantageously treated by filtering so that the surrounding environment cannot be endangered if the water accidentally leaks out of the reservoirs.

In the closed embodiment of the liquid space of the reservoirs, the water can advantageously be thickened with soluble or insoluble substances to achieve higher transfer capacities and can be treated to reduce erosive or corrosive action on the components of the pumped-storage power plant or to reduce the formation of mineral deposits.

A pumped-storage power plant with stationary reservoirs is advantageously equipped with a catchment reservoir of the necessary volume for possible leakage of treated liquid from some of the reservoirs.

In a pumped-storage power plant with an open gas reservoir embodiment, air is available as a gas.

In closed reservoir designs, the gas space above the liquid level in the reservoirs is separated from the surrounding atmosphere and the gas pressure in the base reservoir may not be equal to the pressure of the surrounding atmosphere. An inert gas, advantageously nitrogen, may advantageously be used, which, although more expensive, reduces corrosion of the components of the pumped-storage power plant.

The potential energy in a pumped-storage power plant is in the form of the position and pressure energy of the fluids in the reservoirs, and possibly also in the form of the position and buoyancy energy of the floating reservoir. The ratios of the different types of energy change during the pumping process. By pumping one of the fluids, not only the potential energy of that fluid and the floating reservoir may change, but also the potential energy of the other fluid. One or both fluids may be pumped separately or simultaneously.

The operating height difference of the denser fluid level is the height difference between the level of the denser fluid in the upper reservoir and the level of the denser fluid in the lower reservoir.

The lower reservoir and the upper reservoir are connected to each other by a connecting pipeline with the power unit.

The power unit for pumping the denser fluid is connected to the upper reservoir on the discharge side and to the lower reservoir on the suction side via a connecting pipeline.

The operating height of the denser fluid in the connecting pipeline is advantageously higher on the side of the power unit connected to the upper reservoir than on the side connected to the lower reservoir.

The height difference is thus processed mainly by the pressurized, discharge side of the power unit, not by its depressurized, suction side, which allows to achieve a high operating height difference and not to limit the operating height difference only to the suction height, which is limited to only a few meters, when cavitation in the power unit or a break in the column of denser fluid in the suction side of the connecting pipeline does not yet occur.

The term operating height is used to represent an operating situation where the pipeline is filled with a denser fluid and a height difference is created between the levels of the denser fluid in the upper reservoir and the lower reservoir that is readily available for pumping.

This distinguishes from an operational situation a situation that occurs during repairs or a malfunction, where there is an intentional or accidental release of fluid from the upper reservoir or even from the pipeline and the pumped-storage power plant is taken out of operation.

However, these situations are common in any pumped-storage power plant and are not contrary to the invention.

Preferably, the liquid herein is water, the gas herein is air.

In the pumped-storage power plant, the reservoirs and the intermediate piece are arranged on a supporting element.

In a pumped-storage power plant with stationary reservoirs, the supporting element is a base placed on the bedrock. The base is configured to support all other parts of the pumped-storage power plant.

In a pumped-storage power plant with a floating reservoir, the float is the supporting element, which is arranged at the bottom of the floating reservoir.

By immersing the float in the water in the base reservoir and applying an external hydrostatic pressure to the water, the float generates the buoyancy required to float the entire floating reservoir in the water in the base reservoir.

The float shall have a height that extends above the water level of the base reservoir so as to ensure safe floating of the floating reservoir even at the maximum permissible tilt of the floating reservoir.

In order to store the potential energy of the liquid, a liquid space, the liquid reservoir, is created in the area of the pumped-storage power plant. If the liquid is water, the names water space, water reservoir, hereinafter also referred to as reservoir, are used, distinguishing according to the height position upper reservoir or lower reservoir.

In order to store the potential energy of the gas, a gas space, the gas reservoir, is created in the area of the pumped-storage power plant. A reservoir filled with compressed gas is then called a pressurized gas reservoir or also a pressurized air reservoir if the compressed gas is air.

In order to store the potential energy of liquid and gas simultaneously, the reservoir can be filled with both liquid and gas, advantageously with compressed gas. The water reservoir is then simultaneously a pressurized air reservoir.

According to the main feature of the invention, the pumped-storage power plant comprises an intermediate piece which is positioned below the upper reservoir and is thus configured to raise the position and to carry the upper reservoir.

Vertical loads from the parts above are transferred to the parts below. The intermediate piece here is also the connecting part between the lower reservoir and the upper reservoir.

For a floating reservoir that contains an upper reservoir, the intermediate piece is built on the float and the upper reservoir is built on the intermediate piece.

For a floating reservoir containing both an upper reservoir and a lower reservoir, the lower reservoir, the intermediate piece and the upper reservoir may advantageously be arranged at different heights relative to the water level of the base reservoir:

- The lower reservoir, the intermediate piece and the upper reservoir are arranged above the float, i. e. above the water level in the base reservoir.
- The intermediate piece is built on a float and the upper reservoir is placed on the intermediate piece. A lower reservoir is inserted in the space at the bottom of the intermediate piece so that the weight of the lower reservoir is transferred to the intermediate piece and/or directly to the float and the internal overpressure of the lower reservoir can be partially or fully transferred to the intermediate piece.
- The lower reservoir, the intermediate piece and the upper reservoir may be arranged partially or fully below the water level of the base reservoir, thereby also fully assuming the function of the float and its corresponding horizontal and vertical load from the hydrostatic pressure of the water in the base reservoir up to the height of the submergence below the water level of the base reservoir.
- The lower reservoir, the intermediate piece and the upper reservoir may be partially or fully contained within the float but are not connected to the float by side walls, so that the float takes the load from the hydrostatic water pressure in the base reservoir.

By arranging the lower reservoir, and possibly the intermediate piece and the upper reservoir, below the water level of the base reservoir, the floating reservoir is relatively more stable against overturning, but due to the external hydrostatic pressure of the water acting on the submerged parts of the floating reservoir, the floating reservoir must have a large wall and bottom thickness, which makes the floating reservoir considerably more expensive, or the internal overpressure of the pumped water has to be replaced by the overpressure of the gas with which the floating reservoir has to be filled in order to compensate at least partially for the external hydrostatic overpressure of the water.

In addition, the floating reservoir layout with the lower reservoir, the intermediate piece and the upper reservoir arranged below the water level in the base reservoir allows only the height difference in water levels to be used for pumping, theoretically at most up to the value corresponding to the usable depth of the base reservoir, which significantly limits the capacity possibilities of the floating reservoir.

Arranging the lower reservoir in the floating reservoir area below the water level in the base reservoir also complicates access to the power unit, which must be arranged at the level of the bottom of the lower reservoir to avoid breaking the water column in the depressurized portion of the water pipeline and power unit.

In a pumped-storage power plant with stationary reservoirs, the intermediate piece is built on the base and the upper reservoir is built on the intermediate piece, while the lower reservoir is also placed on the base or above the base in the space of the intermediate piece.

Alternatively, a lower reservoir is arranged in the space at the bottom of the intermediate piece, so that the lower reservoir is connected to the intermediate piece, wherein the weight of the lower reservoir and/or the internal overpressure of the lower reservoir is partially or fully transferred to the intermediate piece. According to the proportion of the force transfer from the lower reservoir to the intermediate piece, the intermediate piece is upsized, i. e. in this proportion of the force the intermediate piece is part of the lower reservoir. The intermediate piece and the lower reservoir may thus form a statically indeterminate system.

In a pumped-storage power plant, if the base reservoir is the lower reservoir and the floating reservoir contains the upper reservoir, pumping shall take place between the base reservoir and the upper reservoir in the floating reservoir.

The floating reservoir submerges into the water in the base reservoir when the upper reservoir is filled with water from the base reservoir, as the total mass and thus the average density of the floating reservoir increases, and the floating reservoir emerges when the water from the upper reservoir is discharged into the base reservoir, as its total mass and average density decrease. Therefore, the height difference of the water level between the base reservoir and the upper reservoir in the floating reservoir, i. e., the hydrostatic height difference acting on the power unit, hardly changes during the pumping cycle throughout the operating stroke of the floating reservoir, so that the power losses of the controllers are minimized.

Advantageously, in this embodiment, the outer horizontal cross-section of the float is equal to the inner horizontal cross-section of the upper reservoir. This maintains a constant water level in the base reservoir and a constant water level in the floating reservoir during pumping, and thus a constant height difference between these levels. The change in the water level in the upper reservoir is then equal to the change in the float immersion depth.

If the floating reservoir contains both an upper reservoir and a lower reservoir, pumping shall take place between the lower and upper reservoirs inside the floating reservoir.

The height of the floating reservoir in the base reservoir does not change during pumping, the floating reservoir is immersed in the water in the base reservoir at the same depth, so as a whole it does not move vertically in the base reservoir because its total weight and average density do not change.

Similarly, pumping takes place between the lower and upper reservoirs in a pumped-storage power plant with stationary reservoirs.

During pumping, the height difference of the water level between the lower reservoir and the upper reservoir changes continuously - when filling the upper reservoir with water from the lower reservoir, the height difference of the water level increases, when discharging water from the upper reservoir into the lower reservoir, the height difference of the water level decreases. At high head differences, this change in head difference is only a few percent of the average head difference, so it should not place increased demands on the power control of the power unit.

In a pumped-storage power plant with a lower and upper reservoir in a floating reservoir, it is advantageous, e. g. during a long-term repair of the lower or upper reservoir in the floating reservoir, to pump water between the base reservoir and the lower or upper reservoir in the floating reservoir, provided of course that the power unit is adapted to the vertical movement of the floating reservoir on the water surface in the base reservoir.

Similarly, for a pumped-storage power plant with stationary reservoirs, emergency pumping of water between the lower or upper reservoir and another reservoir may be carried out if such a reservoir is available nearby.

However, it cannot be expected that waste heat will be stored in the pumped-storage power plant in such a situation.

Advantageously, a pumped-storage power plant with a floating reservoir and a pumped-storage power plant with stationary reservoirs can be connected by a common connecting pipeline, thus creating a unit that allows both power plants to be operated even if one of their lower or upper reservoirs is repaired.

Pumping fluids between reservoirs shall be as uniform as possible to minimize mechanical stresses in the pumped-storage structure.

In a pumped-storage power plant with stationary reservoirs, it is also important to ensure that the base is evenly loaded to prevent cracking, while in a pumped-storage power plant with a floating reservoir, care must be taken to prevent excessive tilting of the floating reservoir.

The uniformity of the water filling of the reservoirs can be ensured by regulating the water flow by means of valves in the water pipelines, by regulating the power of the power units, by operating the power units balanced to the centre of gravity of the pumped-storage power plant and/or by regulating the gas overpressure above the water level in the reservoirs.

The regulation of the water flow or air flow above the water surface is done by throttling their flow, with a higher throttling intensity for reservoirs closer to the power unit.

Increased water pressures and increased overpressure or underpressure of air in the reservoirs place increased demands on the sizing of reservoirs and pipelines.

Control valves may be installed in the branch pipelines of the vent pipelines to the reservoirs and/or in the vent pipelines between the reservoirs.

The temperature inside the pumped-storage power plant will be elevated due to the heating of the pumped-storage power plant by waste heat, which will not be a favourable environment for the reliable operation of the water and air locks.

The air flow control equipment will advantageously be arranged above the upper reservoirs, i. e. in an outdoor environment where temperatures are likely to be much lower and therefore more favourable for reliable operation.

It is also advantageous to adapt the operation of a pumped-storage power plant with a floating reservoir to the asymmetrical loading due to adverse weather conditions, in particular:

-   In sustained one-way increased wind speeds, it is advantageous to keep more water in the windward part of the floating reservoir than in the leeward part of the floating reservoir, thus balancing the floating reservoir,
-   it is advantageous to fill the parts of the floating reservoir that develop frost with less water than the others in order to balance their load.

Power units may exhibit reduced energy efficiency at high height differences between the lower reservoir and the upper reservoir.

The pumped-storage power plant in either embodiment advantageously comprises an additional reservoir arranged between the lower reservoir and the upper reservoir, thereby creating a cascade of reservoirs.

By using one additional reservoir, two stages of the pumped-storage cascade are created in the pumped-storage power plant. The order of the stages is advantageously calculated from the bottom. Thus, the first stage of the cascade of reservoirs is formed by the lower reservoir and the additional reservoir, the second stage of the cascade of reservoirs is formed by the additional reservoir and the upper reservoir.

The advantageous embodiment of the pumped-storage power plant comprises a separate power unit for each stage of the cascade of reservoirs.

The height difference in water levels between the reservoirs during the pumping and the turbine mode is half in each stage of the cascade, and the power units and connecting pipelines are sized for half the hydrostatic pressure. The length of the connecting pipeline between the reservoirs is reduced and the losses in the power unit are reduced, but the pumped-storage power plant requires twice the number of power units.

Another advantageous embodiment of the pumped-storage power plant advantageously comprises a common power unit for the turbine mode, in which water is discharged from the upper reservoir to the lower reservoir, the power unit for the turbine mode and the connecting pipeline must be sized for hydrostatic pressure for the entire height difference.

This additional embodiment of the pumped-storage power plant comprises a separate power unit for the pumping mode for each stage of the cascade of reservoirs.

The disadvantage of using additional reservoirs is that for the same float lift or the same base bearing capacity, the dead weight of the pumped-storage power plant increases, so the amount of pumped fluid must be reduced, or the height of the intermediate piece must be reduced, and the stored energy capacity is somewhat reduced.

By the nature of this advantageous embodiment, the pumped-storage power plant may comprise several additional reservoirs, thereby creating multiple stages of a cascade of reservoirs. Thus, each additional reservoir increases the number of reservoir cascade stages by one.

If the base reservoir is the lower reservoir and the floating reservoir contains the upper reservoir, the main load on all parts of the floating reservoir is cyclic during pumping.

If the pumped-storage power plant contains an upper reservoir and a lower reservoir, the main load on the float or base is constant during pumping, the main load on the other parts is cyclic.

In addition to the main load, other irregular loads must be added, especially the asymmetrical load on all parts of the pumped-storage power plant due to the wind, the load due to dynamic shocks of water in the pipelines, air pressure in the pipelines and reservoirs, temperature changes, and, in the case of a floating reservoir, the tilting and swaying of the water surface in the base reservoir.

The float, the upper reservoir and the lower reservoir are pressure vessels that are loaded by internal and/or external overpressure, so they are advantageously provided with a lower and upper domed bottom that best withstands this load.

The ground plan shape of the pumped-storage power plant may be regular or irregular, for a pumped-storage power plant with stationary reservoirs it will have to respect the area of suitable bearing capacity of the bedrock, for a pumped-storage power plant with a floating reservoir it will have to respect the shape of the base reservoir.

In the case of a pumped-storage power plant with stationary reservoirs, the height of the sub-surface parts of the base may advantageously follow the sloping relief of the bedrock on the land on which the pumped-storage power plant will be built, while avoiding slope slides.

In this pumped-storage power plant, only reservoirs with the same height, i. e. in contours, can be connected via a connecting pipeline and power unit to have the same pumping height.

The pumped-storage power plant can advantageously be formed in the shape of a vertical cylinder, a shape advantageous for stabilizing the output of the power unit.

It is advantageous that the lower reservoir can hold not only all the water from the upper reservoir but also all the water from the water pipeline.

The floating reservoir can be of simple construction, its float can conveniently follow the shape of the base reservoir with its walls and bottom in order to make the most of the volume of the base reservoir for pumping and e. g. to allow the floating reservoir to be placed on the bottom during repairs, it can also be made very bulky, yet well balanced and with a large immersion depth according to the size of the base reservoir, especially if the base reservoir is made of sea.

It is advantageous to leave sufficient free water space around the floating reservoir, especially between the bottom of the floating reservoir and the bottom of the base reservoir, a depth reserve should be maintained to avoid damage to the floating reservoir or the base reservoir during lateral deflection or rocking of the floating reservoir in strong winds and waves or during earthquakes, when pressure shocks from the base reservoir are better dispersed around the floating reservoir.

After subtracting the depth reserve from the total depth of the base reservoir, the usable depth for the floating reservoir remains available.

One part of the usable depth is used for float sinking when the floating reservoir is empty, while the corresponding volume of water must be displaced from the base reservoir if the total water depth in the base reservoir is to remain at its original value. The other part of the usable depth is used to increase the float immersion depth by an initial single pumping of water from the base reservoir to the lower reservoir in the floating reservoir or by cycling the water between the base reservoir and the upper reservoir in the floating reservoir.

Due to evaporation, it is necessary to refill the water in the base reservoir to maintain a usable depth for safe operation of the floating reservoir.

Greater water evaporation, clogging of the bottom in the base reservoir or greater loading of the floating reservoir by mineral deposits on the walls of pipelines, reservoirs or floats will reduce the usable depth of the base reservoir.

If necessary, the immersion depth of the floating reservoir may be reduced by draining the water from the floating reservoir or by reducing its operating stroke to avoid damage to the floating reservoir. This will reduce the capacity of the pumped-storage power plant but will keep it in operation until the usable depth in the base reservoir can be restored.

The bearing capacity of the bedrock in a pumped-storage power plant with stationary reservoirs, as well as the buoyancy (immersion depth) of the floats at a usable depth in a pumped-storage power plant with a floating reservoir, are used to support the dead weight of the pumped-storage power plant and the weight of the pumped water.

The amount of potential energy of the water pumped in the pumped-storage power plant depends on the height difference in water levels between the upper reservoir and the lower reservoir (i. e. the pumping height) and the amount of water pumped.

The weight of a pumped-storage power plant is proportional to its immersion depth or bedrock bearing capacity.

It is advantageous that the weight of the pumped-storage power plant is used as much as possible in favour of the height of the intermediate piece and thus its pumping height.

If the internal horizontal cross-section of the reservoir is constant throughout its height, the amount of water pumped is proportional to the change in the water level in the reservoir.

The capacity, weight and, consequently, the investment intensity of the pumped-storage power plant also depends on the ratio of the water level in the upper reservoir and the float immersion depth at a given usable depth, generally on the ratio of the weight of the pumped water in the reservoirs and the weight of the pumped-storage power plant.

The weight of the pumped-storage power plant is generally the sum of the weight of the pumped-storage power plant structure, including any base, and the weight of the additional reservoir.

In general, it is possible to choose the optimal option between the extremes:

- a lighter and therefore low pumping power plant and larger pumped water charge,
- a heavier and therefore high pumped-storage power plant and smaller pumped water charge.

In the existing designs of the floating reservoir with a lower reservoir, the weight of the reservoir structure is used to achieve the required immersion depth, which is the limit for the pumping height, by means of an additional reservoir.

Better results than the existing embodiment of the floating reservoir with a lower reservoir are given by the existing embodiment of the floating reservoir with an upper reservoir without any additional reservoir (and without an intermediate piece), but the low weight and thus the low immersion depth of this floating reservoir still noticeably limits its pumping height.

Compared to the existing floating reservoirs, with the same usable depth of the base reservoir, the floating reservoir with an intermediate piece according to the invention can achieve a significantly higher storage capacity by making full use of the optimally selected weight and embodiment of the floating reservoir to significantly increase its pumping height. Additional ballast is undesirable here.

If the limiting factor is the usable depth, the following generally applies for optimizing the parameters of a pumped-storage power plant with a floating reservoir:

The sum of the weight (immersion depth) of the pumped-storage power plant and the weight (height) of the pumped water is equal to the usable depth. The product of the weight (immersion depth) of the pumped-storage power plant and the weight (height) of the water to be pumped is maximum if they are equal.

If the limiting factor is the bearing capacity of the bedrock, then the following generally applies for optimizing the parameters of a pumped-storage power plant with stationary reservoirs:

The sum of the weight of the pumped-storage power plant and the weight of the pumped water is equal to the bearing capacity of the bedrock. The product of the weight of the pumped-storage power plant and the weight of the pumped water is maximum if these weights are equal.

The accumulated energy is proportional to the product of the mass (height) of the pumped water and the pumping height.

In the prior art of the pumped-storage power plant with a floating reservoir containing a lower reservoir. With the help of the additional reservoir, the equal immersion depth of the floating reservoir and the height of the pumped water can be achieved, so that their product will be maximum. The optimum pumping height may be at most equal to the immersion depth of the floating reservoir or the height of the water to be pumped. The product of the pumping height and the pumping height shall be equal to the square of the pumping height at the most.

In the prior art of the pumped-storage power plant with a floating reservoir containing the upper reservoir, the floating reservoir is light, but its immersion depth is much lower than the height of the pumped water, so the product of these quantities is far from the optimum value as in the embodiment with the lower reservoir. The optimum pumping height here can be at most equal to the height of the pumped water, theoretically up to the value of the usable depth. The product of the pumped water height and the pumping height is equal to at most the square of the pumped water height, and the value of this product can theoretically be up to four times higher than the lower reservoir design.

An embodiment of the pumped-storage power plant according to the invention with a floating reservoir comprising an intermediate piece and an upper reservoir makes it possible to achieve an optimum immersion depth of the floating reservoir by increasing its weight by the weight of the intermediate piece, which can however be of a very efficient and therefore high design. The optimum pumping height can be equal to the immersion depth of the floating reservoir, so it will be the same as for the embodiment with the lower reservoir, so that the product of the immersion depth of the floating reservoir and the pumping height will be maximum. However, the efficient embodiment of the intermediate piece allows the pumping height to be increased to many times the height of the pumped water. The product of the pumping height and the pumping height, and thus the stored energy, can therefore be incomparably greater than in the prior art.

A pumped-storage power plant according to the invention may have a centre of gravity high above the liquid level in the base reservoir or above the level of the base and, in particular, may reach an unstable state with an incorrect structural embodiment when unevenly filled or when subjected to accidental lateral loading by strong winds.

A tall pumped-storage power plant with a slender shape therefore requires solid supports to ensure stability.

The stability of the pumped-storage power plant can advantageously be ensured by ensuring that the pumped-storage power plant is of sufficient width; for a floating reservoir, it is advantageous to ensure that the floating reservoir is, on the catamaran principle, advantageously of a greater width than its height above the water level of the base reservoir.

For a given height of the centre of gravity of the pumped-storage power plant, its width will be derived from the forces that may cause it to tilt, and for a floating reservoir also from the choice of the permissible tilt.

The height of the centre of gravity of the pumped-storage power plant depends mainly on the ratio of the weight of the water charge in the upper reservoir to the weight of the pumped-storage power plant.

By conveniently dividing the pumped-storage reservoir with built-in partitions or by creating a connected array of smaller reservoirs in the pumped-storage power plant, the overflow of large volumes of water in the reservoir is slowed down or prevented, further improving the stability of the pumped-storage power plant.

The internal partitions and/or cavities are also advantageously used as stiffeners of the pumped-storage power plant to ensure its strength and dimensional stability and to reduce the wall thickness of the structural elements.

From a comparison of the achievable capacities of stored energy, it is clear that the pumped-storage power plant with floating reservoir of the more efficient embodiment according to the invention significantly outperforms the capabilities of existing pumped-storage power plants with floating reservoirs.

For example, an existing pumped-storage power plant with a lower or upper floating reservoir created in a basic reservoir with a usable depth of 40 m can achieve a working head of N = 20 m and a pumping height of V = 20 m in an optimal embodiment, thus having a theoretical capacity of approximately E = 1.07 GWh/km$^2$ at most.

In contrast, a pumped-storage power plant with an upper floating reservoir according to the invention constructed in the same basic reservoir at the same usable depth of 40 m can achieve a working head of N = 30 m at an optimum pumping height of V = 500 m, and will therefore have a theoretical capacity considerably higher, i. e. approximately E = 40.80 GWh/km$^2$.

The same results can also be achieved by a pumped-storage power plant with stationary reservoirs at a bedrock bearing capacity of 0.4 MPa.

For model calculations to compare the energy efficiency of different designs of pumped-storage power plant, it is sufficient to consider only the critical physical variables and only their equivalents instead of exact energy values.

For example, the equivalent $E_e$ of the change in potential energy of a floating reservoir, expressed in terms of the pumping height V and the working stroke N, can be simplified by multiplying the two quantities:

$$E_e = \overline{V}.\overline{N}$$

The pumped-storage power plant is advantageously in any embodiment designed as a module, comprising in particular an intermediate piece and an upper reservoir.

In the case of a power plant with a floating reservoir, the module will also contain a float, possibly also a lower reservoir and/or an additional reservoir.

For a plant with stationary reservoirs, the module will contain a lower reservoir and/or an additional reservoir in addition to the intermediate piece and the upper reservoir. This module is carried on a base formed in the bedrock.

Therefore, when calculating the stability of the module on the bedrock, the relevant part of the base must also be considered.

Advantageously, the module is arranged such that the lower reservoir, the upper reservoir and the intermediate piece occupy the same footprint in the module space.

The module has a vertical cylinder shape, which is advantageous for stabilizing the power output of the power unit.

The vertical cylinder of the module has a regular horizontal cross-sectional shape.

Since parts of the module, in particular the intermediate piece, the float or the lower reservoir, are also strut-loaded, the module is made with a circular shape of horizontal cross-section, and is made of sheet metal, for this type of loading. This shape of the horizontal cross-section of the module allows the best use of the construction material.

The pumped-storage power plant is advantageously made up of an array of modules.

The modules are connected to each other by their walls or by means of stiffeners, i. e. constructionally.

Advantageously, the array of modules comprises groups of modules.

In a pumped-storage power plant with stationary reservoirs, it is advantageous that:

- each module is built on a separate base,
- each group of modules is built on a separate base,
- the whole array of modules is built on a common base.

The spacing of the modules is advantageously larger than their diameter.

The modules are advantageously connected to each other by vertical and horizontal stiffeners.

Advantageously, parts of the module are also reinforced with internal horizontal and/or vertical stiffeners.

Advantageously, the pumped-storage power plant is reinforced at least at the level of the top and bottom edges of the reservoirs, and in the case of a floating reservoir also at the level of the top and bottom edges of the floats, with horizontal bands that can significantly strengthen the bending stiffness of the module array and limit the horizontal load on the collecting connecting pipeline.

The floats, reservoirs and intermediate pieces in the modules are pressure vessels. As far as the main load is concerned, the floats and reservoirs are mainly subject to load by internal and/or external overpressure and axial force, the intermediate pieces are mainly subject to load by axial force.

The modular embodiment of the pumped-storage power plant simplifies its manufacture and assembly.

Modules with vertical external bracing can advantageously be made with a diameter of up to 3.6 m, so that their parts can be easily transported from the manufacturer to the installation site by rail.

The horizontal distance between the modules should advantageously be 0.4 m, generally in order to make the best use of the area of the module array for the purposes of the pumped-storage power plant, but at the same time to allow for bilateral inspection and maintenance of the module walls and stiffeners.

When repairing the reservoir of one of the modules, it is sufficient to empty only the reservoir, e. g. by pumping water to the second reservoir in the same module or to the reservoirs in the other modules. During the repair, only the reservoir being repaired will be out of service, while all other modules can continue to operate. The increase in shear stress between the modules must be considered.

The layout of the modules in triangular formations is advantageous, providing an optimal solution for the strength and stiffness of the module array, as well as for accessibility for inspection and maintenance of the modules.

The array of modules connected to each other is quite stiff and the individual modules are not slidable in height.

With a large width of the module array, its elasticity is nevertheless manifested and in order to make the best use of the load-bearing capacity of the bedrock and bases and to avoid additional shear and bending stresses in the array structure, it is necessary that the pressure of the modules on their load-bearing elements, i. e. bases or floats, is evenly, continuously distributed, i. e. that in each module it corresponds to the load-bearing capacity of the respective load-bearing element.

The float load capacity of a floating reservoir is determined by hydrostatic buoyancy and will be constant throughout its service life.

However, the bearing capacity of the bases of a pumped-storage power plant with stationary reservoirs may change over time. For example, due to the long-term loading of the module array, compression and compaction of the bedrock may occur.

If the bedrock beneath the array is not homogeneous, especially in a bedrock area, then the subsidence of the bedrock and bases will not be uniform. The structure of the array will not be uniformly supported and will develop additional shear and bending stresses.

The bedrock of the module array must then be repaired, rectified, by changing the height of the gap between the module structure and the base, advantageously by inserting or removing pads.

It is therefore advantageous to measure and evaluate the subsidence of the bases and the entire module array on a regular base.

Rectification spaces are advantageously formed in the modules to rectify their position on the base, advantageously such that the lower part of the module below the lower reservoir is provided with horizontal bracing and mounting holes in the walls of the module.

Pneumatic lifting bags can be inserted through the mounting holes into the rectification space between the horizontal stiffener and the base and the module can be lifted by filling the bags with air. A pad of a thickness determined by the measurement results can be inserted into the resulting gap between the module and the base and the module can be lowered back onto the pad by releasing the air from the bags.

To reduce the required lifting force, it is advantageous to lighten the rectified module or even adjacent modules for the rectification period, advantageously by pumping water into the reservoirs in the other modules. After completion of the rectification, the module can be reloaded by pumping water into its reservoirs.

If a pumped-storage power plant with stationary reservoirs is made up of many modules, the probability of an accidental spillage of all the liquid is negligible.

A pumped-storage power plant can therefore be built close to a populated area without endangering the safety of people and property in the area.

Advantageously, the pumped-storage power plant is built in the area of a mined-out open-pit mine, which is drainless. However, the water that flows into this area must be pumped out to avoid flooding the pumped-storage power plant. Slope slides may also be a risk.

The modular pumped-storage power plant is advantageously reinforced with vertical stiffeners only. The module array is then compliant in the horizontal plane.

In the case of a modular pumped-storage power plant, the entire module array deforms like an accordion when the water level fluctuates or the bedrock drops unevenly - the module walls alternately deform so that the horizontal circular cross-section of the modules becomes elliptical, flattening or stretching.

The collecting pipelines under the lower and upper reservoirs shall be equipped with compensators to prevent stresses from horizontal deformation of the reservoirs from being transmitted to them.

The stiffness of the module array in the horizontal plane will be determined practically only by the stiffness of the bottoms in the reservoirs or floats.

The array of modules with stationary reservoirs will be particularly stiff in the area of anchoring the intermediate pieces to the bases.

Due to the large diameter of the modules, the deformation of the module walls will be kept within the elastic limits of the material and no accidental damage will occur.

Advantageously, the perimeter modules in the floating reservoir are reinforced with horizontal bracing at a level above the water level in the base reservoir. These stiffeners will serve to transfer horizontal forces between the perimeter modules and the floating reservoir mooring on the shore of the base reservoir when the floating reservoir is loaded by side winds.

As the floating reservoir is rocked on the water surface in the base reservoir, the floating reservoir will cyclically deflect, deforming in the horizontal plane both at the level of the floats and at the level of the upper reservoirs; in the first half of the cycle, it will compress in the upper plane and expand in the lower plane, in the second half of the cycle, it will deflate in the opposite sense.

Advantageously, all modules in the array are reinforced with connected horizontal stiffeners at a level above the water level in the base reservoir. The stiffeners will serve to transfer horizontal forces between the perimeter modules and the tensile mooring of the floating reservoir on the shore of the base reservoir during side wind loading of the floating reservoir and will also prevent horizontal deformation of the modules at the level of the horizontal stiffeners.

As the floating reservoir rocks on the water level in the base reservoir, the floating reservoir will buckle, with slight horizontal deformation at the level of the floats and the vast majority of the deformation occurring at the level of the upper reservoirs. It will not deform horizontally at the level of the horizontal stiffener. Advantageously, the manifold and working platform will also not deform horizontally at this level.

A modular pumped-storage power plant with stationary reservoirs will behave similarly. When subsidence occurs in a certain area of the bedrock within the area covered by the module array, the module array will deflect without horizontal deformation at the level of the bases, and the vast majority of the deformation will occur at the level of the upper reservoirs - in the area of subsidence of the bedrock and hence of the bases, the modules will compress horizontally at the level of the upper reservoirs. If subsidence occurs at the edge of the module array, the modules will expand there in the plane of the upper reservoirs.

Similarly, under side wind loading, the deformation of the module array is most pronounced at the level of the upper reservoirs.

The float is the lower part of the module, which is almost entirely submerged in the base reservoir and its buoyancy determines the weight and therefore the gravity of all parts of the module. The float is a pressure vessel, advantageously a closed pressure vessel, it is loaded primarily by the external water pressure and the weight of the carried parts of the module. The lateral external water pressure acting on the walls of the float increases linearly with the depth of immersion of the float. Floats may have internal rings to provide stiffener against external overpressure and to ensure dimensional stability.

The floats are advantageously filled with a gas, advantageously an inert gas, advantageously nitrogen, advantageously a dried gas which reduces corrosion of the float material.

In order to lighten the embodiment, the float is advantageously filled with gas so that its internal overpressure is as close as possible to the external overpressure of the water when immersed in the base reservoir. Therefore, the float does not need to be as thoroughly reinforced against collapse as when loaded unilaterally with external overpressure and can be considerably lighter. Advantageously, the internal overpressure of the float is equal to the largest external overpressure of the water corresponding to full immersion of the float. Advantageously, the internal overpressure of the float is higher than the external overpressure of the water corresponding to their greatest specific immersion depth in the base reservoir, which increases the resistance of the float to accidental external overpressure by impact with the bottom or to sabotage.

The horizontal stiffeners between the floats are advantageously provided with openings to allow vertical flow of water around the floats, and also the vertical stiffeners between the floats at the top of the floats are advantageously provided with openings to allow horizontal flow of air between the floats above the water surface during vertical movement of the floats in the water during pumping or when the floating reservoir is swinging on the surface of the base reservoir. The airspace between the floats above the water level in the base reservoir is freely connected to the airspace of the base reservoir through vent holes. When the reservoir is swinging and when the floating reservoir moves vertically with the upper reservoir during pumping, the water in the base reservoir flows vertically around the floats. This limits the height fluctuation of the water level in the base reservoir.

In the case of the lower reservoir and the upper reservoir in the floating reservoir, it is advantageous to close the vent holes during further operation to prevent evaporation of water in this space and to limit the formation of mineral deposits on the outer walls of the floats. The closed space between the floats helps to balance the rocking of the floating reservoir, and when the floating reservoir is rocking, the water in the base reservoir flows horizontally around the floats. As a result of the rocking of the floating reservoir, there may be a greater fluctuation in the water level in the base reservoir. It is advantageous to control and possibly regulate the gas pressure in this confined space so that it does not cause permanent tilting of the floating reservoir. The space between the floats above the water level is advantageously filled with inert gas in this embodiment to limit corrosion of the affected portion of the floats.

The base is made of concrete, advantageously reinforced concrete, advantageously prestressed concrete.

When the module array is heated by waste heat, the bases and the steel structure of the modules can be expected to have different temperatures and, therefore, to exhibit different expansion.

The bases under individual modules or groups of modules are therefore advantageously separated from each other by expansion joints.

Reservoirs and floats, as well as pipelines and power units, are exposed to water, so it is advisable to make them of corrosion-resistant material, even if it is more expensive. It is advantageous to protect their surface against mineral deposits.

The intermediate pieces around the perimeter of the pumped-storage power plant, or at least the perimeter parts of the intermediate bushings, are advantageously made of corrosion-resistant material. The intermediate pieces in the interior of the pumped-storage power plant may then be made of a cheaper material.

During operation, the modules are loaded variably by the weight of the water and are compressed to different heights when the pumped water is in the upper or lower reservoir. The connecting pipeline is constantly loaded with the same amount of water and is not compressed over its entire height; therefore its height does not correspond to the height of the modules. An expansion device must therefore be provided in the connecting pipeline to adjust its height continuously to the height of the modules. The expansion device is advantageously a bellows expansion joint, more advantageously an arc expansion joint arranged in the connecting pipeline.

The upper reservoir bottoms and the lower reservoirs are advantageously provided with a vent pipeline, so that the internal air space above the water level is advantageously freely connected to the surrounding air, thereby preventing an increase in internal air overpressure when filling the reservoirs or air underpressure when draining the reservoirs, and the internal overpressure in the water reservoirs will only be induced by the hydrostatic pressure of the water charge.

Advantageously, the vent pipelines of the upper and lower reservoirs are connected, so that evaporation of the water charge in the pumped-storage power plant is prevented and the formation of mineral deposits on the inner walls of the reservoirs, pipelines and power units is reduced. The water charge in the reservoirs then does not change its weight, does not need to be replenished and can be easily stabilised and controlled for purity and chemical composition. The vent pipelines of all modules are conveniently connected, which facilitates the balancing of water levels during uneven filling and emptying of the reservoirs.

By using inert gas to fill the space above the water level in the reservoirs, the unwanted proliferation of flora and fauna in the pumped-storage power plant can be advantageously prevented, thereby increasing the density of the water and wearing out the hydraulic equipment and pipeline.

For these reasons, the need to clean the walls of reservoirs and pipelines from organic and inorganic deposits is reduced.

The space between the reservoirs, as well as the entire space inside and outside the intermediate piece, may also be filled with nitrogen or other suitable inert gas, advantageously dried gas, to increase corrosion protection.

It is advantageous to check the composition and pressure of the protective gas filling in the modules, their parts and in the space between them, advantageously continuously by means of measuring instruments, which makes it possible to detect leaks in the construction in time and to ensure the removal of the defect operatively.

In a pumped-storage power plant, it is advantageous to install permanent inert gas pipelines for the possibility of operative refilling or replacement of the gas charge to ensure maximum reliability, safety and durability of the module design.

The pressure vessels, the connecting pipeline and, where appropriate, the vent pipeline, are advantageously fitted with safety valves to prevent the safe overpressure or underpressure of the inert gas from being exceeded, so that parts of the pumped-storage power plant cannot be damaged.

The outer surface and/or the inner surface of the parts of the pumped-storage power plant are advantageously coated against corrosion.

The outer surface of the pumped-storage power plant is advantageously coated with a jacket with increased ballistic resistance.

Advantageously, the intermediate pieces comprise a truss structure, which is advantageously made of corrosion-resistant material and advantageously coated with a protective coating. The truss structure imposes less resistance to wind flow, so that the floating reservoir is not as prone to swaying on the surface of the base reservoir.

Advantageously, the truss structure is provided with a perimeter jacket that allows the interior space to be filled with inert gas to limit corrosion of the truss structure. The perimeter shell is advantageously made of a corrosion resistant material and is advantageously provided with a protective coating. However, the continuous perimeter walls of the pumped-storage power plant increase the resistance to wind flow.

At greater depths of the base reservoir, it is advantageous to divide the float into several spaces separated by a pressure partition, advantageously in the form of an arched bottom.

Each section of the float, otherwise known as a segment, is filled with gas advantageously to an internal overpressure which is as much as possible balanced by an external overpressure of water corresponding to the greatest depth of immersion of the segment in the base reservoir.

Thus, as the depth of placement increases, the segments are filled with gas to a higher internal overpressure, which is balanced by the external overpressure of the water, and the wall thickness of the segments may be considerably less than if there were a uniform internal overpressure throughout the float corresponding to the maximum float immersion depth in the base reservoir. This further significantly reduces the weight of the float.

It is advantageous to create pressure relief chambers in the upper bottoms of the segments to allow maintenance personnel to enter segments with different gas pressures. The chambers shall be fitted with reliable shut-off valves to prevent the release of gas at different pressures between segments.

The depth of basic reservoirs, especially those of natural origin, is not uniform. As the bottom of the base reservoir usually slopes gradually to the greatest depth at one or more points in its surface area, the depth levels of the greater depths occupy a smaller area than those of the lesser depths.

Similarly, the bearing capacity of the bedrock is unlikely to be uniform across the entire area of the pumped-storage power plant.

In order to achieve the highest possible capacity, it is advantageous to make the best use of not only the area of the pumped-storage power plant, but also the depth of the base reservoir or the bearing capacity of the bedrock for the purpose of the pumped-storage power plant.

The pumped-storage power plant can advantageously be assembled from modules with a uniform height according to the chosen depth level in the base reservoir or according to the lowest bearing capacity of the bedrock in the pumped-storage power plant area.

The deeper the level chosen for deeper float immersion, the less surface area the floating reservoir will occupy in the base reservoir.

However, as the area of the floating reservoir decreases according to the selected depth level and the depth increases, the stability of the floating reservoir decreases, which therefore must have a lower pumping height and thus the specific price, the investment intensity of the floating reservoir in price unit per kWh, may increase adversely.

All power units in this pumped-storage power plant have the same pumping height and, if they are of the same capacity, they can be interchangeable, e. g. in the case of total power control or in the event of a fault.

The pumped-storage power plant can advantageously be assembled from modules with different heights according to the depth profile of the base reservoir, or according to the different bearing capacity of the bedrock in the pumped-storage power plant area.

In order to increase the capacity of the pumped-storage power plant, not only the surface area of the base reservoir or land, but also the depth of the base reservoir or the different bearing capacity of the bedrock is better used.

This structure allows the centre of gravity of the pumped-storage power plant to always be identical to the axis of buoyancy of the floating reservoir or the centre of gravity of the bedrock.

This fact, together with the large width of the pumped-storage power plant, makes it possible to ensure its stability even with large module heights.

From the point of view of providing stability against overturning, the module assembly of a pumped-storage power plant with stationary reservoirs may not be as wide as that of a pumped-storage power plant with a floating reservoir because the bedrock is much less pliable than water.

Therefore, the width of the pumped-storage power plant with stationary reservoirs will be chosen primarily according to the required capacity rather than to ensure its stability.

A pumped-storage power plant with modules of varying heights according to depth levels or the bearing capacity of the bedrock may advantageously comprise:

- upper or even lower reservoirs of uniform height for all depth levels or bedrock bearing capacities, the intermediate pieces being of different heights, or
- upper or even lower reservoirs of different heights depending on the depth level or bearing capacity of the bedrock, with intermediate pieces of uniform and/or different heights.

For each group of modules with the same height, a corresponding group of power units with the same pumping height is advantageously available.

Advantageously, in a floating reservoir, the height of the upper reservoirs or even the lower reservoirs of the modules is the same for all depth levels, but their horizontal cross-section is different, with the ratio of the horizontal cross-section of the upper reservoirs, or even of the lower reservoirs for modules of a certain depth level, to the horizontal cross-section of the upper reservoirs, or even of the lower reservoirs for modules of the greatest depth level, is equal to the ratio of the float immersion depth of modules of a certain depth level to the float immersion depth of modules of the greatest depth level.

Similarly, in a pumped-storage power plant with stationary reservoirs, the height of the upper reservoirs or even the lower reservoirs of the modules is advantageously the same for all bedrock bearing capacities, but their horizontal cross-section is different, wherein the ratio of the horizontal cross-section of the upper reservoirs or even the lower reservoirs for modules with a certain bedrock bearing capacity to the horizontal cross-section of the upper reservoirs or even the lower reservoirs for modules with the highest bedrock bearing capacity is equal to the ratio of a certain bedrock bearing capacity to the highest bedrock bearing capacity.

A pumped-storage power plant of this embodiment with modules of different heights depending on the depth levels or the bearing capacity of the bedrock can advantageously contain upper or lower reservoirs of the same height, while the intermediate piece heights are the same and the pumping height is the same for all modules. The modules differ only in the depth of immersion of the floats or the bearing capacity of the bases and the diameter of the reservoirs. Therefore, all the upper or even lower reservoirs in the entire pumped-storage power plant can be connected by a common collecting pipeline.

Pumping can be carried out by any power unit regardless of the reservoir diameter, a uniform type of power unit can be used and the requirements for coordination and control of their operation are reduced.

Advantageously, the diameter of the intermediate pieces can also be the same as the diameter of the reduced diameter reservoirs, thereby constructionally simplifying the load transfer between them.

The disadvantage is that for modules with lower depth levels or bedrock bearing capacity, increasing the height of the reservoirs will reduce the average pumping height.

Since the diameter of the floats and the spacing between the modules are maintained, the stiffeners between the reservoirs or between the smaller diameter intermediate pieces must be of greater width and thickness to bridge the distance between the modules and to ensure the stiffness of the interconnection between the modules.

A modular pumped-storage power plant with a floating reservoir may advantageously comprise a continuous bottom of a space of floats.

Advantageously, the continuous bottom of the floating reservoir is formed by closing the spaces between the floats of the individual modules at the level of their lower bottoms with arched bottoms, advantageously using the same material as the floats to close the spaces.

This modification uses the water space of the base reservoir between the floats of the floating reservoir to increase the gas volume of the floats of the floating reservoir, thereby increasing the buoyancy of the floating part of the floating reservoir.

The side walls of the floats will be protected against the effects of the water in the base reservoir, where salt water has particularly strong corrosive effects.

Advantageously, the space between the floats, or even between their segments, can also be closed at the level of their upper bottoms.

Then this one-piece or multi-part space, i. e. segments, between the floats can be filled with the same internal gas pressure, advantageously inert, as the space inside the floats, or segments, thus balancing the external and internal pressures on the side walls of the floats, or segments, and also on the float bottoms.

The float bottoms and vertical float walls in the perimeter modules can advantageously be made of corrosion-resistant material, and the float walls of the modules in the inner space of the floating reservoir can be made of cheaper material, which reduces the price of the floating reservoir.

In an array of modules with floating reservoirs or with stationary reservoirs, it is advantageous to create a continuous bottom at the reservoirs by closing the space between the reservoirs at the level of the lower bottoms and then using this space for filling with water.

Advantageously, a continuous bottom can also be created in the reservoirs by closing the space between the reservoirs at the level of the upper bottoms. Here too, the space above the water level can be filled with a protective atmosphere in a similar way to that inside the reservoirs.

Advantageously, these spaces between floats and reservoirs can be equipped with a vent pipeline and further secured as floats and reservoirs themselves.

The use of the space between the floats and between the reservoirs for pumping purposes will significantly increase the efficiency of the use of the bearing capacity of the bedrock or base reservoir space on the surface of the pumped-storage power plant and thus its capacity for storing potential energy, without compromising its stability.

When using a module construction connected to each other by vertical bracing, the reservoirs must also be reinforced with internal vertical bracing and the vertical bracing between the perimeter reservoirs must be reinforced to withstand the unilateral load from the internal hydrostatic water overpressure.

In addition, individual modules or the gaps between them cannot be operated differently from other modules, e. g. in the event of a module failure, as unacceptable mechanical stresses would be generated in the module walls and vertical stiffeners with different hydrostatic water pressure loads.

The spacing of the modules is advantageously equal to their diameter.

The modules are advantageously connected directly to each other by their walls. The connection is advantageously made by means of fasteners, advantageously by means of screws or rivets. The connection is advantageously made by means of spot or line welds.

Compared to the connection of modules with vertical stiffeners, the advantage here is a better use of the space of the pumped-storage power plant for pumping purposes, better use of the bearing capacity of the bedrock or the space of the base reservoir on the surface of the pumped-storage power plant in favour of its capacity, without deterioration of its stability.

This type of embodiment will allow for a reduction in the specific material cost compared to the embodiment of modules with vertical bracing and can further simplify the production of parts and assembly.

However, access to the connections is only possible from inside the modules. The inner surface of the module walls can be inspected in its entirety, but the outer surface of the module walls can only be inspected partially because the module walls are close together in the joint area and the space between the modules is quite difficult to access.

The use of the space between the modules for water filling and pumping is only possible at the cost of reinforcing the inner space with vertical stiffeners as in the case of modules connected by external vertical stiffeners.

The spacing of the modules is advantageously smaller than their diameter.

The pumped-storage power plant module array is advantageously assembled from vertical modules that are interconnected, planarly interlocking to form an interconnection, advantageously in a triangle, without the need for external or internal vertical bracing or any other type of stiffener of the vertical connections between the modules.

All the space of the pumped-storage power plant is used for pumping purposes here, the bearing capacity of the bedrock or base reservoir area on the pumped-storage power plant site is fully utilised to the benefit of the plant's capacity, without compromising its stability.

This type of embodiment will allow a reduction in the specific material costs compared to the embodiment of modules with vertical bracing and can further simplify the production of parts and the assembly of the floating reservoir.

Depending on the ratio of the diameter and spacing of the modules, the interconnection of the modules has different shapes and different advantages and disadvantages.

If the module walls intersect at one point, the welds of the module walls are concentrated at this one point, which is disadvantageous for ensuring weld quality.

In order to reduce the heat load on the welded area and improve the quality of the welds, it is advantageous to choose the module spacing so that only two module walls intersect at one point. This can be achieved by increasing or decreasing the module spacing. When the module spacing is increased, the overlap of the walls is reduced and the space between them is less accessible for inspection of the internal walls of the modules, the stiffness of the module array is less, but the use of module material per module array area is more advantageous. When the module spacing is reduced, the overlap of the walls is increased and the space between them is more accessible for inspection of the internal walls of the modules, the stiffness of the module array is greater, but the use of module material per module array area is less advantageous.

It is possible to operate individual modules or shut them down in the event of a failure independently of the other modules, without dangerous loads in the walls of the other modules due to different lateral hydrostatic water pressure.

Advantageously, each space created by connecting the modules is connected to the connecting pipeline and thus to the power unit by a lockable tap. In addition to the connection of the internal space of the reservoir, it is necessary to make three further connections of the spaces formed by the interconnection of the modules. The total number of taps will thus increase considerably.

The spaces between the reservoirs created by the interconnection of the modules are advantageously connected to the spaces within the modules, advantageously by internal flow holes, more advantageously by external pipeline. These connected spaces can then be connected to the connecting pipeline and hence to the power unit by a common branch line.

The spaces between the reservoirs created by connecting the modules can be connected to the spaces inside the modules in various ways.

However, due to the circular shape of the reservoirs, it is necessary to follow such a procedure when individually draining or filling the reservoirs, e. g. due to their failure, that all reservoirs are loaded only by internal overpressure and that the arched walls of the reservoirs are not loaded by external overpressure.

The fluid conduction path may advantageously be formed by a pipeline.

The pipeline for guiding water is a water pipeline.

The gas path or gas path may also be called an air path, air pipeline if the gas is compressed air, or a vent path, vent pipeline if it connects the air space of a reservoir freely to the atmosphere or freely between reservoirs.

A path for conducting the fluid may advantageously be formed through the walls of the reservoir.

The path for conducting the liquid is advantageously formed in such a way that the floating reservoir has no bottom and is submerged by its walls below the liquid level in the base reservoir, the path for conducting the air is advantageously formed in such a way that the floating reservoir has no ceiling and is open by its walls to the air or to the gas space above the level of the base reservoir.

According to the invention, the pumped-storage power plant accumulates potential energy mainly in the reservoirs and in the connected energy transmission paths. In particular, for this purpose, each energy transfer path according to the invention is closable, i. e. comprises at least one cap that allows the accumulation of potential energy by blocking the flow of fluid between the reservoirs.

The liquid or gas pathway advantageously comprises a shut-off and/or control valve as a cap, advantageously a valve, advantageously a non-return valve or a check valve in the case of a single-acting energy transfer.

Advantageously, different pathways and corresponding caps can be combined to accumulate potential energy.

The same or a different cap, or a different pathway than the energy storage pathway, may be used to release the stored energy.

The shut-off valve is also used to regulate or operatively stop the flow of the pumped fluid during normal operation or in case of a malfunction of the power unit, as well as due to an unusual situation in the power network or to prevent unwanted flow of the pumped fluid (in particular, leakage of fluid from the upper reservoir to the lower reservoir).

Depending on the operational safety requirements, these shut-off valves can be duplicated, either in parallel or in series.

The lower bottoms of the floats or segments are advantageously equipped with holes with caps (pressure locks) for the possibility of watering the inner space of the floats to compensate for the position of the floating reservoir, e. g. during module assembly, repairs or when dealing with a floating reservoir failure.

In a pumped-storage power plant, reservoir spaces with different energy potentials are connected by energy transfer paths.

A fluid conduction pathway becomes an energy transfer pathway when it is connected to a power unit and is closable. The liquid energy transfer path is associated with the liquid power unit, the gas energy transfer path is associated with the gas power unit.

In a pumped-storage power plant, the path for energy transfer is advantageously a connecting pipeline.

Since in the pumped-storage power plant according to the invention the lower and upper reservoirs are arranged above each other, the connecting pipeline connecting them advantageously has a rectangular arrangement and thus has a vertical and a horizontal part.

Advantageously, the lower reservoir and the upper reservoir are connected to each other by a connecting pipeline with the power unit within each module.

In this case, only one cap in the connecting pipeline for both the lower and upper reservoir is sufficient.

Advantageously, a pipeline branch is connected to the bottom of each reservoir to the horizontal part of the connecting pipeline, i. e. to the collection pipeline which forms the pipeline network under the reservoirs.

Reservoirs in a group of adjacent modules are advantageously connected in this way. The group of adjacent modules has one common vertical connecting pipeline and a power unit. Here, the pipeline branch of each reservoir must already be equipped with a shut-off valve in order to reliably control the flow and water level in each reservoir.

Advantageously, all the reservoirs of the modules with the same depth level are connected by a collecting pipeline, wherein the given horizontal collecting pipeline network is connected to a corresponding vertical connecting pipeline advantageously arranged around the perimeter of the pumped-storage power plant.

Here too, the pipeline valve at each reservoir must be fitted with a stopcock to allow reliable control of the flow and water level in each reservoir.

A vertical connecting pipeline can advantageously be arranged at each circumferential module.

Advantageously, the horizontal and/or vertical connecting pipeline is formed of several parallel strokes to reduce the diameter, wall thickness and weight of the pipeline, which, while increasing hydraulic losses, facilitates its manufacture, transport, installation and maintenance.

Each vertical connecting pipeline arranged around the perimeter of the floating reservoir is advantageously connected to a separate power unit.

A power unit may be common to a group of connecting pipelines, thereby increasing the size and power of the power units but reducing their number. Efficiency can be better addressed with a larger power train.

The vertical connecting pipeline may have a wall thickness graded along its height according to the static and dynamic water pressure.

If a pumped-storage power plant with a floating reservoir contains only upper reservoirs, the lower reservoir being the base reservoir, the lower horizontal collecting pipeline network need not be installed at all. The water is then pumped between the base reservoir and the upper reservoirs in the floating reservoir by a vertical connecting pipeline only around the perimeter of the floating reservoir, so that in the base reservoir the water flows under the floating reservoir alternately between the centre and the perimeter of the base reservoir.

Advantageously, a lower horizontal collecting pipeline network can still be installed under the floats to ensure even distribution of water in the base reservoir without alternating flow between the centre and perimeter of the base reservoir, albeit at the cost of increased material costs and hydraulic losses in the collecting pipeline.

In a pumped-storage power plant, the lower parts of the walls between the internal reservoir spaces advantageously contain flow holes that can serve as a supplement or alternative to the connecting pipeline.

In a pumped-storage power plant, the reservoir walls between the modules advantageously contain flow holes, which is particularly advantageous for reservoirs that are of the same height.

Thus, the internal space of each reservoir form connected vessels when filled with water, and a vertical connecting pipeline connected to the side of the reservoirs is sufficient for pumping; no collection pipeline needs to be installed.

The flow holes are only accessible after the other reservoirs have been emptied.

Advantageously, the openings are provided with caps, advantageously control caps, advantageously the caps are remotely operable. The shut-off valves have the control elements protruding into the space after the reservoirs so that they are accessible at any time.

This is advantageous in the event of a failure of a reservoir, which can thus be shut down without having to empty the other reservoirs.

As a result of the resistance of the pumped fluid to flow between the internal spaces, these spaces will not be filled to the same height at the same time and increased mechanical stresses will arise in the walls between these spaces as a result of uneven loading, especially hydrostatic pressure.

The resistance in the flow holes and thus the unevenness of the filling of the reservoirs increases with increasing water flow rate.

Uneven filling or draining of reservoirs can be reduced or eliminated by throttling the air flow in the vent pipeline above the water level in the reservoirs, thereby increasing the overall overpressure in the reservoirs. For reservoirs that are closer to the power unit, the need for throttling is greater. For module array designs with flow-through openings, the unevenness is likely to be higher and therefore the need for throttling will be higher.

For this purpose, it will probably be advantageous to equip the pumped-storage power plant with equipment, advantageously control valves, to regulate the air pressure above the water level in the individual reservoirs.

However, the reservoirs have to be sized considerably more for the increased hydrostatic water pressure and air overpressure, which increases the cost of the reservoirs.

When repairing a damaged part of the reservoir, the entire reservoir has to be emptied, e. g. by pumping water from the lower reservoir to the upper reservoir, and the entire pumped-storage power plant is out of operation for the duration of the repair.

In a pumped-storage power plant with flow openings between reservoirs, a damaged reservoir in a particular module can be repaired by first emptying the reservoirs in all modules, e. g. by pumping water from the lower reservoirs to the upper reservoirs, then the service staff enter the damaged reservoir or adjacent reservoirs, close the flow openings with cap lids, and then repair the damaged reservoir. The reservoirs in the other modules can be used for pumping water during the repair. After the repair, the sealing caps can only be removed after the other reservoirs have been emptied. Only then can the repaired reservoir be used again.

In a pumped-storage power plant with plugs in the flow openings between the reservoirs, a damaged reservoir in a particular module can be repaired by closing the plugs in the damaged reservoir and possibly in adjacent reservoirs, after which the damaged reservoir is repaired. The reservoirs in the other modules can be used to pump water during the repair. After the repair, the seals are opened, and the repaired reservoir can be used again.

In embodiments where the power units are arranged around the perimeter of the module array, it may be advantageous to run a branch of the horizontal connecting pipeline from each reservoir to the perimeter of the module array to the vertical connecting pipeline and to place a cap for the branch there. The measuring instruments from the individual reservoirs can advantageously also be led into this space. Although the water flow losses in the connecting pipeline will increase, the spaces with the caps at the connecting pipeline at the levels below the lower reservoirs and below the upper reservoirs can be more easily conditioned to create favourable conditions for the operation and maintenance personnel and for the operation and thus reliability of the caps and measuring instruments.

Advantageously, a branch line of horizontal and vertical connecting pipelines from each reservoir, including the cap and measuring instruments, can be led to the power unit. These devices are centralised in one conditioned location, so that their operation and maintenance is greatly simplified. The regulation of the filling of the reservoirs with water caps will be simplified and the need for air pressure control in the reservoirs will be reduced or eliminated. The reliability and safety of the pumped-storage power plant will thus be ensured even at elevated pumped water temperatures.

Advantageously, the energy transfer pipeline in the pumped-storage power plant is arranged such that the ends of the pipeline are immersed in the pumped fluid in both the lower reservoir and the upper reservoir, the pipeline connects the space of the lower reservoir and the upper reservoir containing the pumped fluid without interrupting the fluid column through the space with another fluid (or immediately, directly, continuously) so that the fluid flow is continuous.

This minimizes the power consumption and maximizes the power generation in overcoming the energy difference between the fluid in the lower reservoir and the upper reservoir.

For example, if the pumped fluid is water, then when the water is pumped by the pump, the discharge pipeline connects the water space of the lower reservoir and the upper reservoir continuously, i. e. without interruption of the water column by the air space. Similarly, when water is passed through a turbine, the discharge pipeline is routed from below the water level in the upper reservoir to below the water level in the lower reservoir in a continuous manner, i. e. without interruption by the air space.

Advantageously, balancing chambers are arranged in the connecting pipeline to dampen hydraulic shocks resulting from changes in water flow velocity during control or shutdown of the power unit.

Since the floating reservoir can sway on the water surface of the base reservoir, the water pipeline of the floating reservoir is advantageously connected to the objects on the shore of the base reservoir by a flexible pipeline.

The upper reservoirs of different heights may advantageously be arranged in terms of height so that the upper edges are aligned to the same level.

A large multi-purpose working platform can then be created on the upper reservoirs.

This will simplify access to all modules and facilitate installation and maintenance work on the floating reservoir.

Lower reservoirs of different heights may also advantageously be arranged in terms of height so that the upper edges are aligned to the same level.

If these upper reservoirs are connected by a common collecting pipeline, similar to the lower reservoirs, then the reservoirs with the greatest height, whose bottom is therefore the lowest and are arranged closest to the centre of gravity of the floating reservoir, are filled first and drained last during pumping, which helps to stabilise the module array against tilting. However, this method of filling the reservoirs will create shear stress between modules with different degrees of filling.

If the platform on the upper reservoirs is sufficiently paved, at least locally, it can also serve as a landing strip for helicopters to transport personnel and materials.

However, it must be considered that any added load on the pumped-storage power plant must respect the bearing capacity of the bases or floats and may therefore imply a partial limitation of the storage capacity of the pumped-storage power plant.

In order to keep the upper edges of the upper reservoirs aligned to the same level, the reservoirs must be filled proportionally in all modules or groups of modules that will not be constructionally connected to each other during pumping.

If the reservoirs in all separate modules or groups of modules are not filled proportionally, these modules or groups of modules will not be loaded proportionally to their capacity and their total height will vary from one another during the pumping process. Their total heights will be equalised when the filling of all reservoirs is adjusted to be proportional or when the filling is completely finished.

A pumped-storage power plant according to the invention comprises a liquid and/or gas power unit in which electricity is consumed to store potential energy and electricity is generated from the consumed potential energy.

The power output of the power unit is advantageously adjustable. The pumped-storage power plant according to the invention may advantageously comprise a plurality of power units of the same or different power to better regulate and to scale the power storage or power generation capacity or even to increase the reliability of operation.

If the energy storage in a pumped-storage power plant takes place when the pressure or fluid flow changes during the power cycle, the control requirements of the power unit increase and its efficiency decreases.

The fluid power unit is used when the pumped fluid is a liquid, advantageously comprising a pump, advantageously a water pump, for converting electrical energy into positional energy of the liquid, and further comprising a liquid turbine, advantageously a water turbine, for converting positional energy of the liquid into electrical energy.

The transfer of the fluid by the fluid power unit between the reservoirs is accomplished via a fluid line. The turbine and the pump may be connected in parallel to a common liquid line or may be connected separately, i. e. the turbine to the supply line and the pump to the discharge line. The power unit may comprise a reverse turbine that can operate in both turbine and pump modes, for example a Francis turbine. The turbine may be coupled to a generator, the pump may be coupled to an engine, and the reverse turbine may be coupled to a motor-generator.

A gas power unit is used when the pumped fluid is a gas, advantageously comprising a gas compressor, fan or vacuum pump, advantageously comprising an air compressor, fan or vacuum pump for air to convert electrical energy to compressive energy of the gas, and further comprising a gas engine, for example a gas turbine, for air an air turbine, to convert compressive energy of the gas to electrical energy, or comprising a reverse gas turbine which can operate in both turbine and compression modes. The transfer of gas by the gas power unit between the reservoirs is carried out via a gas pipeline. The parallel or serial connection to the gas pipeline may be made in analogy with the liquid power unit.

The gas power unit can be conveniently arranged at the top of the floating reservoir above the liquid level, so that it is not as exposed to the possible aggressive effects of the liquid and is easier to reach for maintenance.

In order to allow the gas pressure energy to be stored in the pumped-storage power plant by pumping gas between the gas spaces, the gas spaces are connected by a sealable gas path.

Advantageously, both reservoirs are high-pressure and gas pumping can be carried out bidirectionally between the reservoirs.

Advantageously, one of the reservoirs is low pressure and serves as a storage reservoir for expanded gas, while the other reservoir is high pressure and serves as a storage reservoir for compressed gas.

Both reservoirs advantageously have the same or different volumes.

Advantageously, the low-pressure reservoir has a larger volume and the high-pressure reservoir has a smaller volume.

Advantageously, the pumping of gas is carried out between the lower reservoir and the upper reservoir.

Advantageously, the pumping of gas is carried out between the base reservoir and the lower reservoir and/or the upper reservoir in the floating reservoir.

Advantageously, the air pumping is carried out between the air and the lower reservoir and/or the upper reservoir.

Advantageously the intermediate piece is used as a gas space, more advantageously as a low-pressure reservoir. Advantageously, the lower and/or upper reservoir is then a high-pressure reservoir.

Advantageously, water pumping and gas pumping are performed simultaneously and/or separately, on its own.

The generation of air pressure energy, or the raising or lowering of the air pressure in one reservoir above or below the atmospheric pressure or the pressure in the other reservoir, can advantageously be accomplished by a compressor or vacuum pump in a closed liquid path or by forcing or sucking liquid into or out of a pressurized air reservoir by a pump or reverse turbine.

When pumping the gas, the liquid space of the floating reservoir can advantageously be opened into the liquid space of the base reservoir so that the pressure difference in the gas power unit is constant during the working stroke, so that the power losses by the control are minimized.

Changing the height position of the pressurized gas floating reservoir can advantageously be done by pumping the liquid, which changes the compression of the gas in the floating reservoir. By pumping liquid from the base reservoir by a pump into the floating reservoir, the floating reservoir is submerged and the gas in the enclosed gas space above the liquid level in the floating reservoir is compressed. By transferring liquid from the floating reservoir to the base reservoir via a turbine, the floating reservoir rises and the gas above the liquid level in the floating reservoir expands.

The accumulation of gas pressure energy in the reservoir is part of the energy cycle that comprises polytropic compression and expansion of the gas, which are thermodynamic changes that are irreversible mainly due to the predominant heat dissipation from the gas to its surroundings. Heat losses reduce the efficiency of energy storage.

To improve thermodynamic efficiency of the compression cycle, it is advantageous to recuperate the compression heat, in other words, to store the compression heat of the compressed gas and use it during expansion or gas extraction, the polytropic changes then approach the adiabatic changes. The pumped-storage power plant according to the invention may advantageously comprise a compression heat recovery device. The compression heat is also accumulated in the pumped fluid, which is particularly advantageous when the fluid is pumped between reservoirs in a closed cycle. Heat losses accumulated in the fluid are also reduced by insulating the reservoirs and pipeline.

Another disadvantage of storing the pressure energy of the gas in a reservoir with an open liquid level is that the gas from the space above the liquid level is gradually absorbed in the liquid in proportion to the overpressure and removed by the pumped liquid, thus decreasing its density as its volume increases and the duty cycle of the pumped-storage power plant may be disturbed at higher pressures to the extent that pumping stops after a number of cycles. As the temperature increases, the liquid absorbs less compressed gas.

In order not to reduce the volumetric efficiency of the pumping cycle by reducing the volume of gas in the closed pressure vessel, for example by cooling or absorption in the liquid or by loss through leaks, the pumped-storage power plant according to the invention advantageously comprises a device for replenishing gas from an external source, which advantageously comprises a compressor or more advantageously a pressure vessel with compressed gas and a sealable gas pipeline.

However, the refilling of gas also reduces the efficiency of the energy cycle.

The reservoir may advantageously comprise a separate space for the compressed gas, which therefore has no immediate pressurized contact with the liquid level in the reservoir and cannot dissolve in the liquid.

Advantageously, in the pressure reservoir, the separated space for the compressed gas is formed by a flexible, advantageously foldable membrane, advantageously formed by a membrane bag, wherein the spaces for the liquid and the gas are completely separated.

In the pressure reservoir, the separate space for the compressed gas may advantageously be formed by an auxiliary pressure vessel containing an auxiliary gas power unit. During the filling of the pressure vessel with the liquid, the gas from this vessel is forced into the auxiliary pressure vessel by an auxiliary compressor, and during the draining of the liquid from the pressure vessel, the compressed gas from the auxiliary pressure vessel is discharged through the auxiliary gas turbine.

The power unit is advantageously arranged in an array of modules.

The power unit is connected to the module array via the power transmission pipeline and is always arranged at or below the water level in the lower reservoir, i. e. at a maximum height above the water level in the lower reservoir to prevent breakage of the water column in the power unit and in the water pipeline.

In a pumped-storage power plant with pumping between the base reservoir and the floating reservoir, the power unit advantageously moves in parallel with the floating reservoir, it may advantageously be coupled to the floating reservoir.

Advantageously, the power unit is mounted on the outside of the module array, making it more accessible for maintenance.

Advantageously, the power unit may be arranged outside the module array.

In a pumped-storage power plant with a floating reservoir, the power unit is advantageously arranged in a pontoon or other floating device.

Advantageously, the power unit is connected to the module array by a sliding or articulated device, wherein the connecting pipeline is advantageously of a flexible, articulated or telescopic embodiment in this part to compensate for mutual movements between the power unit and the module array, in particular with the floating reservoir when it is swinging on the water surface in the base reservoir. Advantageously, the connecting pipeline in this part is made of plastic, advantageously reinforced.

The fact that the power unit is at the level of the lower reservoir makes it more accessible for installation and maintenance, but the disadvantage is the longer and more complex energy transfer paths, which are associated with energy losses or lower lifetime of the flexible pipeline.

In this context, advantageously the power unit may be rigidly connected to the base reservoir in which the movable reservoir is arranged, advantageously arranged on a structure attached to the bottom of the base reservoir, advantageously in a hollow tube, or advantageously arranged on the shore of the base reservoir.

In a pumped-storage power plant with stationary reservoirs, the power unit does not have to be connected to the module array, but the connecting pipeline is advantageously of a flexible, articulated or telescopic embodiment which allows to compensate for any, in particular thermal, expansion between the power unit and the module array.

By being arranged outside of the module array, the power unit is generally more accessible for installation, operation and maintenance and then its size and thus efficiency can be better optimised. By increasing the power output of the power units, the number of power units could be reduced, of course considering the requirements for power grid regulation.

By arranging the power unit in the machine room outside the module array, noise insulation can be more effectively addressed than in a sheet metal module array.

Further soundproofing is possible by partially or fully placing the power unit below ground level.

Advantageously, the power units, advantageously including the associated vertical connecting pipeline, are housed in energy modules connected around the perimeter of the floating reservoir to conventional reservoir modules, so that balancing and accessibility of the power units for installation and maintenance can be more easily addressed.

The pumped-storage power plant, especially the power unit, also comprises other usual accessories such as equipment for adjusting the parameters of electrical energy, e. g. voltage and current, and for its transmission to or from the point of consumption and equipment for damping hydraulic, mechanical or electromagnetic shocks and oscillations.

A suction basket or comb in the water supply pipeline or a suction filter in the air supply pipeline with the power unit is also envisaged.

The pumped-storage power plant advantageously comprises an engine room in which the power generating set is arranged.

The engine room or just the power unit of a pumped-storage power plant according to the invention, e. g. advantageously the hydroelectric power unit, may advantageously be directly exposed to the aqueous environment, which is the embodiment usual for submersible pumps or turbines, or may advantageously be housed in a pressurized housing filled with air or other, advantageously inert, gas or liquid, advantageously an inert liquid, so that it is protected externally against overpressure and other adverse, in particular corrosive, effects of the aqueous environment. Advantageously, the liquid or gas filling of the pressure housing is compressed so that the external hydrostatic pressure on the body of the array is at least partially balanced with the internal hydrostatic pressure through the filling, thereby reducing the load on the array and the pressure housing.

The transmission of electrical power between the power plant and the electrical equipment on the shore of the base reservoir can be advantageously solved by a movable cable or advantageously by means of a trolley.

The pumped-storage power plant according to the invention advantageously comprises safety devices, such as level sensors and liquid flow sensors, pressure gauges for measuring the pressure and flow of the gas filling, sensors for measuring the position and movement of the floating reservoir, or the dilatations or dips of the pumped-storage power plant.

The pumped-storage power plant according to the invention advantageously comprises a device for defining a position of the floating reservoir on the water surface of the base reservoir.

The pumped-storage power plant according to the invention, in particular in the embodiment of a floating reservoir with a lower reservoir and an upper reservoir, comprises, for example, mooring ropes or rods which are fixed to the shore of the base reservoir and allow the necessary expansion to prevent the parts of the floating reservoir and the mooring elements from being overloaded by uneven loading thereof, for example due to the action of strong winds while the floating reservoir is swinging.

The pumped-storage power plant according to the invention, in particular in the embodiment of a floating reservoir with an upper reservoir, advantageously comprises a guiding device for guiding the floating reservoir along a determined trajectory, in particular in a vertical direction, in the space of the base reservoir. The guiding device provides a smooth guidance of the floating reservoir, depending on the embodiment, advantageously against buckling, rolling and overturning, caused for example by inertia, waves, water currents or wind, advantageously in an embodiment as a sliding and/or rolling and/or articulated device, in a large base reservoir advantageously as a guiding frame or parallelogram, fixed for example to the bottom of the base reservoir.

The perfect guidance of the floating reservoir also depends on the number of degrees of freedom of the guiding device. Advantageously, the guiding device comprises a rope guide, wherein the guide ropes are advantageously attached to the bottom of the base reservoir and to floats on the surface of the base reservoir, wherein the floats are advantageously connected to each other and advantageously horizontally stabilized. A rope anchored to the bottom of the base reservoir and tensioned by the buoyancy of the float does not allow the floating reservoir to be guided with exactly one degree of freedom, but as it is a self-centring device it can approach this degree considerably.

A floating reservoir arranged in a very large base reservoir and at a greater distance from its shore may be equipped with equipment, advantageously marine engines, to maintain its position in the base reservoir and/or to move it, for example, to a dock for repair.

The floating reservoir is advantageously secured on the surface of the base reservoir by a guide frame which surrounds the floating reservoir around its entire perimeter.

The guide frame advantageously has a floating part and an anchoring part which are connected to each other in a hinged manner. The anchoring portion is advantageously articulated in a base on the bank of the base reservoir.

The guide frame serves primarily to stabilize the floating reservoir against horizontal movement on the water surface in the base reservoir, allows vertical movement and free swaying of the floating reservoir, and is anchored to the shore of the base reservoir to allow proper operation of the floating reservoir within the permissible height changes of the water level in the base reservoir.

The guide frame is advantageously provided with a sprung wheel guide and a fixed guide to stabilize the floating reservoir against horizontal movement on the water surface in the base reservoir and to guide the floating reservoir during vertical movement.

The pumped-storage power plant advantageously comprises at least one access road for walking of operation and maintenance personnel and for associated material transport, e. g. between the shore of the base reservoir and the floating reservoir, as well as for other purposes.

Advantageously, the access path is formed on the anchor portion and/or the floating portion of the guide frame.

Advantageously, the access road comprises a connecting bridge.

The pumped-storage power plant according to the invention is advantageously provided with a working platform, which is advantageously formed on a guide frame.

The access road is advantageously part of the working platform.

The working platform advantageously has multiple purposes:

- as an access route for service and maintenance personnel,
- as a transport route for the transport of materials by means of transport equipment during maintenance and repairs, especially of energy equipment,
- as an assembly platform for maintenance and installation of floating reservoirs, especially power unit,
- for carrying and routing cables to power unit, to control and regulation valves, to measuring and safety devices and equipment),
- for carrying auxiliary electrical equipment and wiring (outdoor and indoor assembly equipment for lifting loads and transporting people, lighting, power connections for electrical tools and instruments, defrosting in winter),
- for carrying inert gas lines to fill the modules.

The working platform is advantageously equipped with:

- railing with edges at the floor against people and objects falling from the guide frame into the water,
- tracks for rail transport of freight and materials,
- gates for pulling rolling stock on tracks,
- lighting,
- safety equipment and means for rescuing persons in the event of a fall from the guide frame into the water (lifeboats and belts),
- mooring, handling and access equipment for transferring material and persons between the guide frame and the watercraft.

The width of the working platform is advantageously sufficient for two tracks side by side for independent transport on each track.

Traffic will advantageously be provided for the smooth movement of rolling stock from two points on the bank to the working platform and around its perimeter, with several switches to allow crossing between lines if necessary.

The tracks are advantageously recessed in the floor.

The working platform also advantageously allows the movement of wheeled vehicles with tyres.

The floating reservoir, which comprises a lower reservoir and an upper reservoir and does not move in height during pumping, advantageously comprises a working platform rigidly attached to the perimeter of the floating reservoir.

This working platform is advantageously positioned at a height so that it exceeds the water level in the base reservoir when swinging even in strong winds, it is advantageously formed at the level of the power units.

This working platform is conveniently connected to the bank of the base reservoir by connecting bridges.

The connecting bridge is advantageously hinged to the floating reservoir and slidingly connected to the bank of the base reservoir.

The pumped-storage power plant advantageously comprises access and transport routes, advantageously working platforms, for the horizontal transport of people and materials for installation, operation and maintenance to the power unit, to the vertical and manifold pipelines.

Horizontal working platforms are advantageously formed below and above the lower reservoirs, below and above the upper reservoirs.

The pumped-storage power plant advantageously comprises access and transport routes for vertical transport of people and materials for installation, operation and maintenance to the power unit, to the vertical and manifold pipeline and to the working platforms.

For vertical transport, rope or rack and pinion transport equipment is advantageously used.

The rope transport device may advantageously be a friction disc drive or a drum drive.

Friction disc wire rope equipment, single- or multi-rope, has minimal power consumption for propulsion because the supporting rope is balanced by a balancing rope, but the ropes are continuously exposed to the elevated temperatures that can prevail in the lift space.

The rope device with a single-rope drum reel has a higher power consumption for the drive because the supporting rope is not balanced by a balancing rope, but the rope is wound on the drum for most of the day and is thus protected against elevated temperatures in the lift space.

A rope device with two drum discs would not be practical as it is more complicated, and the balance is not much better than a single drum device.

Advantageously, the equipment for vertical transport of people and cargo is installed inside and/or outside the perimeter modules, advantageously the equipment is a suspended or climbing mounting platform.

For inspection, cleaning and repair of the modules from the inside and outside, it is advantageous to create lockable inspection openings in the upper or lower bottoms, or in the side walls or in the horizontal stiffener strips or in the platforms of reservoirs, intermediate pieces and floats, which allow the entry of personnel and the use of the necessary working means and instruments.

To facilitate work inside the modules, it is advisable to modify the handles at these inspection openings for anchoring portable inspection, cleaning, repair and transport equipment.

The pumped-storage power plant advantageously comprises an interlocking device, advantageously a stop, advantageously a sprung stop. The interlocking device may advantageously be self-acting, advantageously remotely operable.

This locking device serves to define the position of the floating reservoir in a designated position of the base reservoir, advantageously secures the position of the floating reservoir within the limits required by the operating cycle, e. g. in the extreme position, advantageously prevents the floating reservoir from settling to the bottom of the base reservoir and thereby damaging it.

The interlocking device may advantageously be used to stabilize the height of the floating reservoir in the base reservoir, advantageously in the lower or upper operating position, allowing further accumulation of the potential energy of the fluid by pumping it between the reservoirs, thereby expanding the operating modes to increase the capacity of the pumped-storage power plant.

After stabilizing the floating reservoir, both reservoirs are stationary and are universally referred to as the first reservoir and the second reservoir.

The pumping of the fluid between the first reservoir and the second reservoir is as follows:

- by pumping the fluid from the lower energy potential location in the first reservoir directly to the higher energy potential location in the second reservoir using a power unit, the potential energy of the fluids in the stabilised floating reservoir is stored while consuming electricity; and

- by transferring the fluid from the higher energy potential location in the second reservoir directly to the lower energy potential location in the first reservoir using a power unit, i. e. by consuming the potential energy of the fluids in the stabilised floating reservoir, electricity is generated.

When pumping the liquid, the height difference of the liquid levels during the operation of the stabilized reservoir changes as in the case of the usual pair of stationary reservoirs, i. e. when pumping the liquid from the lower reservoir to the upper reservoir, the height difference of their levels increases, when overflowing from the upper reservoir to the lower reservoir, the height difference of their levels decreases, which means the variability of the output or increased requirements for its regulation.

The locking stops of the stabilised reservoir transfer the full buoyancy of the empty reservoir or, on the other hand, the full weight of the filled reservoir, which implies a considerable load in both the embodiment of these stops and the embodiment of the stabilised reservoir.

The floating reservoir advantageously has a hydrodynamic shape and a smooth surface, which reduces the resistance to movement of the floating reservoir in the water and thus increases the efficiency of energy storage and generation.

However, there are situations where the low hydrodynamic resistance of a floating reservoir is a disadvantage. Therefore, the floating reservoir advantageously comprises a hydrodynamic motion damper, a stabilizer, the purpose of which is to increase the hydrodynamic resistance and thereby slow down the motion of the floating reservoir, in particular to dampen its rocking on the water surface. Advantageously, the damper is attached to the bottom of the floating reservoir so as to remain as far below the water surface as possible when the floating reservoir is rocking, even when the floating reservoir or a part thereof rises to the upper operating position. The damper is shaped to impose as much hydrodynamic resistance as possible, advantageously in at least one sense of movement, for example, to complete the operational lift of the floating reservoir to the extreme operational position, advantageously in both senses of that direction of movement, for example, to limit the height swing of the floating reservoir. Advantageously, the damper is in the shape of a planar or curved plate, advantageously oriented perpendicular or oblique to the direction of movement, or in the shape of an open cavity, advantageously in the shape of a hollow hemisphere advantageously oriented with the cavity facing the direction of movement. Advantageously the damper is mounted so as to be out of reach of the turbulent water flow generated by the floating reservoir itself, advantageously on the side of the floating reservoir. Advantageously the floating reservoir is provided with at least one damper for each kinematic degree of freedom, more advantageously the damper is multiple. Advantageously, the floating reservoir has dampers symmetrically arranged to at least one axis of motion. Advantageously, the damper is extendable and/or tiltable and/or removable and/or remotely operable. For example, a floating reservoir which has two degrees of freedom, i. e. it can swing vertically and swing laterally in one vertical plane, should be equipped with two dampers, i. e. for swinging and for lateral swinging. The damper can dampen the rocking or swaying of the floating reservoir by up to 90 %.

Advantageously, the pumped-storage power plant can be equipped with an additional auxiliary power unit, which can be used to gently regulate the immersion depth of the floating reservoir and/or to dampen its sway on the water surface in the main reservoir after the main power unit has stopped operation, e. g. to facilitate loading and unloading of transported material or for the embarkation and disembarkation of people.

Since a pumped-storage power plant can generally have a large surface area and reach high above the surrounding terrain, a solar and/or wind power plant can be advantageously arranged on the upper platform or even on the vertical perimeter walls. The advantage here is that the average output of both solar and wind power increases with the height of the floating reservoir - offering more uninterrupted sunlight and faster wind.

Under the floating reservoir, propeller hydroelectric power plants may be installed to the bottom of the floating reservoir and/or to the bottom of the base reservoir to take advantage of the alternating flow of water forced by the floating reservoir's rocking on the water surface in the base reservoir during wind gusts. However, due to the resistance of the flow-through power plant, there will be greater height fluctuations in the water level of the base reservoir while at the same time the rocking of the floating reservoir will be dampened.

The electricity generated in this solar, wind or hydroelectric power plant can advantageously be directly stored in a pumped-storage power plant according to the invention.

The biogas that will be spontaneously generated in the pumped water or that will be advantageously purposefully produced therein can be advantageously separated, advantageously from the gas that fills the gas space of the reservoirs, advantageously by means of a vent pipeline, and stored in a storage reservoir for further, in particular energy, use.

The side walls and the upper platform, as well as the inner, i. e. air, space of the pumped-storage power plant can also be advantageously used for other purposes, e. g. for housing, for sports and recreational activities, as an observation tower or for advertising purposes.

In a pumped-storage power plant, the periodic conversion of electrical energy into potential energy and back again converts a significant portion (about 25%) of the electrical and mechanical energy into waste heat, which results in the heating of water, air and structural parts of the pumped-storage power plant, especially when reservoirs and pipelines are covered or insulated.

Some of the waste heat is discharged into the lake water or groundwater, either directly by pumping heated water from the floating reservoir into the lake, or indirectly through the walls of the pumped-storage power plant, in particular through the floats of the floating reservoir, which are heated by heat transfer from the carried reservoirs and pipelines. The water in the lake can heat up, which can threaten the biological balance of the lake. In addition, there may be increased evaporation and thickening of the lake water, which must be replenished at an increased rate from the flowing watercourse. Heating of the pumped-storage power plant can be an advantage in winter when it reduces the risk of freezing of the water in the reservoirs and in the surrounding terrain.

Some of the waste heat remains in the pumped-storage power plant and can gradually increase the temperature of the pumped water and the pumped-storage power plant, thereby increasing the amount of mineral deposits in the reservoirs, connecting pipelines and power units.

If the plant is a pumped-storage power plant with a floating reservoir, where water is pumped between the lower reservoir, which is a lake, and the upper reservoir, which is arranged in the floating reservoir, the transfer of waste heat to the lake water will be sufficiently efficient throughout the year, even at the cost of increased evaporation and the need for recharge.

In the case of a pumped-storage power plant, where the water is pumped between the lower reservoir and the upper reservoir, both of which are arranged in a floating reservoir, the pumped water still remains in the pumped-storage power plant. Also, the connecting pipelines and power units are arranged in the pumped-storage area and are not exposed to the ambient air flow.

Part of the waste heat is dissipated into the ambient air through the side and upper walls of the pumped-storage power plant by the natural flow of circulating air.

Waste heat removal may not be significant even in winter or windy weather, especially if the heat transfer surfaces are insulated and the bottom of the floating reservoir is treated as continuous.

Conversely, a pumped-storage power plant can be heated by solar radiation.

A significant portion of the waste heat will remain in the pumped-storage power plant and the elevated temperature of the pumped water could complicate the operation of the pumped-storage power plant equipment and the working conditions for operation and maintenance.

To prevent overheating of the floating reservoir, the excess waste heat must be removed by additional cooling.

The pumped-storage power plant advantageously comprises a cooling device, advantageously an air-cooling device, for cooling the pumped fluid, the modules, the pipeline and the power unit.

The peripheral modules of the pumped-storage power plant, which contain vertical connecting water or air pipelines and serve as a chimney, are advantageously used as air cooling devices.

The connecting pipeline is advantageously branched in the perimeter, energy modules, so that its surface area and therefore the heat transfer surface is larger.

Advantageously, the branched connecting pipeline is arranged in the shape of a heat exchanger.

Advantageously, due to lower material costs, the heat exchanger is formed in the low-pressure section of the connecting pipeline that connects the lower reservoirs to the power unit.

The heat exchanger is advantageously arranged at the bottom of the perimeter module.

The heat exchanger is advantageously arranged at the full height of the vertical connecting pipeline.

The connecting pipeline is advantageously ribbed to increase the heat transfer surface.

The air is advantageously supplied to the perimeter module from the outside environment through a side opening at the bottom of the perimeter module, flows around the connecting pipeline or the power unit from which it removes waste heat, rises upwards by natural immersion depth as a result of heating, and is exhausted from the module to the outside environment through an opening at the top of the module.

Advantageously, the vertical spaces between the selected modules in the interior of the pumped-storage power plant forming the stack are used as cooling devices, and these spaces between the selected modules are provided with openings in the horizontal bracing between the modules to allow cooling air to pass through. Suitable modules will be selected so that the cooling of the modules in the pumped-storage power plant is as uniform as possible.

The air is supplied from the outside environment to the lower part of the indoor areas of the pumped-storage power plant, advantageously through access openings in the perimeter modules, flows horizontally, advantageously around the power unit, and then around the collection pipeline through access passages at the level below and above the lower reservoirs, then flows vertically upwards past the lower reservoirs and intermediate pieces from which it removes waste heat, rises upwards by natural immersion depth due to heating and in the upper part of the pumped-storage power plant is discharged horizontally through access passages around the collection pipeline at the level below and above the upper reservoirs or vertically around the upper reservoirs to the outside environment.

All walls of the spaces between modules intended as cooling devices are advantageously made of corrosion-resistant material. The spaces between the other modules shall be sealed and advantageously filled with dry inert gas to protect them against corrosion.

The horizontal access corridors themselves at the level below and above the lower reservoirs, as well as at the level below and above the upper reservoirs, are advantageously partly used as cooling facilities. In windy weather, the walls of the reservoirs, the manifolds and the power units, which form the heat transfer surfaces in the access corridors, are cooled by immersion depths of air entering and leaving through openings in the perimeter modules.

By directing the cooling air through the horizontal access corridors, ventilation is also provided to create acceptable climatic conditions for operators and maintenance personnel.

The air inlet and outlet openings formed in the modules around the perimeter of the pumped-storage power plant are advantageously fitted with grilles to prevent the entry of unwanted objects or birds.

Heat exchangers, which advantageously form a chimney and are arranged on the shore of the base reservoir, lake, generally outside the module array, serve as cooling devices. The pumped water is transferred from the pumped-storage power plant to the heat exchanger, cooled by air through the natural immersion depth caused by the rising of the heated air or by forced immersion depth caused by a fan, and returned to the pumped-storage power plant after cooling.

If the cooling of the pumped-storage power plant by the cooling equipment is sufficiently effective, it will be advantageous to line the lower bottoms of the lower reservoirs or the upper float bottoms and the collecting and connecting pipelines with thermal insulation to reduce the transfer of waste heat to the bases and bedrock or to the lake water through the float walls. Differences in the expansion of the module array and bases must be consistently addressed.

The pumped-storage power plant will change its volume due to changing temperatures.

Height changes of the pumped-storage power plant are not a problem.

Planar dimensional changes are not a problem with a floating reservoir, but with a stationary module array, the planar dimensional changes must be compensated for.

The horizontal mobility of bases to ensure expansion can only be solved with difficulty.

Therefore, it will be advantageous to create a modular pumped-storage power plant from groups of modules with separate bases, with these groups advantageously connected only by expansion elements.

The different groups of modules can then easily tolerate different bedrock subsidence and no mechanical stresses will arise between them for this reason. However, uneven settlement of the bedrock will cause the module groups to tilt, and rectification must be carried out in a timely manner.

In order for the module array to be able to withstand strong side winds at the same time, it is advantageous to make the perimeter modules or perimeter groups of modules stronger and with deeper bases. The side wind load will be absorbed by the perimeter parts of the module array and will not be transferred to the internal module groups.

The array of interlocking modules is relatively elastically compressible in the horizontal plane, so it will not need to be divided into groups of modules or these groups may contain a larger number of modules. The modules can be fixed to the bases and, when the temperature is raised and then stretched by waste heat, the shape of the modules flexibly adapts to the anchorage in the bases.

Advantageously, from each individual liquid space, i. e. the reservoir, or even the space between them, the connecting pipeline is led to the perimeter of the pumped-storage power plant, which ensures easier maintenance.

Advantageously, from each separate liquid space, the connecting pipeline is connected to the power unit separately.

Advantageously, from each separate gas space, i. e. the float and its segment, the reservoir and the intermediate space and the space between them, a gas pipeline is led to the perimeter of the pumped-storage power plant.

Advantageously from each separate gas space, the gas pipeline is equipped with a separate cap.

This extends the length of the connection and gas pipeline, but the shut-off valves can be arranged in a cooler area, which will greatly increase the reliability of the operation of these shut-off valves and improve the working conditions for operation and maintenance even when the temperature of the water pumped into the module space is increased by waste heat.

When the temperature of the pumped water increases, the temperature of the gas in the gas space of the pumped-storage power plant also increases, and if these spaces are closed, the gas pressure also increases.

In order to avoid the need to dimension the gas pressure vessels and gas pipeline for this increased pressure, it is advantageous to equip the pumped-storage power plant with a compressor station. Here, the excess gas from the gas spaces will be compressed or even liquefied and stored in storage reservoirs from which the gas can be drawn for replenishment in the gas space of the pumped-storage power plant when the temperature and thus the gas pressure drop.

The compact embodiment and the large size of the pumped-storage power plant according to the invention, while on the one hand causing waste heat to accumulate in the pumped-storage power plant, on the other hand allow for its secondary use, which increases the overall energy efficiency of the pumped-storage power plant.

As far as a pumped-storage power plant with a floating reservoir is concerned, waste heat recovery is mainly assumed for the embodiment containing both a lower and an upper reservoir, since no heated water is transferred from the floating reservoir to the water in the base reservoir and therefore the pumped-storage power plant can only be cooled by its walls and ventilation.

Advantageously, the waste heat accumulated in the pumped water can be transferred directly or via heat exchangers.

Heat exchangers can thus be used to transfer heat for electricity generation and/or for heating water in an external heating system.

The pumped-storage power plant according to the invention advantageously comprises a device for generating electricity from waste heat, advantageously from the heat of heated air.

Advantageously, the power generation facility comprises a pumped-storage cooling facility comprising an air motor with a generator, wherein the cooling facility space comprises a stack.

Air from the surrounding air is freely fed into the chimney, heated by the waste heat of the pumped water, which creates a natural chimney immersion depth in the chimney, part of the waste heat of the water is converted into the motion and pressure energy of the air, which is converted into electrical energy in the air motor with a generator, after which the air is freely discharged from the chimney into the surrounding air.

An air motor with a generator converts the motion or pressure energy of the heated air into mechanical work and converts this into electrical energy, advantageously a straight-running motor converts the motion energy of the heated air, a positive pressure motor converts the pressure energy of the heated air. The air motor can be installed at any height in any part of the chimney. If the positive pressure air motor is installed at the bottom of the chimney, the negative pressure of the heated air is used, if the positive pressure air motor is installed at the top of the chimney, the positive pressure of the heated air is used.

In the peripheral modules and in the designated spaces between the internal modules of the pumped-storage power plant, the waste heat from the module walls or the water connecting pipeline is transferred to the flowing air gradually over the entire height, so that the air density also decreases gradually with height, thus it is not the same over the entire height, thus reducing the achievable air pressure difference in the stack immersion depth.

The connecting pipelines in the perimeter, energy module can be arranged in the form of a heat exchanger by branching and ribbing, which will be arranged at the bottom of the module, so that almost all the waste heat from the water is transferred to the flowing air at the bottom of the module and the air density is low throughout the height of the module. If the heat exchanger capacity is the same as the previous embodiment, the stack immersion depth will increase to approximately double that of the previous design.

The external walls of the perimeter energy modules can be insulated to prevent waste heat from escaping into the surroundings, which will also increase the chimney immersion depth of heated air. The heat from the motor-generators of the power units can advantageously be dissipated by cooling them with pumped water, which will also improve the climatic conditions in the engine rooms.

Thermal insulation of the walls of the pumped-storage power plant is advantageously removable. When the insulation is opened, the walls of the power plant will be exposed to the air flowing from the surroundings and the power plant will be cooled. When the insulation is closed, heat will accumulate in the power plant which can be used further.

The pumped-storage power plant according to the invention advantageously comprises a device for generating electricity using a steam cycle from the heat of heated water or steam.

Heat exchangers arranged in perimeter, energy modules can advantageously contain tubes in which the heat of the heated pumped water is transferred to the water of the outdoor heating system for heating the surrounding buildings.

The heat exchanger is advantageously equipped with insulation, which reduces heat loss to the surroundings.

Advantageously, the insulation of the heat exchanger is hinged, the insulation can be closed or opened.

In the heating season when the insulation is closed, the heat can be transferred through the heat exchanger for heating, then the efficiency of waste heat recovery will be the highest. Outside the heating season, when the insulation is open, the heat exchanger can be used to heat air for secondary power generation, in which case the efficiency of waste heat recovery is much lower.

When the insulation is closed, the temperature in the connecting pipeline space is reduced so that its condition can be better monitored, and repairs can be made.

The waste heat accumulated in the pumped water can be advantageously used, especially in winter, to heat residential, industrial, agricultural and recreational buildings in the surrounding villages by simply circulating the heating water or heating it with heat pumps, biomass, natural gas or electricity.

After the start of operation, the waste heat will be stored in the pumped-storage power plant for 4 to 6 months, and once the water temperature reaches the required value, e. g. 50 °C, the waste heat can be efficiently extracted for heating or even for secondary power generation. Depending on the size of the pumped-storage power plant and the quality of thermal insulation, approximately 90 % of the waste heat can be used in this way.

At the same time, this will increase the heat reserve in the pumped-storage power plant for situations where it is necessary to supply an increased amount of heat for heating on several consecutive days, e. g. in winter.

The pumped-storage power plant advantageously comprises a monitoring, measuring and control system that will ensure the safe operation of the plant by measuring important operating variables and comparing them with permitted values. Advantageously, the system is automatic and will automatically make the necessary changes to the pumping parameters.

An advantage of the arrangement of the pumped-storage power plant with an intermediate piece according to the invention is that the pumped-storage power plant can, depending on the strength of the material used, have a relatively very light yet high structure. In order to make optimal use of the strength of the material, the pumped-storage power plant must be built with a height in the hundreds of metres. At the same time, the width of the pumped-storage power plant must be sufficient to ensure the stability of the floating reservoir in strong winds. A pumped-storage power plant of this embodiment is therefore particularly suitable for high power outputs and capacities.

In large and deep base reservoirs, e. g. glacial lakes, lakes formed in the area of opencast mines or in the sea, or if the bedrock is sufficiently load bearing, a pumped-storage power plant can be comfortably built with a large pumping height and a large width.

However, a powerful pumped-storage power plant can also be obtained if several suitable smaller lakes or plots of land are available and spaced close together. On each lake or plot, a part of the pumped-storage power plant will be built with an optimum height corresponding to the depth of the lake or the bearing capacity of the bedrock, and these parts will be connected together to form a sufficiently stable structure.

Since pumped-storage power plants according to the invention can provide high capacities and outputs concentrated in selected locations (lakes), it is advantageous to remember to reinforce the connected power grid.

The pumped-storage power plant can be assembled advantageously by sequential assembly and by connecting the individual parts of the modules side by side, i. e. in layers, so that the floating reservoir can be assembled directly on the water surface in the base reservoir, i. e. without the aid of an assembly dock.

Additional layers are gradually connected to the lowest layer of the module parts so that the entire pumped-storage power plant is balanced on the bedrock or on the surface of the base reservoir during construction and does not create unnecessary additional mechanical stresses. The bases, or floats, are built first, the lower reservoirs are layered on top of them, then the intermediate pieces and finally the upper reservoirs.

The accessories, especially the water and air pipelines and the power units, are also assembled.

In parallel, a water supply must be built to fill the reservoirs of the pumped-storage power plant.

The floats of a floating reservoir composed of modules of different heights are advantageously assembled by first assembling the base layer of floats with the greatest immersion depth of the inner group of modules having the greatest height.

When the base layer of floats is completed, the floats of this inner module group shall be submerged by attaching another layer of floats, possibly intermediate floats or lower reservoirs (only to the extent that the stability of the assembled section on the water surface of the base reservoir is not impaired) or by partially filling the lower part of the floats or lower reservoirs with water so that the floats of the adjacent outer module group with a lower height can be attached to them at the required level to form a combined module group.

After the installation of this layer of floats of the connected module group is completed, the floats of the connected group shall be further submerged by the same procedure so that the floats of the next adjacent outer module group with a smaller height can be connected to them at the required level.

This is continued until the floats of the last group of modules with the smallest height are connected, after which the whole connected group is further plunged so that the next assembly can continue by evenly connecting the next higher layers of floats, intermediate bushes and reservoirs in a proportional manner so that no additional mechanical stresses are created.

The upper part of the floats or their segments, which will not be flooded, will be gradually filled with compressed gas so that the external hydrostatic pressure of the water in the floats is still compensated and the floats do not collapse.

In the course of further installation, the weight of the floating reservoir will increase, and it will continuously submerge, gradually displacing water from the base reservoir in a volume equivalent to the displacement of the empty floating reservoir.

The entire amount of water can be retained in the inner space of the floats during installation and, once the floating reservoir is installed, pumped into the lower reservoirs above the floats and is thus immediately available for pumping between the lower and upper reservoirs without the need to draw additional water from the base reservoir. The pumping of the water from the floats can advantageously be carried out via auxiliary pipeline by suction using the built-in power units and also by displacement using compressed gas to compensate for the external hydrostatic water pressure inside the floats against collapse of the floats or segments.

The embodiment of the pumped-storage power plant is resistant to adverse weather conditions and earthquakes, especially at greater usable depths or bedrock bearing capacity.

Despite its large size, the floating reservoir does not increase the gravity load on the bedrock of the base reservoir, and the bedrock load on the stationary pumped-storage power plant remains constant during pumping; therefore, the pumped-storage power plant does not induce earthquakes.

Although the production of steel as well as the transport for the construction of the pumped-storage power plant according to the invention is energy intensive as for other power plants, the carbon footprint of the pumped-storage power plant is relatively insignificant, especially in comparison with other types of storage power plants, e. g. electrochemical power plants, which have an incomparably shorter lifetime.

The pumped-storage power plant according to the invention shows an all-round improvement in parameters and other utility characteristics compared to prior art.

Embodiment with floating reservoir:

- makes much better use of the size and depth of the base reservoir,
- increases the pumping height many times,
- achieves up to several orders of magnitude higher energy storage capacities,
- achieves a much more favourable ratio between the price of the floating reservoir and the stored energy.

Embodiment with stationary reservoirs:

- makes very efficient use of the area of land on which it is built, as the lower and upper reservoirs are placed one above the other, in the same plan,
- even at high altitudes, it can be arranged near populated areas and on flat ground,
- it can be built with the capacity and power according to the needs of the area, so that a short transmission power line and a short pipeline for hot water supply are sufficient to connect it to the power grid.

The use of pumped-storage power plants according to the invention allows to solve fundamental problems of the energy sector:

- to increase the amount of stored electricity many times over the current situation,
- by plugging in the necessary number of its power generating sets to quickly compensate for the disparity between electricity generation from nuclear and fossil fuel power plants, variable consumption in industry, transport and services, and highly intermittent generation from renewable sources,
- to compensate for power factor in the power grid by using rotating machines as power units,
- to reduce the cost of addressing imbalances in the electricity network by reducing uneconomic operation of peaking resources and reducing the demands on the regulation of electricity generation at existing power plants,
- to increase energy efficiency in electricity storage by using waste heat,
- to streamline or limit massive long-distance and interstate power transfers,
- to significantly expand and cheapen electricity production in wind and photovoltaic power plants with very unstable output,
- to limit energy production in fossil fuel power plants, especially gas-fired power plants, or nuclear power plants,
- to make a significant contribution to improving the environment,
- to increase electrification in industry, transport and services,
- to develop electromobility,
- to increase the share of electricity in heating, either directly or in particular to drive heat pumps,
- to incorporate battery storage more extensively,
- to reduce and streamline massive long-distance electricity transfers between countries,
- to increase energy self-sufficiency and security for large and small territorial units within countries and their communities.

The construction of new pumped-storage power plants and the subsequent increase in the share of renewable energy sources in the energy sector can provide a new incentive for the development of industry, transport and services, reducing unemployment and raising the standard of living of the population.

Overview of the drawings

The invention will be explained in more detail with examples of embodiments according to the accompanying drawings.

Figure 1 schematically shows a conventional floating reservoir module with an upper reservoir.
Figure 2 schematically shows the floating reservoir energy module with an upper reservoir.
Figure 3 shows a diagram of the upper horizontal connecting pipeline arrangement.
Figure 4 schematically shows the float of a conventional one-piece floating reservoir module.
Figure 5 schematically shows a conventional floating reservoir module with a three-piece float.
Figure 6 schematically shows a pumped-storage power plant with a floating reservoir with submerged lower and upper reservoirs.
Figure 7 schematically shows a pumped-storage power plant with a floating reservoir with a submerged lower reservoir.
Figure 8 schematically shows a conventional floating reservoir module with a one-piece float.
Figure 9 schematically shows a conventional floating reservoir module with a three-piece float.

Figure 10 schematically shows a conventional floating reservoir module with a three-piece float.

Figure 11 schematically shows a conventional pumped-storage power plant module with stationary reservoirs.

Figure 12 schematically shows an array of interconnected pumped-storage modules.

Figure 13 schematically shows the reservoirs in an array of interconnected modules.

Figure 14 schematically shows a pumped-storage power plant with the upper reservoir in a floating reservoir with different module heights.

Figure 15 schematically shows a pumped-storage power plant with the upper reservoir in a floating reservoir.

Figure 16 schematically shows a pumped-storage power plant with a single-level floating reservoir.

Figure 17 schematically shows a pumped-storage power plant with a three-level floating reservoir and a three-level upper platform.

Figure 18 schematically shows a pumped-storage power plant with stationary reservoirs with a three-level module array and a three-level upper platform.

Figure 19 schematically shows a pumped-storage power plant with a three-level floating reservoir and a levelled upper platform.

Figure 20 schematically shows a pumped-storage power plant with stationary reservoirs with a three-level array of modules and a balanced upper platform.

Figure 21 schematically shows a pumped-storage power plant with a single-level floating reservoir and a guide frame.

Figure 22 schematically shows a planar array of interconnected modules.

Figure 23 schematically shows an array of interconnected modules on a wave-like substrate.

Figure 24 schematically shows a pumped-storage power plant with additional reservoirs in an array of modules with stationary reservoirs.

Figure 25 schematically shows a pumped-storage power plant with additional reservoirs in a floating reservoir module array.

Figure 26 schematically shows two variants of a pumped-storage power plant with a floating reservoir with an array of modules with different diameters.

Figure 27 schematically shows two variants of a pumped-storage power plant with stationary reservoirs with an array of modules with different diameters.

Figure 28 schematically shows an array of interconnected modules with a flow connecting pipeline.

Figure 29 schematically shows an array of interconnected modules with parallel connection of the connecting pipeline.

Figure 30 schematically shows an array of interconnected modules with independent connection of the connecting pipeline.

Figure 31 schematically shows the cooling of a pumped-storage power plant with a floating reservoir.

Figure 32 schematically shows the cooling of a pumped-storage power plant with stationary reservoirs.

Figure 33 schematically shows the cooling of a pumped-storage power plant with a floating reservoir heat exchanger.

Figure 34 schematically shows the cooling of a pumped-storage power plant with a heat exchanger with stationary reservoirs.

Figure 35 schematically shows a pumped-storage power plant with waste heat to power unit.

Figure 36 schematically shows a pumped-storage power plant with equipment for heating and for generating electricity from waste heat.

Examples

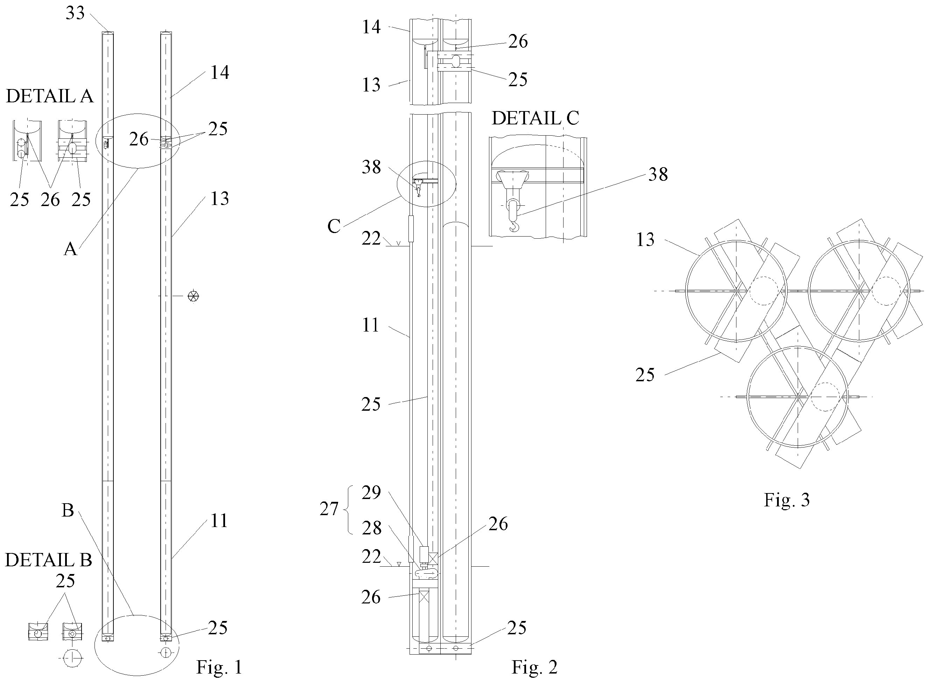

Figure 1 schematically shows a conventional floating reservoir module with an upper reservoir.

A conventional floating reservoir module has three basic parts:

- the upper part - the upper reservoir **14,** is mainly subject to load by internal water pressure,
- middle part - intermediate piece **13,** which is used to carry the upper reservoir and to connect the upper and lower parts, is loaded mainly by the vertical weight from the carried parts, i. e. mainly from the upper reservoir,
- the lower part - float **11,** which serves to carry the upper and middle part and submerges into the base reservoir **1,** thus creating the buoyancy necessary for the accumulation of potential energy, is loaded mainly by the external water pressure and the vertical weight from the carried parts.

The modules are internally and externally reinforced with flat vertical stiffeners to reinforce the walls of the modules and to connect the modules to each other.

From the bottom of the upper reservoirs **14,** branch pipelines of the connecting pipelines are led out, which are equipped with control valves **26.** These branch pipelines are connected to the double upper horizontal connecting pipelines **25** arranged in the upper part of the intermediate pieces **13**.

A lower horizontal connecting pipeline **25** is installed at the bottom of the floats **11,** which is provided with branch pipelines with inlet baskets to evenly distribute the water flow during intake and discharge to prevent unwanted swirling of the sludge at the bottom of the base reservoir **1.**

The left part of the figure shows the outline of the module, the right part of the figure shows the side view of the module. Below the side view is a plan view of the module, and to the right of the side view is a section through the module.

Figure 2 schematically shows the floating reservoir energy module with the upper reservoir.

This energy module comprises a power unit **27** and has some modifications compared to the module to which it is attached.

A vertical connecting pipeline **25** is installed in the intermediate piece **13** and in the float **11,** by which the upper and lower horizontal runs of the connecting pipeline **25** are connected to each other and which is connected to the power unit **27.**

The upper part of the float **11** is extended at the expense of the intermediate piece **13** to accommodate the power unit **27,** which has a two-machine arrangement - reverse turbine **28** and motor-generator **29** - with a vertical shaft.

The reverse turbine **28** is positioned at such a height that its horizontal axis is always below the water level **22** in the base reservoir, i. e. also in the upper operating position of the floating reservoir. This ensures a permanently negative suction height.

The motor-generator **29** is arranged above the reverse turbine **28** above the level **22** of the water in the base reservoir **1**.

Above and below the reversing turbine **28,** caps **26** are arranged in the vertical connecting pipeline **25.**

A lifting device **38** is installed in the elevated portion of the float **11** to facilitate assembly work on the power unit **27.**

The water level **22** in the base reservoir shown at the top of the float **11** indicates the situation when the float **11** is submerged in the lower operating position.

Figure 3 shows a diagram of the upper horizontal connecting pipeline arrangement.

The diagram shows the arrangement of the modules in triangular formations, which provide an optimal solution for the strength of the module array under horizontal forces. The horizontal connecting pipeline **25** comprises two layers of pipeline runs connected together and is arranged at the top of the intermediate piece below the upper reservoir. The location of the horizontal connecting pipeline **25** in the cross-section of the intermediate piece **13** is chosen so as to minimize weakening of the walls of the intermediate piece **13** and the vertical bracing. The cross-pipeline arrangement ensures that the same number of water reservoirs are connected to each power unit, which helps to ensure that they are filled/-drained evenly, and that the floating reservoir is stationary at the water level in the base reservoir. The vertical interconnection of the horizontal pipeline runs serves to ensure a sufficient and uniform water supply to the power units and an even distribution of water when operating different numbers of power units.

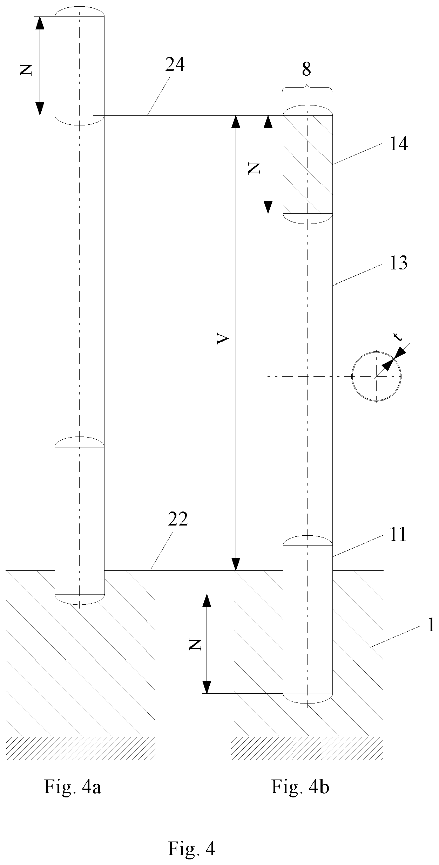

Fig. 4 schematically shows a conventional floating reservoir module with an upper reservoir and a one-piece float. The module **8** comprises an upper reservoir **14,** an intermediate piece **13** and a one-piece float **11,** which are made of thin sheet metal and have a circular horizontal cross-section. The intermediate piece **13** has a wall thickness of t.

In Figure 4a, the module **8** is in the upper operating position with the upper reservoir **14** empty, and in Figure 4b, the module **8** is in the lower operating position with the upper reservoir **14** full. Therefore, the height difference V between the water level **24** in the upper reservoir **14** and the water level **22** in the base reservoir **1** (lower reservoir) remains the same in both operating positions of the module **8.**

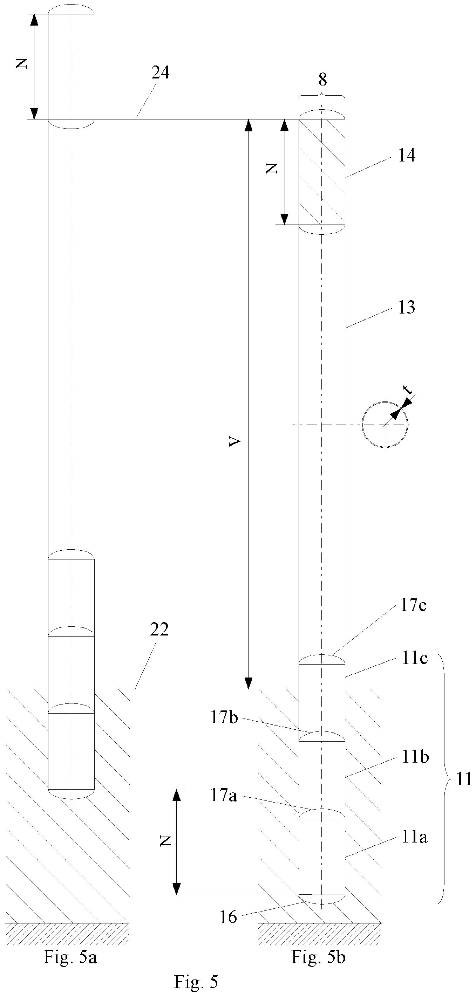

Fig. 5 schematically shows a conventional floating reservoir module with an upper reservoir and a three-piece float. The module **8** comprises an upper reservoir **14,** an intermediate piece **13** and a three-piece float **11.** The float **11** comprises segments **11a, 11b, 11c** (sections) which are made of thin sheet metal of thickness t and have a circular horizontal cross-section.

The individual segments **11a, 11b, 11c** of the float **11** are filled with air at an overpressure equal to the highest hydrostatic pressure of water to which the segment **11a, 11b, 11c** of the float **11** is exposed when fully submerged in the base reservoir **1**, i. e. the deeper segments **11a, 11b, 11c** of the float **11** are filled with air at a higher overpressure.

The upper bottom **17a** of the lower segment acts as a pressure barrier between the bottom segment 11a and the middle segment **11b**, and the upper bottom **17b** of the middle segment **11b** acts as a pressure barrier between the middle segment **11b** and the top segment **11c.**

Thus, this three-piece float **11** may have thinner walls and therefore less mass than a one-piece float with the same height, i. e. with the same buoyancy. The intermediate piece **13** and/or the upper water reservoir **14** may therefore be higher than a module **8** with a one-piece float.

Figure 5a shows a module **8** in the upper operating position, Figure 5b shows a module **8** in the lower operating position. The height of the water N in the upper reservoir **14** is equal to the operating lift N, i. e. the height difference between the upper and lower operating positions of the module **8.** Therefore, the height difference V between the water level **24** in the upper reservoir **14** and the water level **22** in the base reservoir **1** (lower reservoir) remains the same in both operating positions of the module **8.**

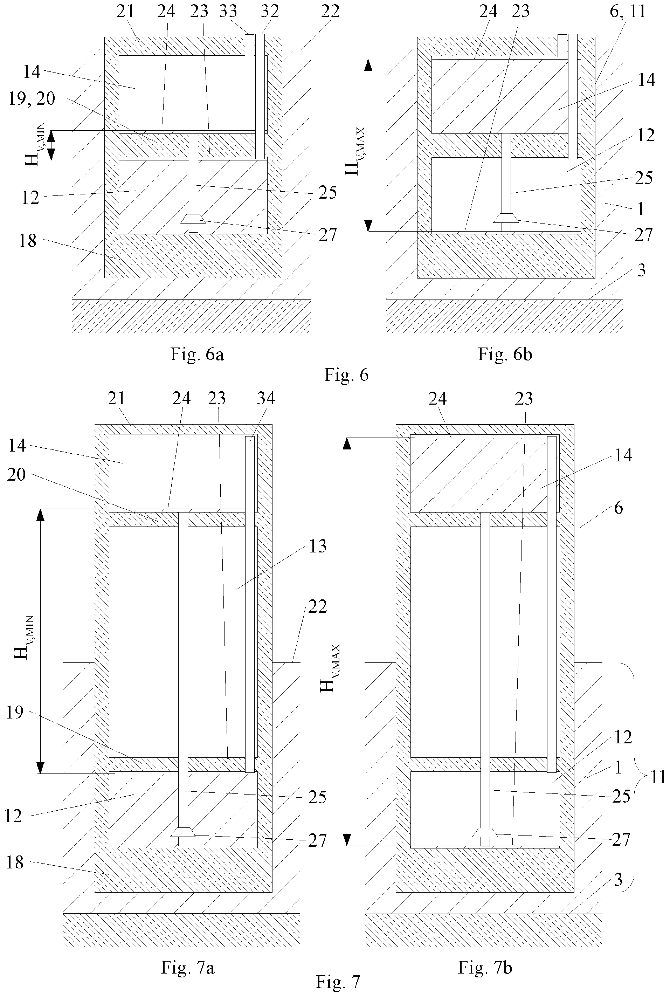

Figure 6 schematically shows a pumped-storage power plant with a floating reservoir with submerged lower and upper reservoirs. The floating reservoir **6** comprises a lower reservoir **12** and an upper reservoir **14,** which together form a float **11** and are almost fully submerged below the water level **22** of the base reservoir **1.**

In this reduced embodiment of the floating reservoir **6,** the upper bottom **19** of the lower reservoir **12** is identical to the lower bottom **20** of the upper reservoir **14.**

The lowest points of the upper reservoir **14** and the lower reservoir **12** are connected by a connecting pipeline **25,** which is connected to the power unit **27.** The air space above the water level **23** in the lower reservoir **12** is connected to the air by a vent pipeline **32**, and the air space above the water level **24** in the upper reservoir **14** is connected to the air by a vent pipeline **33**, so that the air pressure remains constant in both the lower reservoir **12** and the upper reservoir **14.** Here, the power unit **27** is difficult to access for maintenance. The upper reservoir **14** and the lower reservoir **12** are exposed to the external water pressure in the base reservoir **1** and therefore have thick walls.

In the diagram according to Figure 6a, water is transferred from the upper reservoir **14** to the lower reservoir **12** via the connecting pipeline **25** and the power unit **27,** the pumping height here being the smallest $H_{V,MIN}$. In the diagram of Figure 6b, the water is pumped from the lower reservoir **12** to the upper reservoir **14** via the connecting pipeline **25** and the power unit **27,** the pumping height here is the largest $H_{V,MAX}$.

Since the height distance between the lower reservoir **12** and the upper reservoir **14** is reduced to the smallest possible extent, the pumping height fluctuates considerably during the pumping cycle. The immersion depth of float **11** does not change during the pumping mode.

Figure 7 schematically shows a pumped-storage power plant with a floating reservoir with a submerged lower reservoir.

The floating reservoir **6** comprises a lower reservoir **12,** an intermediate piece **13** and an upper reservoir **14.**

The lower reservoir **12** together with the lower part of the intermediate piece **13** form the float space **11** and are submerged below the water level **22** of the base reservoir **1,** while the upper part of the intermediate piece **13** and the upper reservoir **14** of the floating reservoir **6** are arranged above the water level **22** of the base reservoir **1.**

The lowest points of the upper reservoir **14** and the lower reservoir **12** are connected by a connecting pipeline **25,** which is connected to the power unit **27.** The air space above the water level **24** in the upper reservoir **14** and the air space above the water level **23** in the lower reservoir **12** are connected to each other by a vent connecting pipeline **34**, so that the mass of air in the lower reservoir **12** and in the upper reservoir **14** remains constant, but its pressure changes when the air temperature changes. Here, the power unit **27** is difficult to access for maintenance. The lower reservoir **12** and the intermediate piece **13** are exposed to the external overpressure of the water in the base reservoir **1** and therefore have thick walls.

In the diagram according to Figure 7a, water is transferred from the upper reservoir **14** to the lower reservoir **12** via the connecting pipeline **25** and the power unit **27,** the pumping height here being the smallest $H_{V,MIN}$. In the diagram of Figure 7b, water is pumped from the lower reservoir **12** to the upper reservoir **14** via the connecting pipeline **25** and the power unit **27,** the pumping height here is the largest $H_{V,MAX}$.

Since the height distance between the lower reservoir **12** and the upper reservoir **14** is substantially higher than in the embodiment according to Figure 6 by adding the intermediate piece **13,** the pumping height does not fluctuate as much during the pumping cycle. The immersion depth of the float **11** does not change during the pumping mode.

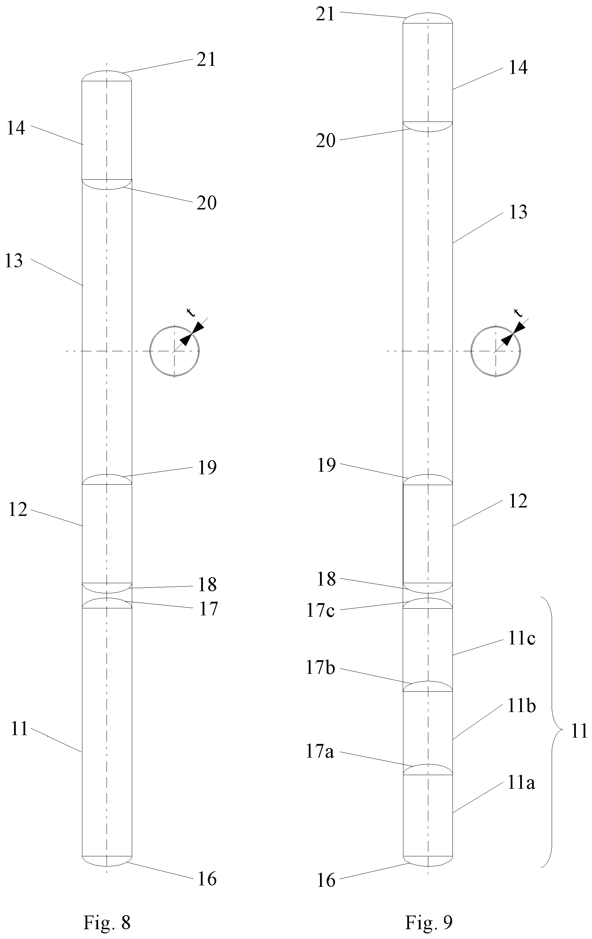

Figure 8 schematically shows a conventional one-piece floating reservoir module. The module comprises a lower reservoir **12** with a lower bottom **18** and an upper bottom **19,** an intermediate piece **13,** an upper reservoir **14** with a lower bottom **20** and an upper bottom **21,** and a one-piece float **11** with a lower bottom **16** and an upper bottom **17,** which are made of thin sheet metal and have a circular horizontal cross-section. The intermediate piece **13** has a wall thickness of t. The float **11** may be filled with gas at an overpressure equal to the maximum hydrostatic pressure of water to which the float **11** is subjected when fully submerged in the base reservoir **1.**

Figure 9 schematically shows a conventional floating reservoir module with a three-piece float. The module comprises an upper reservoir **14,** an intermediate piece **13,** a lower reservoir **12** and a three-piece float **11.**

The upper reservoir **14** comprises a lower bottom **20** and an upper bottom **21,** the lower reservoir **12** comprises a lower bottom **18** and an upper bottom **19,** the float **11** comprises a bottom segment **11a** provided with a lower bottom **16** and an upper bottom **17a,** followed by a middle segment **11b** provided with an upper bottom **17b** and followed by a top segment **11c** provided with an upper bottom **17c.**

The parts of the module are made of thin sheet metal and their horizontal cross-section is circular. The intermediate piece **13** has a wall thickness of t.

The individual segments **11a, 11b, 11c** of the float **11** may be filled with gas at an overpressure equal to the maximum hydrostatic pressure of water to which the segment **11a, 11b, 11c** of the float **11** is exposed when fully submerged in the base reservoir **1,** i. e. the deeper segment **11a, 11b, 11c** of the float **11** are filled with gas at a higher overpressure.

The upper bottom **17a** acts as a pressure barrier between the bottom segment **11a** and the middle segment **11b,** and the upper bottom **17b** acts as a pressure barrier between the middle segment **11b** and the top segment **11c.**

This three-piece float **11** therefore has a smaller mass and the intermediate piece **13** can therefore be higher than the module in Figure 8 even with the same height and therefore buoyancy of the float **11.**

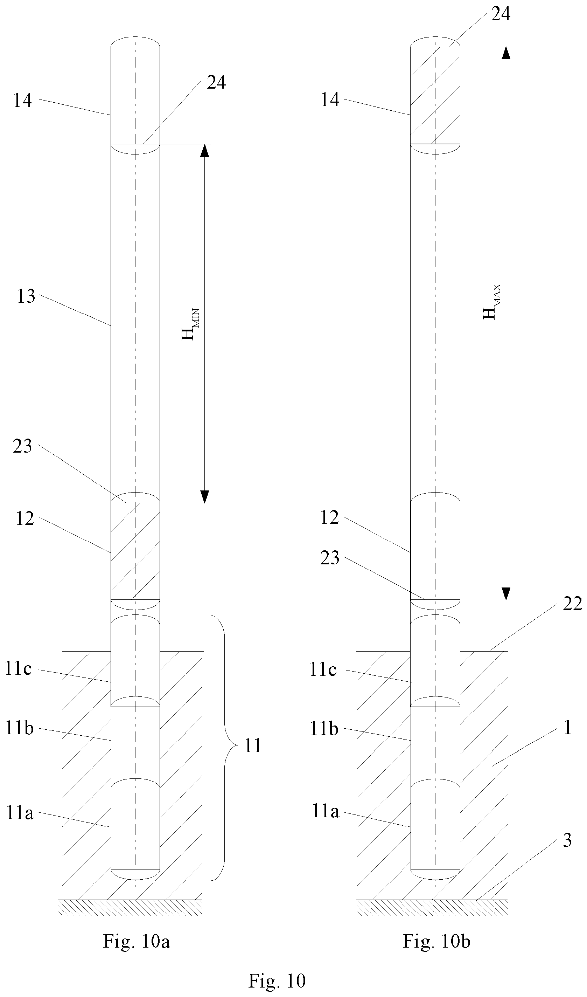

Fig. 10 schematically shows the float of a conventional three-piece floating reservoir module. In the module, only the float **11** or its three segments **11a, 11b, 11c** are submerged. The intermediate piece **13** and the two reservoirs **12, 14** are arranged above the water level **22** of the base reservoir **1.**

In the diagram of Fig. 10a, water is transferred from the upper reservoir **14** to the lower reservoir **12,** the pumping height here being the smallest H$_{V,MIN}$. In the diagram of Figure 10b, water is pumped from the lower reservoir **12** to the upper reservoir **14,** the pumping height is the largest H$_{V,MAX}$. The immersion depth of the float **11,** or its three segments **11a, 11b, 11c,** does not change during pumping, only the height level of the water levels **23, 24** in the lower reservoir **12** and in the upper reservoir **14** changes.

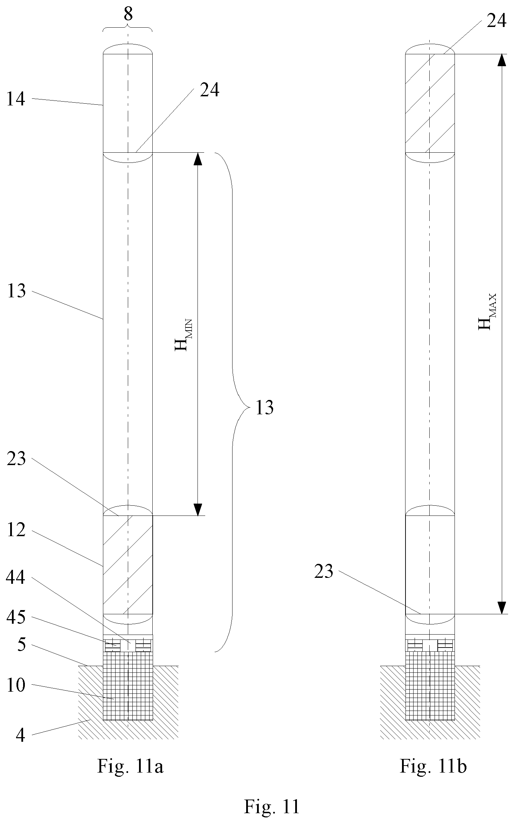

Figure 11 schematically shows a conventional pumped-storage power plant module with stationary reservoirs.

A base **10** is constructed in the bedrock **4** on which an intermediate piece **13** is arranged, an upper reservoir **14** is arranged on the intermediate piece **13** and a lower reservoir **12** is arranged at the bottom of the intermediate piece. Thus, the intermediate piece **13** serves to support both the upper reservoir **14** and the lower reservoir **12.**

In the diagram of Fig. 11a, water is transferred from the upper reservoir **14** to the lower reservoir **12,** the pumping height here being the smallest H$_{V,MIN}$. In the diagram of Figure 11b, the water is pumped from the lower reservoir **12** to the upper reservoir **14,** the pumping height here is the largest H$_{V,MAX}$. The load on the base **10** does not change during pumping.

A rectification space **44** is formed in the lower portion of the intermediate piece **13** for rectifying the position of the module **8** on the base **10,** by providing a horizontal stiffener and mounting holes in the walls of the intermediate piece **13** below the lower reservoir **12.**

Pneumatic lifting bags **45** are inserted through the mounting holes into the rectification space **44** between the horizontal stiffener and the base **10,** and by filling air into the lifting bags **45,** the module **8** can be lifted. A pad of a thickness determined by the measurement results can be inserted into the resulting gap between the module **8** and the base **10,** and by releasing the air from the lifting bags **45,** the module **8** can be lowered back onto the base **10** with the pad.

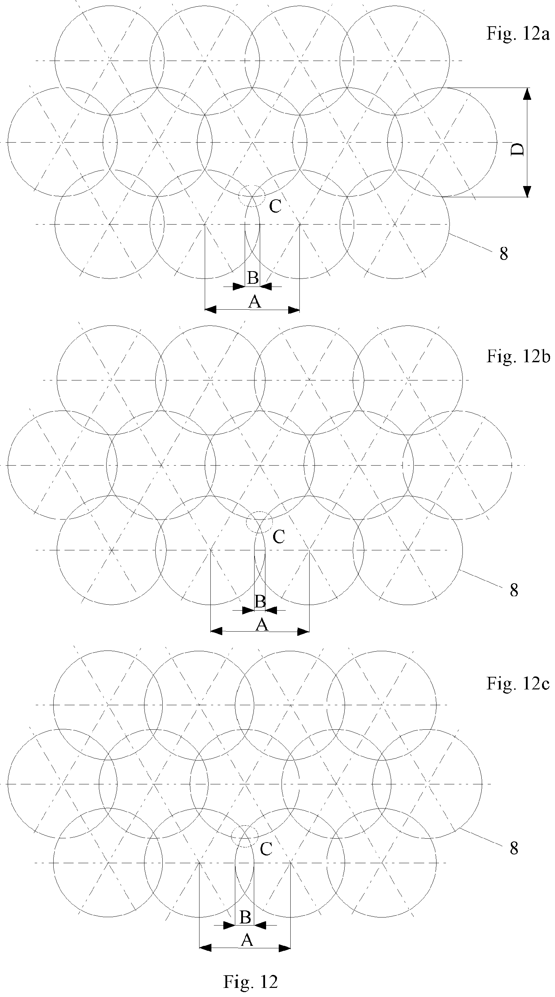

Fig. 12 schematically shows an array of interconnected pumped-storage modules.

The array **7** of modules contains modules **8** with a circular horizontal cross-section, which are connected in a triangle, where the spacing A of the modules **8** is smaller than their diameter D, therefore they overlap in plan with the overlap B.

In Figure 12a, it can be seen from detail C that the spacing A of the modules **8** is chosen such that the walls of all three modules **8** intersect at one point.

In Figure 12b, it can be seen from detail C that the spacing A of the modules **8** is larger than in variant 1, therefore only two walls of the modules **8** intersect at any one point. The overlap B of the modules **8** has decreased.

In Figure 12c, it can be seen from detail C that the spacing A of the modules **8** is smaller than in variant 1, so that again only two walls of the modules **8** intersect at any one point. The overlap B of the modules **8** has increased.

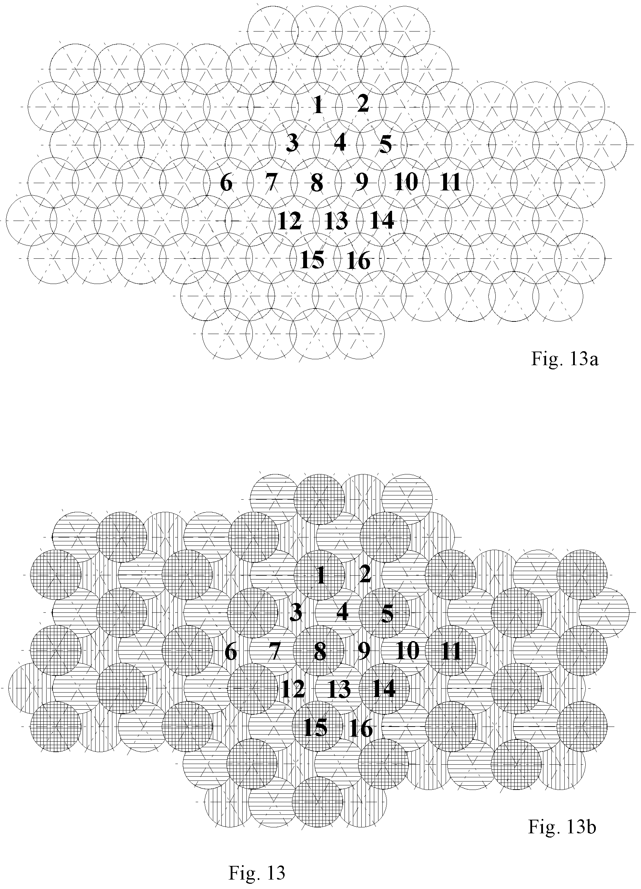

Figure 13 schematically shows the reservoirs in an array of interconnected modules.

Figure 13a schematically shows the reservoirs with all reservoir walls shown.

In order to avoid the need to provide each space between reservoirs with a separate tap to the connecting pipeline for the purpose of filling or draining the reservoirs, the spaces between reservoirs created by the interconnection of the reservoirs are connected to selected spaces within the reservoirs.

Fig. 13b schematically shows the reservoirs showing the three connection options:

- The fully circular reservoirs are marked with cross-hatching and the numbers 1, 5, 8, 11, 14 and 15.
- The reservoirs are circular in shape with three bulging arches and are marked with horizontal hatching and the numbers 4, 7, 10 and 13.
- The shape of the reservoirs is marked with vertical hatching and the numbers 2, 3, 6, 9, 12 and 16.

However, due to the circular shape of the reservoirs, it is necessary to follow such a procedure when individually draining or filling the reservoirs, e. g. due to their failure, that all reservoirs are loaded only by internal overpressure and that the arched walls of the reservoirs are not loaded by external overpressure.

No adjacent reservoirs need to be filled prior to the individual filling of reservoir No. 8 with cross-hatching.

Reservoirs No. 1, 5 and 8 with cross hatching must be filled before filling reservoir No. 4 with horizontal hatching individually.

Prior to the individual filling of reservoir No. 9 with vertical hatching, it is necessary to fill reservoirs No. 1, 5, 8, 11, 14 and 15 with cross hatching and then reservoirs No. 4, 10 and 13 with horizontal hatching.

An inversion procedure must be followed prior to individual reservoir draining.

No adjacent reservoirs need to be drained prior to the individual discharge of reservoir No. 9 with vertical hatching.

Prior to the individual discharge of reservoir No. 4 with horizontal hatching, it is necessary to discharge reservoirs No. 2, 3 and 9 with vertical hatching.

Prior to the individual discharge of reservoir No. 8 with cross-hatching, reservoirs No. 2, 3, 6, 9, 12 and 16 must be discharged, followed by reservoirs No. 4, 7 and 13 with horizontal hatching.

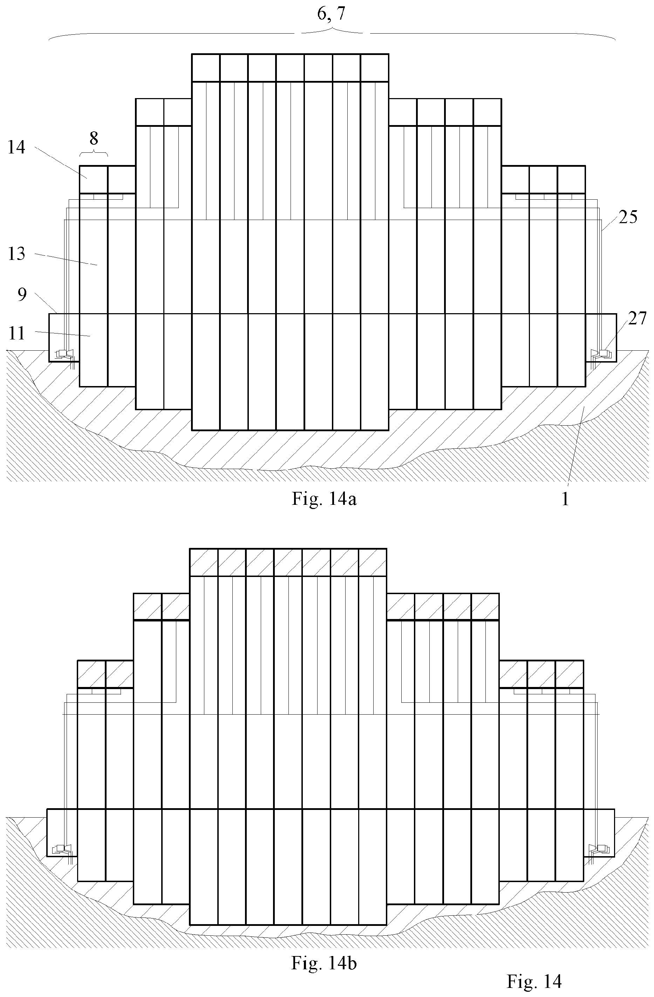

Figure 14 schematically shows a pumped-storage power plant with the upper reservoir in a floating reservoir with different module heights. The floating reservoir **6** is arranged in the base reservoir **1** and comprises an array **7** of modules with different heights.

Modules **8** are equipped with

- floats **11** with different immersion depths according to the depth profile of the base reservoir **1,**

- intermediate pieces **13** with correspondingly different heights and
- the upper reservoirs **14** having the same height for all modules **8** since the floating reservoir **6** moves as a unit during pumping and has a uniform operating stroke for all modules **8.**

For each group of modules **8** of the same height, there is a corresponding group of power units **27** and connecting pipelines **25** of the same pumping height.

The power units **27** are housed in energy modules **9** which are attached to floats **11** of modules **8.**

The filling and emptying of all upper reservoirs **14** can be done simultaneously and proportionally to minimize shear stress in the stiffeners, especially between modules **8** of different heights.

Figure 14a shows the floating reservoir **6** with the empty upper reservoirs **14** in the upper operating position.

Figure 14b shows the floating reservoir **6** with the upper reservoirs **14** filled in the lower operating position.

The floating reservoir **6** uses almost the entire width and depth, i. e. almost the entire volume, of the base reservoir **1.**

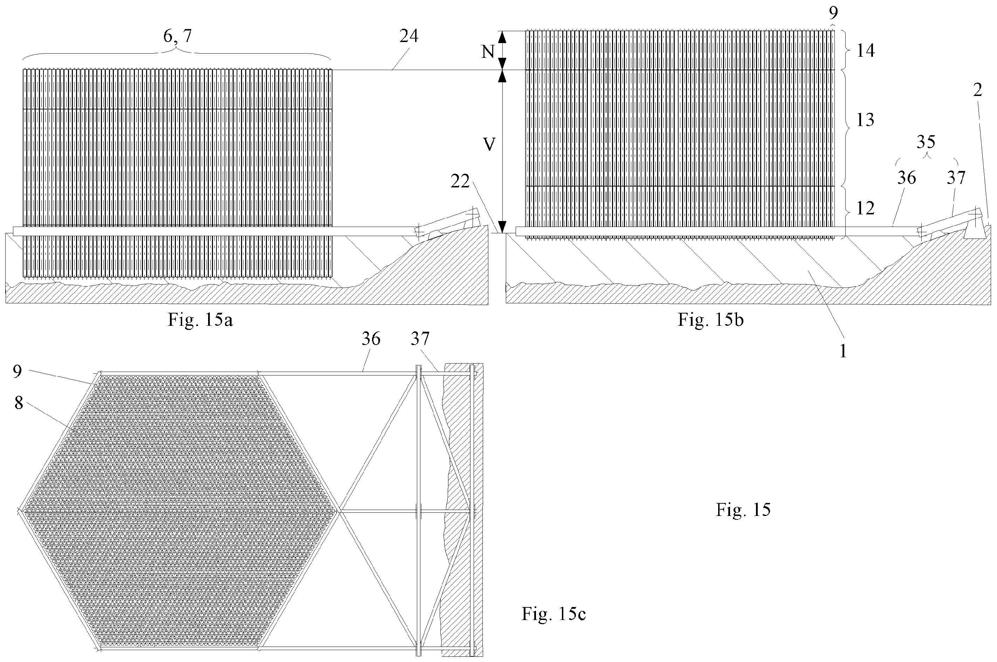

Figure 15 schematically shows the pumped-storage power plant with the upper reservoir in a floating reservoir.

Figures 15a and 15b show an outline of the pumped-storage power plant, and Figure 15c shows the floor plan of the pumped-storage power plant.

The floating reservoir **6** is arranged in the base reservoir **1** and comprises an array **7** of modules with a circular cross-section, which are connected to each other by flat stiffeners in triangular formations. The module **8** of the floating reservoir **6** has three basic parts:

- upper part - upper reservoir **14,**
- middle part - intermediate piece **13,**
- lower part - float **11.**

Energy modules **9** are distributed around the perimeter of the array **7** of modules.

The width to height ratio of the floating reservoir **6** is approximately 1,5 to ensure its stability against overturning.

The floating reservoir **6** is stabilized in the base reservoir **1** against horizontal movement by a guide frame **35** having a floating part **36a** and a mooring part **37** which are connected to each other in a hinged manner. The mooring part **37** is also articulated in the base on the bank **2** of the base reservoir **1.**

By consuming electrical energy equivalent to $E_e$ = -V*N from the grid, the positional energy of the water is stored by pumping it from the base reservoir **1** through the connecting pipeline by means of the power sets to the upper reservoirs **14.** The floating reservoir **6** sinks, with its floats **11** being immersed in the base reservoir **1.**

Figure 15a shows the floating reservoir **6** in the lower operating position.

By discharging the water from the upper reservoirs **14** through the connecting pipeline via the power units into the base reservoir **1**, electrical energy equivalent to $E_e$ = V*N is produced by consuming the positional energy of the water and supplied to the grid. The floating reservoir **6** is raised, with its floats **11** emerging from the base reservoir **1.**

Figure 15b shows the floating reservoir **6** in the upper operating position.

If the outer horizontal cross-section of the floats **11** is equal to the inner horizontal cross-section of the upper reservoirs **14,** then when water is pumped between the base reservoir **1** and the floating reservoir **6,** neither the water level **22** in the base reservoir **1** nor the height difference V between the water level **24** in the upper reservoir **14** and the water level **22** in the base reservoir **1** in the upper or lower operating position changes.

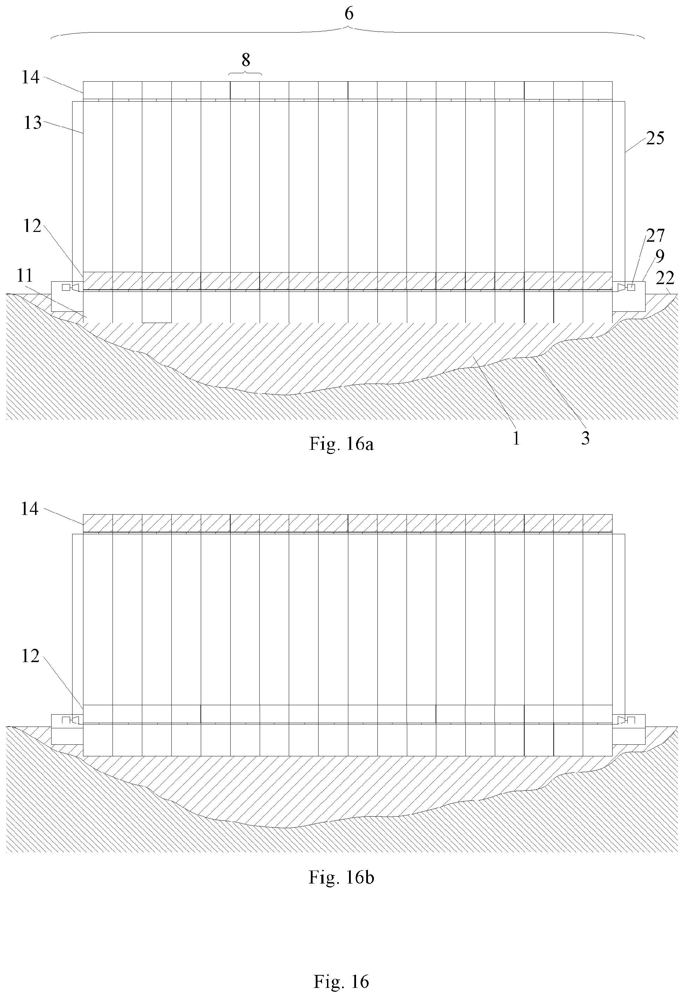

Figure 16 schematically shows a pumped-storage power plant with a single-level floating reservoir. The floating reservoir **6** contains a set of modules **8** of the same height and with the same immersion depth. In the floating reservoir **6,** only the floats **11** are submerged in the base reservoir **1.** The intermediate pieces **13,** the upper reservoirs **14** and the lower reservoirs **12** are arranged above the water level **22** in the base reservoir **1.** The floating reservoir **6** contains almost the entire width of the base reservoir **1** but has only a limited immersion depth corresponding to the used depth level of the base reservoir **1.** The floating reservoir **6** also contains power units **27** and a connecting pipeline **25** connecting the upper reservoirs **14** and the lower reservoirs **12.** The power units **27** are built into energy modules **9** attached to modules **8** with reservoirs **12, 14** around the perimeter of the floating reservoir **6.**

In the diagram of Figure 16a, water is transferred from the upper reservoirs **14** to the lower reservoirs **12.** In the diagram of Figure 16b, water is pumped from the lower reservoirs **12** to the upper reservoirs **14.**

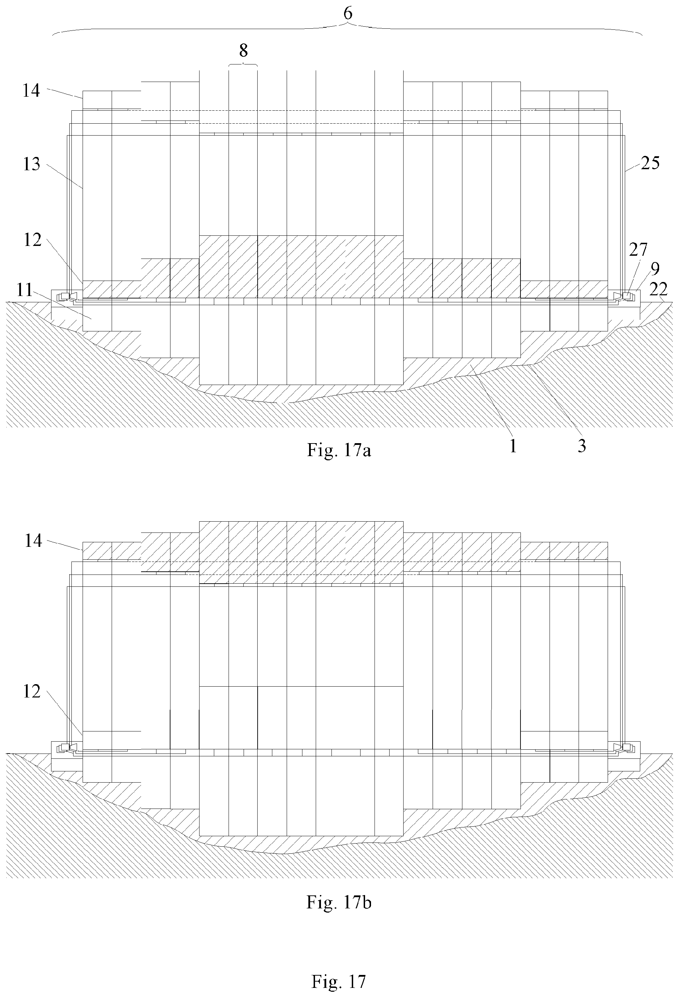

Figure 17 schematically shows a pumped-storage power plant with a three-level floating reservoir and a three-level upper platform. The floating reservoir comprises three sets of modules **8** having the same ratio of the height of the lower and upper reservoirs **12, 14** to the usable depth, so that each set of modules **8** has a different height of the lower and upper reservoirs **12, 14,** intermediate pieces **13** and floats **11,** i. e. a different immersion depth. In the case of the floating reservoir **6,** only the floats **11** are submerged. The intermediate pieces **13,** the lower reservoirs **12** and the upper reservoirs **14** are arranged above the water level **22** of the base reservoir **1.** The floating reservoir **6** contains almost the entire width of the base reservoir **1** and also utilizes almost the entire depth of the base reservoir **1,** since the inner sets of modules **8** extend into the greater depth levels of the base reservoir **1.** This pumped-storage power plant therefore has a greater stored energy capacity than the single-level pumped-storage power plant of Figure 16. The floating reservoir 6 also comprises three sets of power units **27** and a connecting pipeline **25** which connects the lower reservoirs **12** and upper reservoirs **14** of the respective sets of modules **8.** The power units **27** are built into energy modules 9 attached to the modules **8** with the lower and upper reservoirs **12, 14** around the perimeter of the floating reservoir **6**.

In the diagram of Figure 17a, water is transferred from the upper reservoirs **14** to the lower reservoirs **12.** In the diagram of Figure 17b, water is pumped from the lower reservoirs **12** to the upper reservoirs **14.**

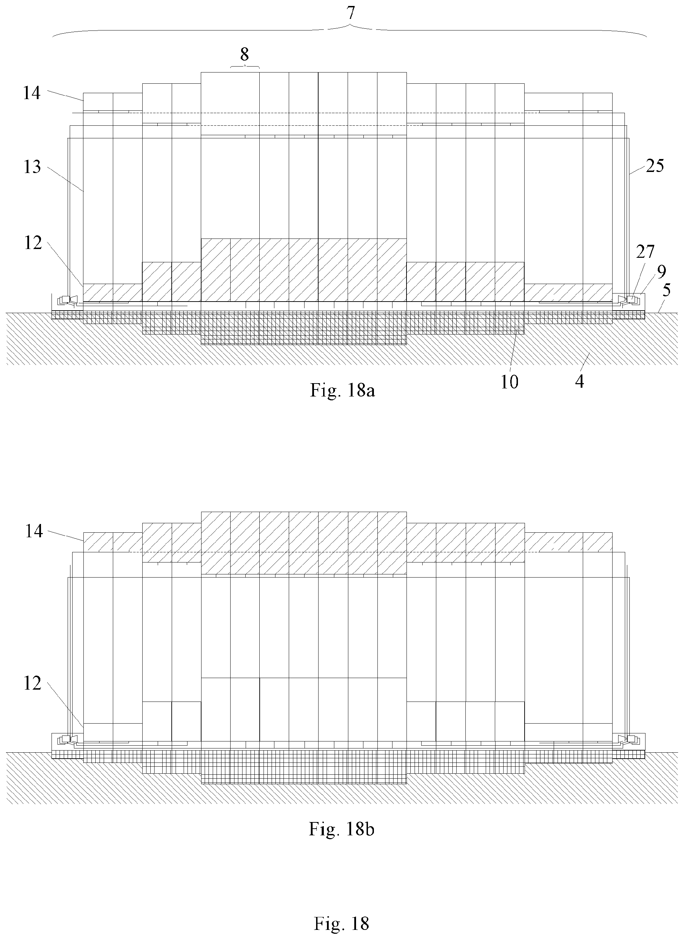

Figure 18 schematically shows a pumped-storage power plant with stationary reservoirs with a three-level module array and a three-level upper platform.

The land on which the pumped-storage power plant is built has three levels of bedrock **4** bearing capacity. The different bedrock **4** bearing capacity is shown by the different base **10** height.

The array **7** of modules comprises three groups of modules **8** having the same ratio of the height of the lower and upper reservoirs **12, 14** to the bearing capacity of the bedrock **4,** so that each group of modules **8** has a different height of the lower and upper reservoirs **12, 14,** the intermediate pieces **13** and the bases **10.**

The array **7** of modules takes full advantage of the bearing capacity of bedrock **4** on the entire site. Therefore, this pumped-storage power plant has a greater stored energy capacity than a single level pumped-storage power plant that would be built to the lowest bedrock bearing capacity on the property.

The pumped-storage power plant also comprises three groups of power units **27** and a connecting pipeline **25** connecting the lower reservoirs **12** and the upper reservoirs **14** of the respective group of modules **8.** The power units **27** are built into energy modules **9** attached to the modules **8** with the lower and upper reservoirs **12, 14** around the perimeter of the array **7** of modules.

In the diagram of Figure 18a, water is transferred from the upper reservoirs **14** to the lower reservoirs **12.** In the diagram of Figure 18b, water is pumped from the lower reservoirs **12** to the upper reservoirs **14.**

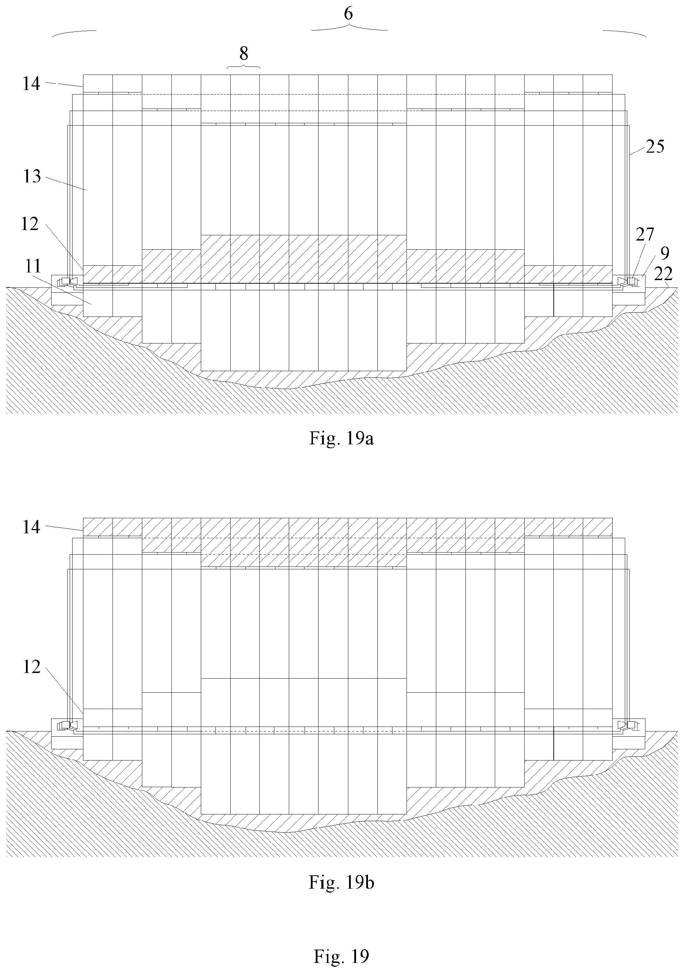

Figure 19 schematically shows a pumped-storage power plant with a three-level floating reservoir and a levelled upper platform. The floating reservoir **6** comprises, similar to Figure 17, three sets of modules **8,** where each set of modules **8** has a different height of the lower and upper reservoirs **12, 14,** intermediate pieces **13** and floats **11,** i. e. a different immersion depth, but the ratio of the height of the lower and upper reservoirs **12, 14** to the usable depth is adjusted in these sets so that the upper edges of the upper reservoirs **14** form a continuous plane.

In the diagram of Figure 19a, water is transferred from the upper reservoirs **14** to the lower reservoirs **12.** In the diagram of Figure 19b, water is pumped from the lower reservoirs **12** to the upper reservoirs **14.**

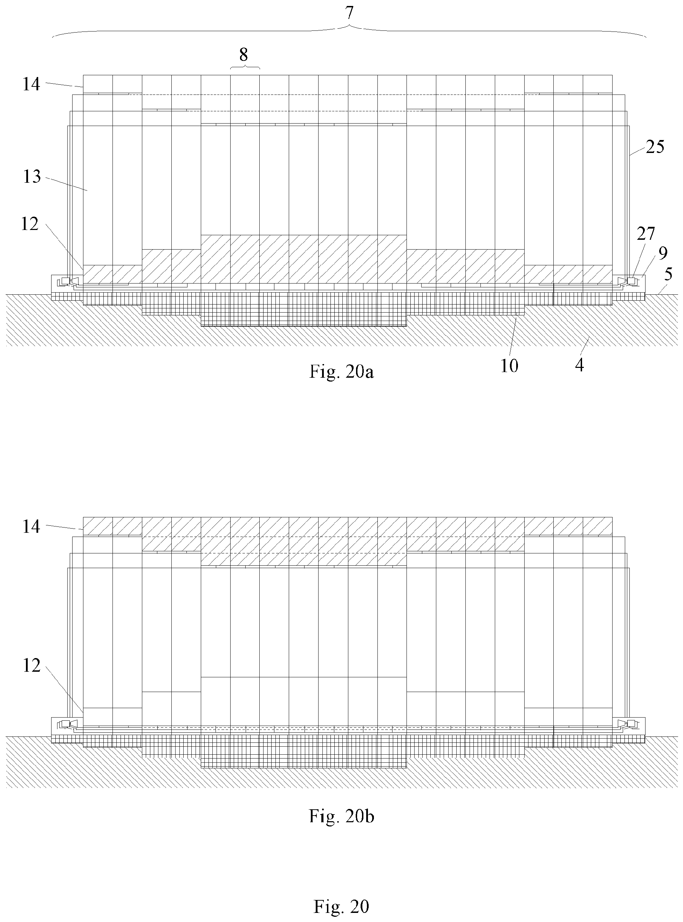

Figure 20 schematically shows a pumped-storage power plant with stationary reservoirs with a three-level array of modules and a balanced upper platform.

The land on which the pumped-storage power plant is built has three levels of bedrock **4** bearing capacity.

The different bearing capacity of the bedrock **4** is shown by the different height of the bases **10.**

The array **7** of modules comprises, similar to Figure 4, three groups of modules 8, where each group of modules **8** has different heights of the lower and upper reservoirs **12, 14,** intermediate pieces **13** and bases **10,** but the ratio of the height of the lower and upper reservoirs **12, 14** to the bearing capacity of the substrate **4** is adjusted in these groups so that the upper edges of the upper reservoirs **14** form a continuous plane.

In the diagram of Figure 20a, water is transferred from the upper reservoirs **14** to the lower reservoirs **12.** In the diagram of Figure 20b, water is pumped from the lower reservoirs **12** to the upper reservoirs **14.**

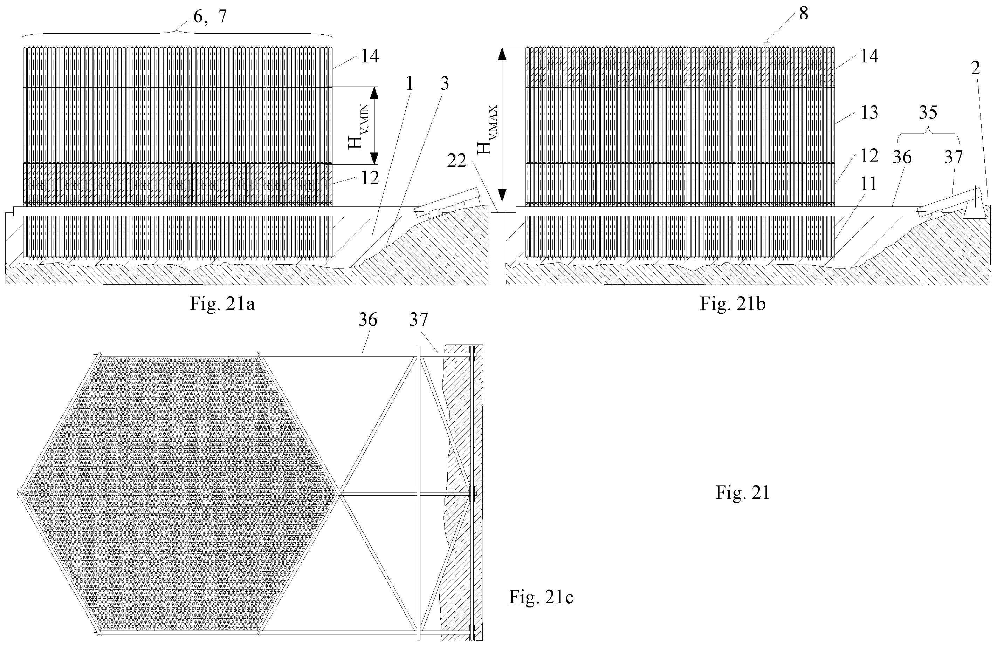

Figure 21 schematically shows a pumped-storage power plant with a single-level floating reservoir and a guide frame. The floating reservoir **6** is made up of an array **7** of modules. The modules **8** comprise floats **11,** lower reservoirs **12,** upper reservoirs **14** and intermediate pieces **13** and are stabilized against horizontal movement in the base reservoir **1** by a guide frame **36** having a floating part **36** and a mooring part **37** which are articulated with each other. The mooring part **37** is also articulated in the base on the bank **2** of the base reservoir **1.**

In the diagram of Figure 21a, water is transferred from the upper reservoirs **14** to the lower reservoirs **12.** In the diagram of Figure 21b, water is pumped from the lower reservoirs **12** to the upper reservoirs **14.** In the diagrams according to Figure 21a, Figure 21b is an outline of the power plant, in the diagram according to Figure 21c is a plan view of the power plant.

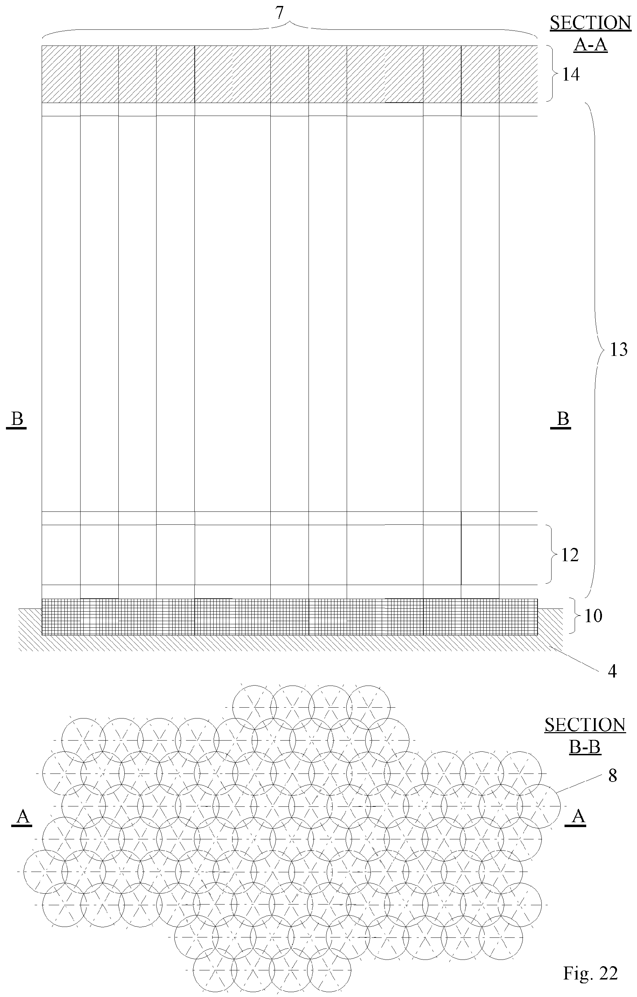

Fig. 22 schematically shows a planar array of interconnected modules.

Section A-A shows an array **7** of modules interconnected in a pumped-storage power plant built on a flat bedrock **4.**

Each module **8** in the array **7** of modules comprises an upper reservoir **14,** an intermediate piece **13** and a lower reservoir **12.** Below and above the lower reservoirs **12** and below the upper reservoirs **14** is a service platform area.

For a pumped-storage power plant with stationary reservoirs **12, 14,** the supporting element is the base **10,** which is carried by the bearing capacity of the bedrock **4.**

Section B-B in the lower part of the figure is made in the region of the intermediate piece **13** and shows the interlacing of the modules **8,** the spacing of which is smaller than their diameter.

The reservoirs **12, 14** and the power units can be connected arbitrarily via the connecting pipelines in the module array **7** since all modules **8** have the same height and thus the pumping height is the same for all modules **8.**

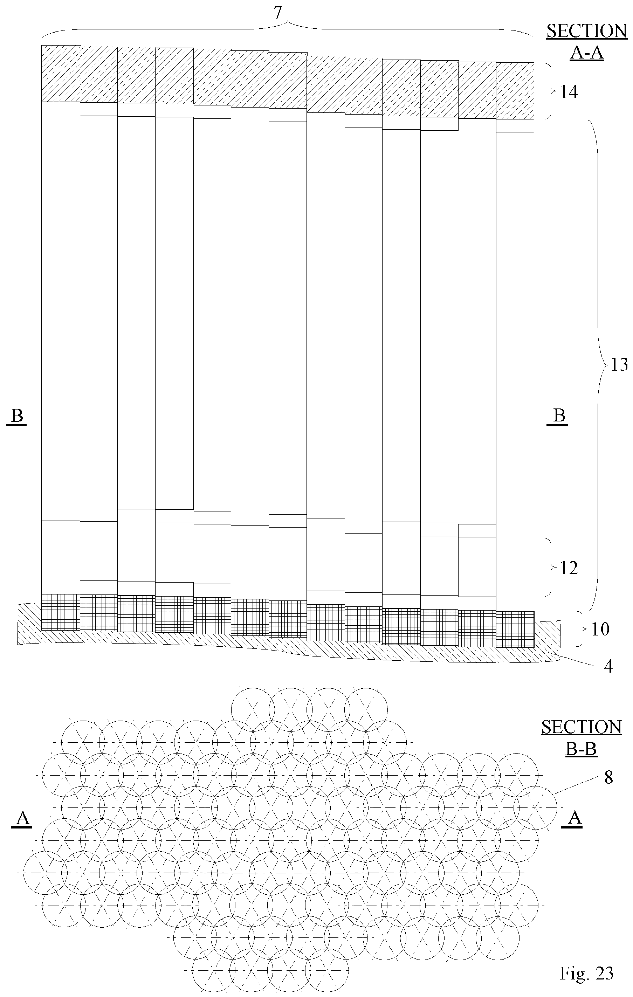

Figure 23 schematically shows an array of interconnected modules on a wave-like substrate.

The schematic is essentially the same as in Figure 22, differing only in section A-A, which shows that the array **7** of modules interconnected in the pumped-storage power plant is built on wave-like bedrock **4.**

In this array **7** of modules, only the reservoirs **12, 14** and the power units can be connected via the connecting pipeline with the same height of the modules **8,** i. e. along the contours, so that they have the same pumping height.

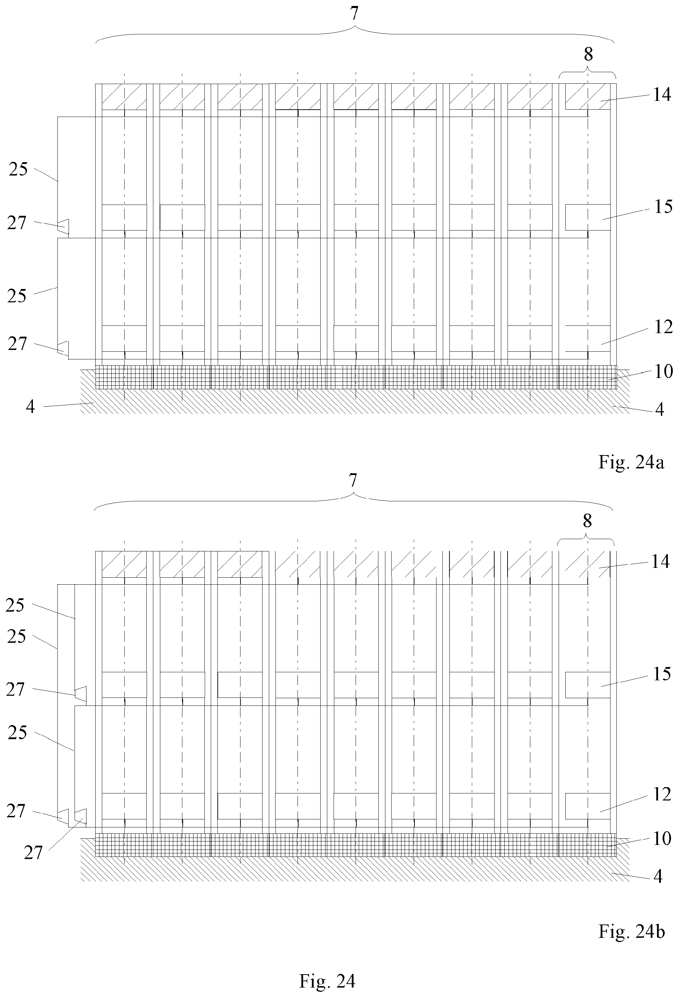

Figure 24 schematically shows a pumped-storage power plant with additional reservoirs in an array of modules with stationary reservoirs. The array **7** of modules connected by vertical stiffeners is supported on bases **10,** which are placed on the bedrock **4.**

The pumped-storage power plant comprises an additional reservoir **15** arranged between the lower reservoir **12** and the upper reservoir **14** to form a cascade of reservoirs **12, 14, 15** with two stages.

Thus, the first stage of the cascade of reservoirs **12, 14, 15** is formed by the lower reservoir **12** and the additional reservoir **15,** the second stage of the cascade of reservoirs **12, 14, 15** is formed by the additional reservoir **15** and the upper reservoir **14.**

The pumped-storage power plant in Figure 24a comprises separate power units **27** for both pump and the turbine mode for each stage of the cascade.

The height difference in water levels between reservoirs **12, 14, 15** in each cascade stage is half of the total height difference between the upper reservoir **14** and the lower reservoir **12** during pumping and the turbine mode.

The pumped-storage power plant in Figure 24b comprises a power unit **27** for the turbine mode common to both stages of the cascade.

During the turbine mode, water is discharged from the upper reservoir **14** into the lower reservoir **12.**

The power unit **27** and the vertical connecting pipeline **25** for the turbine mode shall be rated for hydrostatic pressure for the entire height difference.

The pumped-storage power plant also contains a separate power unit **27** for the pumping mode to both the first and second stages of the cascade.

In the pumping mode, water is pumped from the lower reservoir **12** to the additional reservoir **15** in the first stage of the cascade and from the additional reservoir **15** to the upper reservoir **14** in the second stage of the cascade.

The power unit **27** and the vertical connecting pipeline **25** for the pumping mode shall be sized for the hydrostatic pressure for the height difference between reservoirs **12, 14, 15** of the cascade stage.

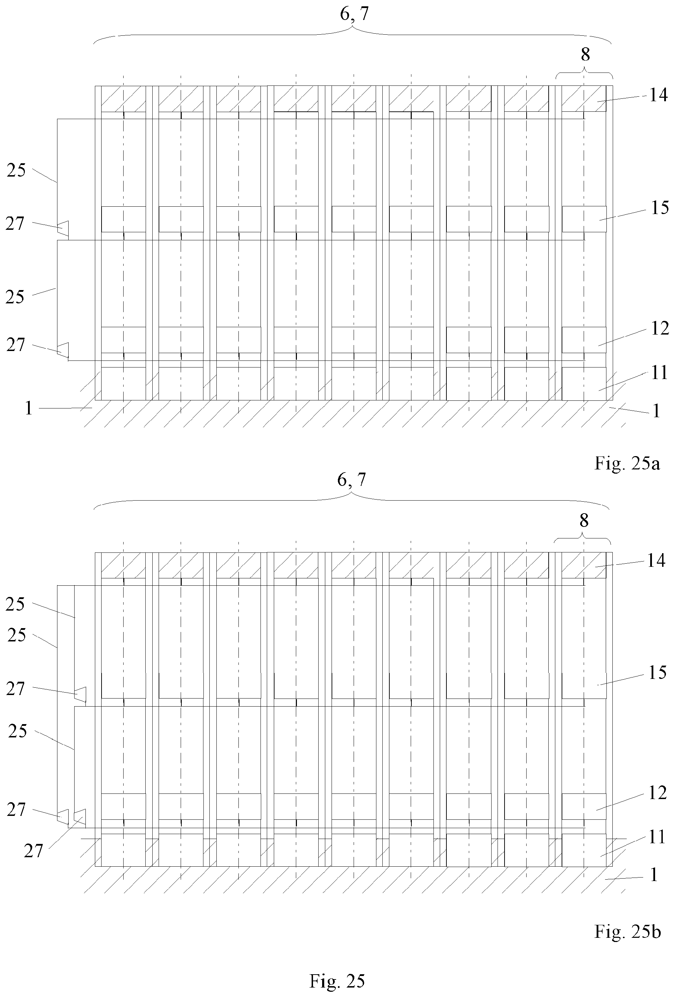

Figure 25 schematically shows a pumped-storage power plant with additional reservoirs in a floating reservoir module array. The array **7** of modules connected by vertical stiffeners is a floating reservoir **6,** is equipped with floats **11** and is arranged in the base reservoir **1.** In other parts it is the same as in Figure 24.

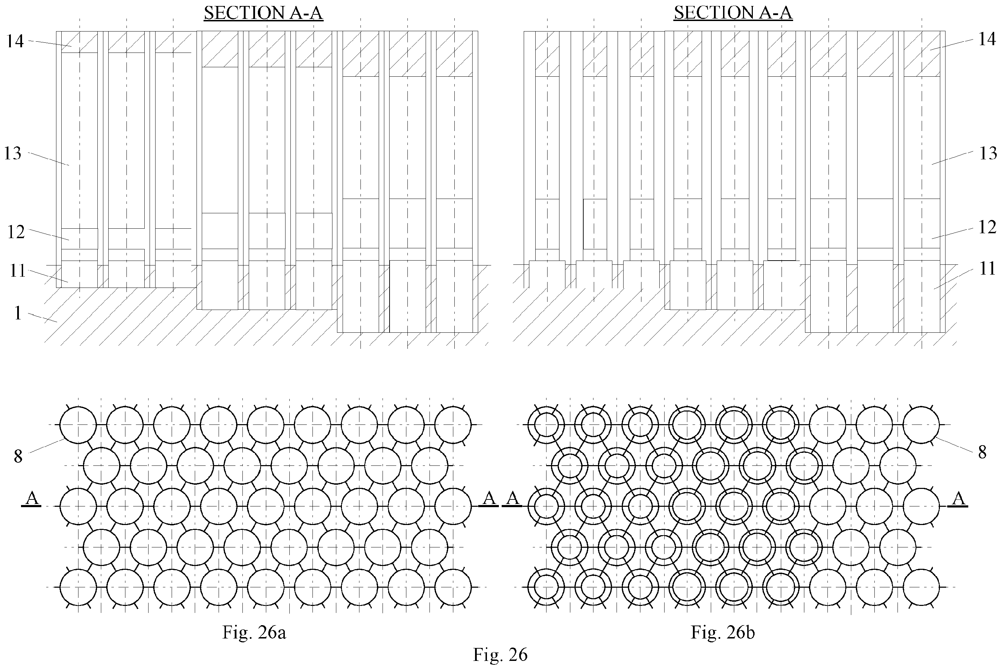

Figure 26 schematically shows two variants of a pumped-storage power plant with a floating reservoir with an array of modules of different diameters.

The spacing of modules **8** is larger than their diameter and they are connected to each other by vertical stiffeners.

The module **8** array contains three groups of **8** modules with different depth levels.

The top of Figures 26a, 26b show vertical sections A-A of the conventional array of modules **8,** the floor plans of which are shown at the bottom of the figures.

Fig. 26a schematically shows an array of modules **8** in which all modules **8** have the same diameter, but the heights of the lower reservoirs **12** and upper reservoirs **14** are proportional to the depth of immersion depth of the floats **11.**

Fig. 26b schematically shows a module **8** array with different diameters of lower reservoirs **12** and upper reservoirs **14.**

In all of the modules **8** of this module **8** array, the floats **11** have the same diameter because they use all of the buoyancy available at a given depth level.

The height of the upper reservoirs **14,** lower reservoirs **12** and intermediate pieces **13** are the same in all modules **8** of all depth levels, but their horizontal diameter varies, with the ratio of the horizontal cross-section of the upper reservoirs **14** of modules **8** of a given depth level to the horizontal cross-section of the upper reservoirs **14** of modules **8** of the greatest depth level is equal to the ratio of the immersion depth of floats **11** of modules **8** of a particular depth level to the immersion depth of floats **11** of modules **8** of the greatest depth level.

The module **8** array comprises, in all modules **8** of all depth levels, upper reservoirs **14** of uniform height, lower reservoirs **12** of uniform height, and intermediate pieces **13** also of uniform height.

Therefore, all of the upper reservoirs **14** throughout the pumped-storage power plant may be connected by a common connecting pipeline **25** to all of the lower reservoirs **12.**

The pumping with proportional filling of all reservoirs **12, 14,** regardless of their diameter, can be carried out with any power unit.

Since the diameter of the floats **11** and the spacing between the modules **8** remain unchanged, the stiffeners between the reservoirs **12, 14** or between the smaller diameter intermediate pieces **13** must be of greater width and thickness to bridge the distance between the modules **8** and to ensure the stiffness of the interconnection of the modules **8.**

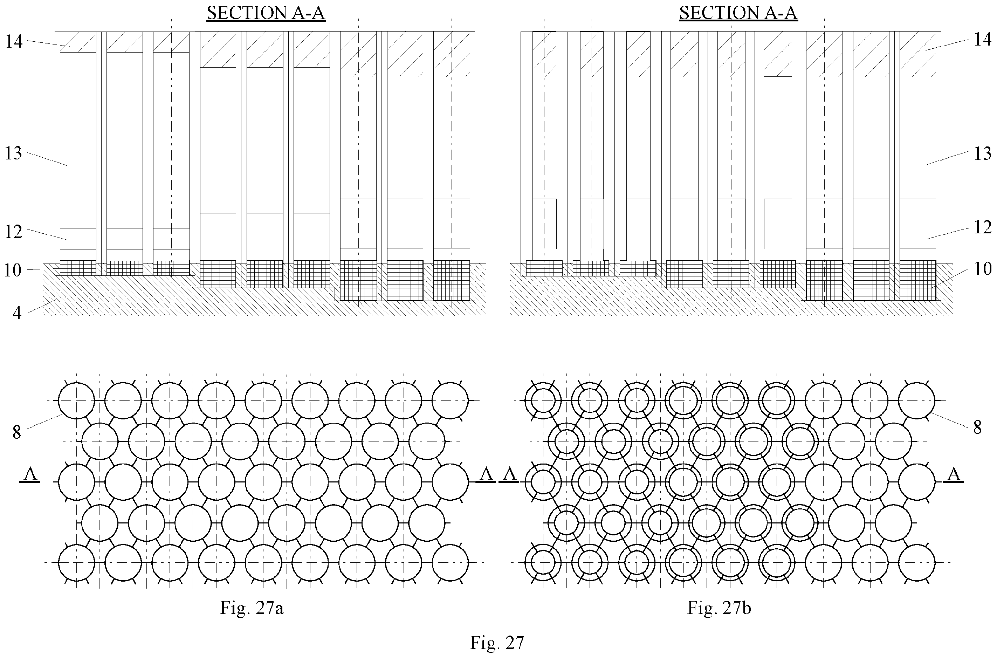

Figure 27 schematically shows two variants of a pumped-storage power plant with stationary reservoirs with an array of modules with different diameters.

In a module **8** array, the modules **8** are connected to each other by vertical stiffeners.

The spacing of modules **8** is larger than their diameter.

The top of Figures 27a, 27b show vertical sections A-A of the module arrays, the floor plans of which are at the bottom of the figures.

The module **8** array contains three groups of modules **8** with different bedrock load carrying capacities. The different bearing capacity of the bedrock **4** is shown by the different height of the bases **10**.

Figure 27a schematically shows an array of modules **8** in which all modules **8** have the same diameter, but the heights of the lower reservoirs **12** and upper reservoirs **14** are proportional to the bearing capacity of the bedrock **4**. The average pumping height is different for each group of modules **8**.

Fig. 27b schematically shows a module **8** array with different diameters of lower reservoirs **12** and upper reservoirs **14**.

In all of the modules **8** of this array of modules **8**, the bases **10** have the same diameter because they utilize all of the bearing capacity of the bedrock **4** that is available in that area of the site.

The height of the upper reservoirs **14**, lower reservoirs **12** and intermediate pieces **13** is the same in all modules **8** of all bedrock bearing capacities **4**, but their horizontal diameter varies, with the ratio of the horizontal cross-section of the upper reservoirs **14** of the modules **8** of a certain bedrock **4** bearing capacity to the horizontal cross-section of the upper reservoirs **14** of the modules **8** of the highest bedrock **4** bearing capacity is equal to the ratio of a certain bearing capacity of bedrock **4** to the highest bearing capacity of bedrock **4**.

The array of modules **8** comprises, in all modules **8** of all substrate load capacities, **4** upper reservoirs **14** of uniform height, lower reservoirs **12** of uniform height and intermediate pieces **13** also of uniform height and therefore of uniform pumping height.

Therefore, all of the upper reservoirs **14** throughout the pumped-storage power plant may be connected by a common connecting pipeline **25** to all of the lower reservoirs **12**.

The pumping with proportional filling of all reservoirs **12**, **14**, regardless of their diameter, can be carried out with any power unit.

Since the diameter of the floats **11** and the spacing between the modules **8** remain unchanged, the stiffeners between the reservoirs **12**, **14** or between the smaller diameter intermediate pieces **13** must be of greater width and thickness to bridge the distance between the modules **8** and to ensure the stiffness of the interconnection of the modules **8**.

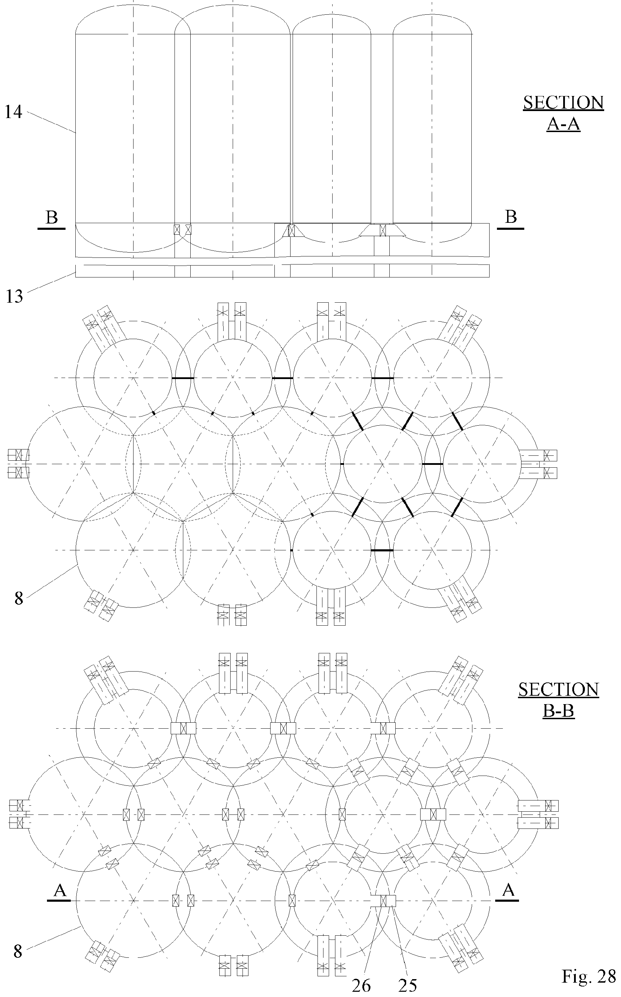

Figure 28 schematically shows an array of interconnected modules with a flow connecting pipeline.

The spacing of modules **8** is smaller than their diameter.

The upper diagram is a vertical section A-A of the array of **8** modules according to the lower diagram.

The middle diagram is a plan view of the module **8** array of the upper diagram. The lower diagram is a horizontal section B-B of the module **8** array according to the upper diagram.

In all modules **8** of this module **8** array, the intermediate pieces **13** have the same diameter.

The height of the upper reservoirs **14** is the same in all modules **8** of all bedrock load capacities, but their diameter varies.

The upper reservoirs **14** are connected to each other by a horizontal flow connecting pipeline **25** arranged in the bottoms of the upper reservoirs **14**.

Here, the upper reservoirs **14** are connected to the power unit in series, one after the other, so that they are filled and drained sequentially.

The flow connection line **25** is provided with caps **26** to regulate the filling of each upper reservoir **14** by means of the caps **26** to the adjacent upper reservoirs **14**.

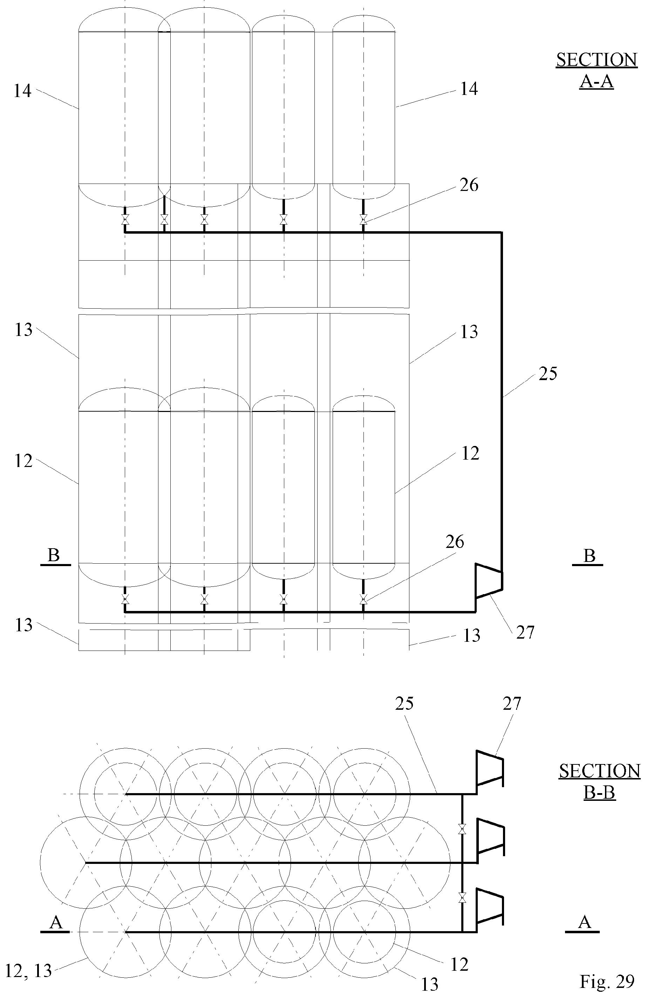

Fig. 29 schematically shows an array of interconnected modules with parallel connection of the connecting pipelines.

The top part of the figure shows a vertical section A-A of the module array, the bottom part of the figure shows a horizontal section B-B of the module array.

The spacing of modules is smaller than their diameter.

In all modules of the module of this module array, the intermediate pieces **13** have the same diameter.

The height of the lower reservoirs **12** and the upper reservoirs **14** are the same in all modules of all bedrock load capacities, but their diameters are different.

The reservoirs **12**, **14** are connected in parallel by separate branch pipelines to a horizontal connecting pipeline **25** arranged below the upper reservoirs **14**.

The reservoirs **12**, **14** are grouped into three groups by a connecting pipeline **25**, each group of reservoirs **12**, **14** being connected to the power unit **27**. The groups of reservoirs **12**, **14** are connected to each other by a sealable connecting pipeline **25** in case of failure of one of the power units **27** or to improve the possibility of regulating the filling of the reservoirs **12**, **14**.

The reservoirs **12**, **14** are here connected to the power unit **27** in parallel so that they can be filled and discharged simultaneously.

Each branch of the connecting pipeline **25** is provided with a cap **26** which allows the filling of the reservoir **12**, **14** to be regulated.

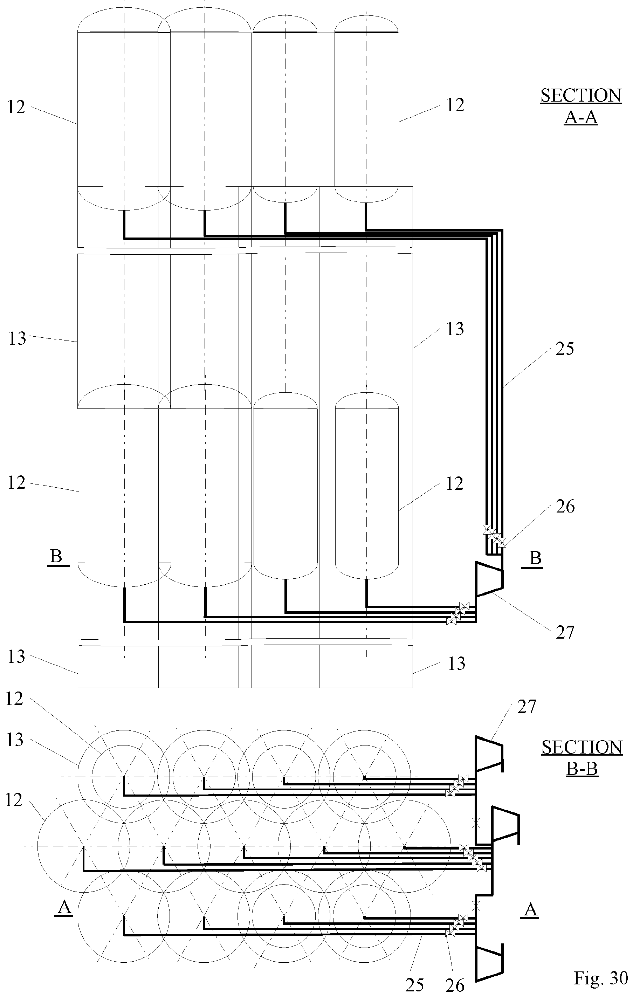

Fig. 30 schematically shows an array of interconnected modules with independent connection of the connecting pipelines.

The top part of the figure shows a vertical section A-A of the module array, the bottom part of the figure shows a horizontal section B-B of the module array.

The spacing of modules is smaller than their diameter.

In all modules of this module array, the intermediate pieces **13** have the same diameter.

The height of the lower reservoirs **12** and the upper reservoirs **14** are the same in all modules of all bedrock load capacities, but their diameter varies.

Each reservoir **12, 14** is connected by a separate connecting pipeline **25** leading up to the power unit **27.**

All the reservoirs **12, 14** are here connected to the power unit **27** completely independently.

Each separate connecting pipeline **25** is provided with a cap **26** which allows the filling of the lower reservoir **12** and the upper reservoir **14** to be regulated, and which is arranged upstream of the power unit **27** and is therefore easily accessible.

This arrangement is advantageous for increasing the reliability of the caps **26** in the event that the pumped water and any interior space of the module array is heated to an elevated temperature by the accumulation of waste heat from the pumping.

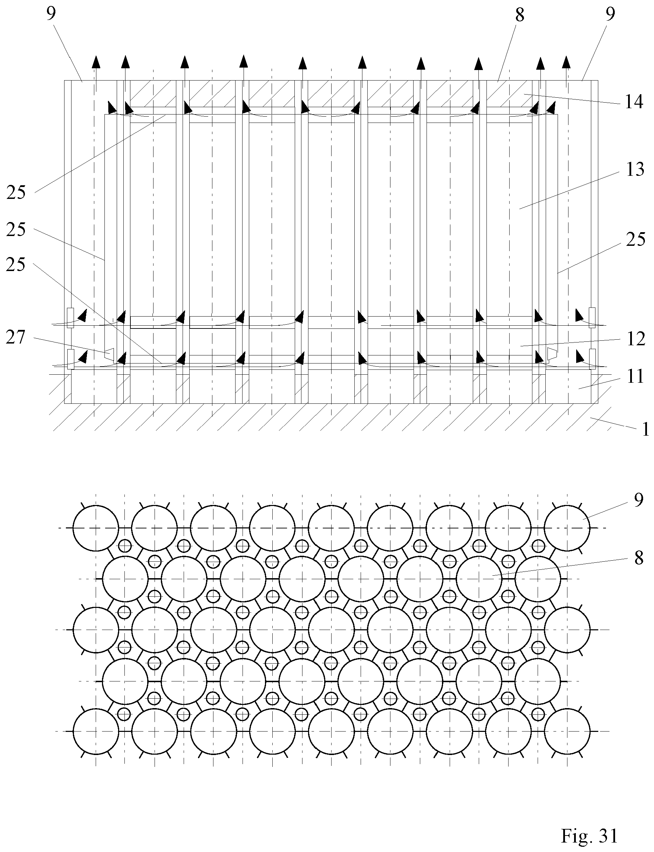

Figure 31 schematically shows the cooling of a pumped-storage power plant with a floating reservoir.

The array of modules **8, 9** comprises modules **8** which are connected to each other by vertical stiffeners.

In the upper part of the picture is the outline of the device, in the lower part of the picture is the floor plan of the device.

Here, the cooling air paths, which serve as a chimney, are advantageously used as air cooling devices:

-   peripheral energy modules **9** containing vertical connecting pipelines **25** which, together with the walls of modules **8,** serve as heat transfer surfaces,
-   vertical spaces between modules **8**, where the walls of modules **8** serve as heat transfer surfaces,
-   horizontal access passages at the level below and above the lower reservoirs **12,** as well as at the level below and above the upper reservoirs **14,** where the walls of the reservoirs **12, 14,** the horizontal connecting pipeline **25** and the power unit **27** form heat transfer surfaces.

Openings in the horizontal bracing between modules **8**, **9** and openings in the bottom and top of the perimeter energy modules **9** allow cooling air to pass through.

Air is supplied to the perimeter, energy modules **9** from the outside environment through a side opening at the bottom of the energy modules **9** and flows:

-   around the power unit **27** and vertically around the vertical connecting pipeline **25** and at the top of the energy modules **9,**
-   horizontally through access passages at the level below and above the lower reservoirs **12** around the horizontal connecting pipeline **25,**
-   horizontally through access passages at the level below and above the upper reservoirs **14** around the horizontal connecting pipeline **25,**
-   then flows vertically upwards around reservoirs **12, 14** and intermediate pieces **13,**

from which it removes waste heat, rises upwards by natural immersion depth as a result of heating and is discharged to the outside through openings at the top of modules **8**, **9.**

Through the floats **11,** heat from the floating reservoir is also transferred to the water in the base reservoir **1.**

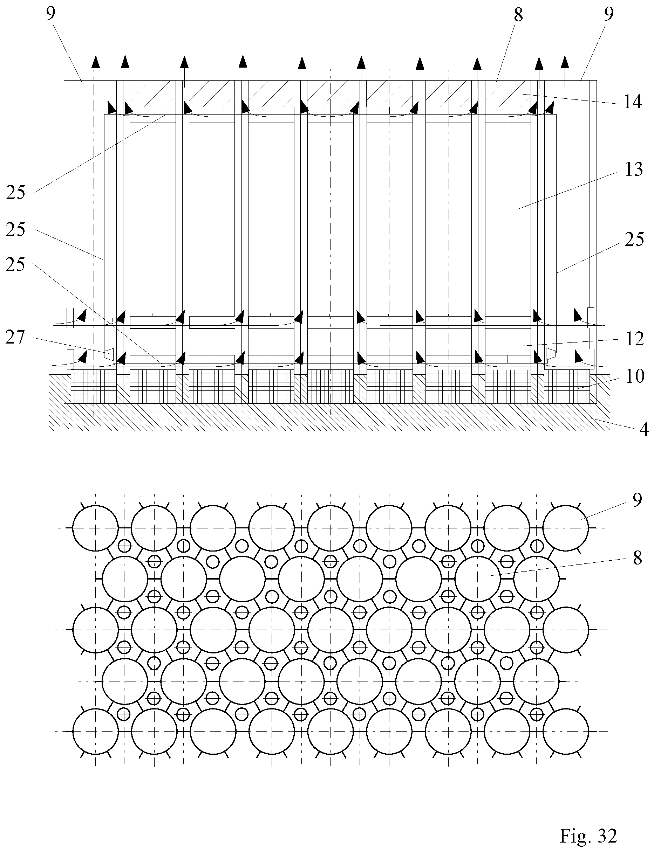

Fig. 32 schematically shows the cooling of a pumped-storage power plant with stationary reservoirs.

The array of modules **8**, **9** comprises modules **8** which are connected to each other by vertical stiffeners.

In the upper part of the picture is the outline of the device, in the lower part of the picture is the floor plan of the device.

Here, the cooling air paths, which serve as a chimney, are advantageously used as air cooling devices:

-   peripheral energy modules **9** containing vertical connecting pipelines **25** which, together with the walls of modules **8**, serve as heat transfer surfaces,
-   vertical spaces between modules **8**, where the walls of modules **8** serve as heat transfer surfaces,
-   horizontal access passages at the level below and above the lower reservoirs **12,** as well as at the level below and above the upper reservoirs **14,** where the walls of the reservoirs **12, 14,** the horizontal connecting pipeline **25** and the power unit **27** form heat transfer surfaces.

Openings in the horizontal bracing between modules **8**, **9** and openings in the bottom and top of the perimeter energy modules **9** allow cooling air to pass through.

Air is introduced from the outside into the perimeter energy modules **9** through a side opening at the bottom of the perimeter energy modules **9** and flows:

-   around the power unit **27** and vertically around the vertical connecting pipeline **25** and at the top of the energy modules **9,**
-   horizontally through access passages at the level below and above the lower reservoirs **12** around the horizontal connecting pipeline **25,**
-   horizontally through access passages at the level below and above the upper reservoirs **14** around the horizontal connecting pipeline **25,**
-   then flows vertically upwards around reservoirs **12, 14** and intermediate pieces **13,**

from which it removes waste heat, rises upwards by natural immersion depth as a result of heating and is discharged to the outside through openings at the top of modules **8**, **9.**

Through the base **10,** the heat from the pumped-storage power plant is also transferred to the bedrock **4.**

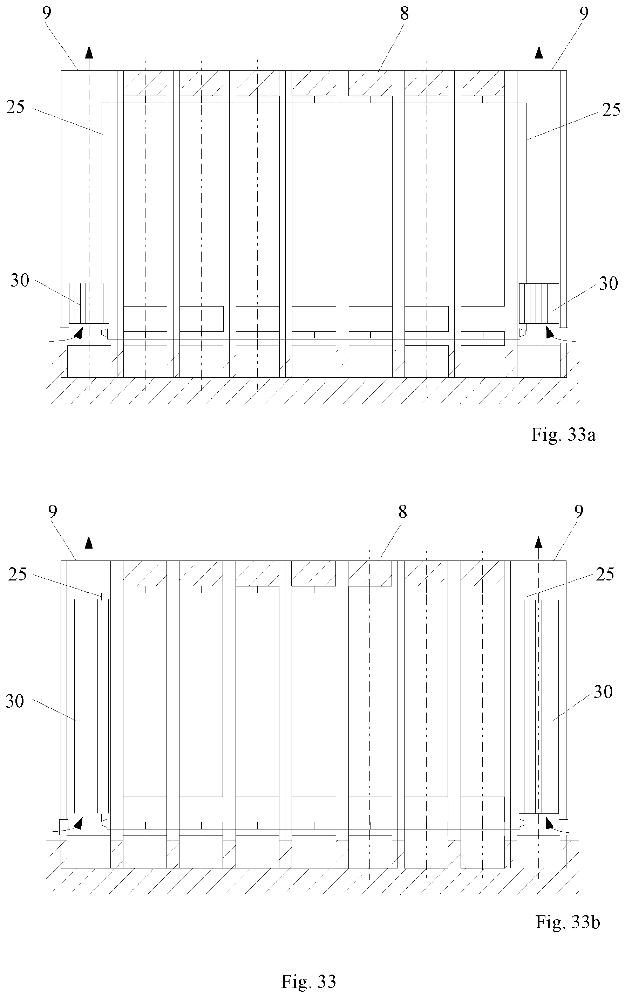

Figure 33 schematically shows the cooling of a pumped-storage power plant with a floating reservoir heat exchanger.

The module **8**, **9** array comprises modules **8** and energy modules **9,** which are connected to each other by vertical stiffeners.

The connecting pipeline **25** is branched in the peripheral, energy modules **9** and is arranged in the shape of a heat exchanger **30.**

In Figure 33a, the heat exchanger **30** is arranged at the bottom of the vertical connecting pipeline **25.**

In Figure 33b, the heat exchanger **30** is positioned at the full height of the vertical connecting pipeline **25.**

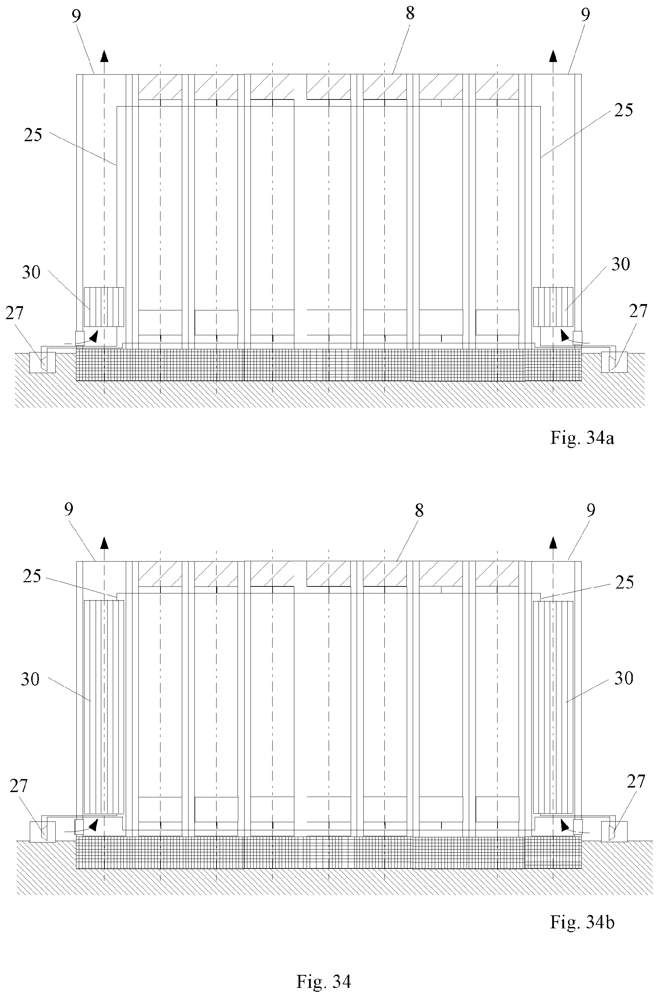

Fig. 34 schematically shows the cooling of a pumped-storage power plant with a heat exchanger with stationary reservoirs.

The module **8**, **9** array comprises modules **8** and energy modules **9,** which are connected to each other by vertical stiffeners.

The connecting pipeline **25** is branched in the peripheral, energy modules **9** and is arranged in the shape of a heat exchanger **30.** Power unit is arranged outside the array of modules **8, 9.**

In Figure 34a, the heat exchanger **30** is arranged at the bottom of the vertical connecting pipeline **25.**

In Figure 34b, the heat exchanger **30** is positioned at the full height of the vertical connecting pipeline **25.**

In Figure 34a, the energy facility of interest is arranged below ground level **5.**

In Figure 34b, the power unit is arranged at ground level **5.**

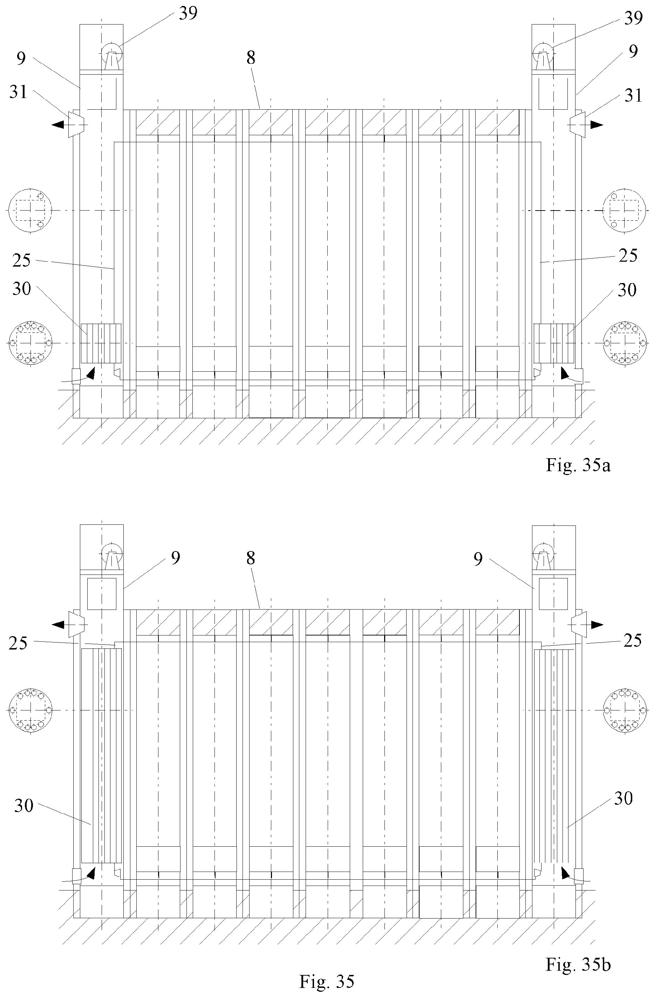

Figure 35 schematically shows a pumped-storage power plant with waste heat to power plant.

The pumped-storage power plant with floating reservoir **6** comprises an array of modules **8, 9** which are connected to each other by vertical stiffeners.

Advantageously, the connecting pipeline **25** is branched in the peripheral, energy modules **9,** is arranged in the form of a heat exchanger **30,** and air motors **31** are arranged in the upper part of the peripheral, energy modules **9.**

The ambient air is drawn into the lower part of the energy module **9** below the heat exchanger **30** as a result of the stack immersion depth, heated in the heat exchanger **30** by the waste heat, rises upwards, is compressed and exits at the upper part of the energy module **9** out into the environment, passing through the air motor **31** in which the compressed air expands and generates electricity.

For operation and maintenance, drum-driven cable lifts **39** are available.

In Figure 35a, the heat exchanger **30** is arranged at the bottom of the vertical connecting pipeline **25.**

In Figure 35b, the heat exchanger **30** is positioned at the full height of the vertical connecting pipeline **25.**

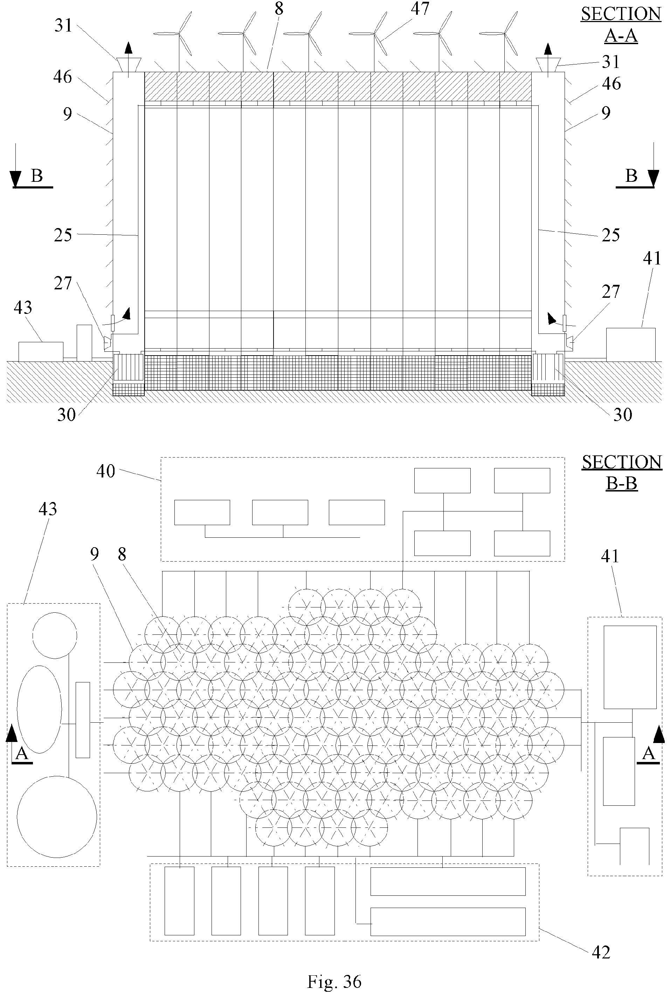

Figure 36 schematically shows a pumped-storage power plant with equipment for heating and for generating electricity from waste heat.

In the upper part of the picture is a vertical section A-A of the device, in the lower part of the picture is a plan section B-B of the device.

The pumped-storage power plant comprises an array of modules **8, 9** which are interconnected.

The modules **8** comprise a lower reservoir **12,** an intermediate piece **13** and an upper reservoir **14,** all modules **8, 9** being placed on concrete bases.

A horizontal connecting pipeline **25** is arranged under the lower reservoirs **12** and under the upper reservoirs **14** and is connected to the reservoirs **12, 14** by branch pipelines.

A power unit **27** is arranged at the bottom of the vertical connecting pipeline **25.**

The horizontal connecting pipeline **25** is branched in the peripheral energy modules **9** and is arranged in the form of heat exchangers **30.**

In the upper part of the peripheral, energy modules **9** are placed air motors **31** driven by air heated from the modules **8,** from the connecting pipelines **25** and from the heat exchangers **30.**

In the heat exchangers **30,** waste heat from the heated pumped water is transferred to the water of the outdoor heating system to heat the surrounding buildings in the residential zone **40,** the industrial zone **41**, the agricultural zone **42** and the recreational zone **43.**

On the upper platform and on the side walls of the array of modules **8, 9** there are panels of a solar power plant **46**. On the upper platform of the array of modules **8, 9** there are wind power plants **47.**

Industrial applicability of the invention

The pumped-storage power plant according to the invention has the potential for extensive use:

- is based on the proven simple principle of water pumping, which is an important prerequisite for its reliability,
- makes maximum use of the strength properties and corrosion resistance of the structural material,
- modular embodiment simplifies production and assembly,
- maintains stability against overturning even in very strong winds,
- it can be built with high capacity and power according to the needs of the power grid,
- allows long-term energy storage without loss of capacity,

- has a very good energy efficiency when pumping water,
- the waste heat generated by pumping water can be used to heat apartments and non-residential premises in the surrounding villages, or even for the secondary production of electricity,
- the upper platform and side walls of the pumped-storage power plant can be used to accommodate solar and/or wind power,
- the fluid overpressure in the power unit fluctuates during the operating cycle by no more than a few percent,
- it can be started and stopped with great alacrity,
- it can be manufactured using common, environmentally friendly and fully recyclable materials, especially steel, with a long service life of tens to hundreds of thousands of cycles, in the tens to hundreds of years,
- the development and construction can be based on experience in shipbuilding, energy installations and high-rise buildings,
- does not require the taking of large areas of valuable land in built-up areas or protected countryside,
- will allow the land from former industrial sites to be used very efficiently, especially if it has a high bedrock bearing capacity,
- it can very efficiently use not only marine areas, but also freshwater drainage-free lakes created by flooding mined surface mines and natural lakes, e. g. glacial lakes,
- the possibility of using part of the lake for recreational purposes remains,
- the operation of the pumped-storage power plant is environmentally friendly, no harmful waste is generated,
- pumping water between the lower and upper reservoirs inside the pumped-storage power plant cannot endanger the biological life in the vicinity, there is no risk of sucking unwanted objects from the lake, the water in the lake is not boiled or polluted, and the pumps and turbines cannot endanger the biological life in the lake,
- by dividing the pumped water quantity into individual modules, the risk of water flooding the surroundings in case of damage to one of the reservoirs is minimised,
- the pumped-storage power plant, especially in the modular embodiment, is very resistant to earthquakes and adverse weather conditions,
- the pumped-storage power plant's reservoirs can also serve as a water reservoir for emergency situations,
- the pumped-storage power plant has low operating costs,
- the economics of investment and operation are similar to those of a conventional pumped-storage power plant with two stationary reservoirs.

LIST OF REFERENCE SIGNS

1 - base reservoir
2 - bank of the base reservoir
3 - bottom of the base reservoir
4 - bedrock
5 - ground level
6 - floating reservoir
7 - module array
8 - module
9 - energy module
10 - base
11 - float
11a - bottom section
11b - middle section
11c - top section
12 - lower reservoir
13 - intermediate piece
14 - upper reservoir
15 - additional reservoir
16 - lower bottom of the float
17 - upper bottom of the single-piece float
17a - upper bottom of the bottom section
17b - upper bottom of the middle section
17c - upper bottom of the top section
18 - lower bottom of the lower reservoir
19 - upper bottom of the lower reservoir
20 - lower bottom of the upper reservoir
21 - upper bottom of the upper reservoir
22 - water level in the base reservoir
23 - water level in the lower reservoir
24 - water level in the upper reservoir
25 - connecting pipeline
26 - cap
27 - power unit
28 - reverse turbine
29 - motor-generator
30 - heat exchanger
31 - air motor
32 - vent pipeline for venting the lower reservoir
33 - vent pipeline for venting the upper reservoir
34 - vent connecting pipeline
35 - guide frame
36 - floating part
37 - mooring part
38 - lifting device
39 - rope lift
40 - residential zone
41 - industrial zone
42 - agricultural zone
43 - recreational zone
44 - rectification space
45 - lifting bag
46 - solar power plant
47 - wind power plant

## Claims

1. A pumped-storage power plant for pumping fluid between a lower reservoir (12) and an upper reservoir (14),

    wherein the pumped-storage power plant comprises a pipeline (25) and a power unit (27) for pumping fluid between the lower reservoir (12) and the upper reservoir (14),
    wherein the space of the lower reservoir (12) containing the pumped fluid is connected to the space of the upper reservoir (14) containing the pumped fluid via the power unit (27) by the pipeline (25) which, in both the lower reservoir (12) and the upper reservoir (14), has outlets positioned in the pumped fluid,
    wherein the pumped-storage power plant comprises a first module (8) and a second module (8), wherein both modules (8) have a vertical cylinder shape with a circular shape of horizontal cross-section, are arranged side by side and connected to each other by their walls,
    wherein according to a first alternative, the first module (8) comprises an upper reservoir (14), a lower reservoir (12), a base (10) and an intermediate piece (13), wherein the first module (8) is placed on a stationary bedrock, wherein the intermediate piece (13) is arranged on the base (10), the lower reservoir (12) is arranged on the base (10) or above the base (10) in the space of the intermediate piece (13), and the upper reservoir (14) is arranged on the intermediate piece (13), wherein the intermediate piece (13) has a vertical cylinder shape, wherein the first module (8), except for the base (10), is made of sheet metal and the base (10) is made of concrete,
    and according to said first alternative, the second module (8) comprises an upper reservoir (14), a lower reservoir (12), a base (10) and an intermediate piece (13), wherein the second module (8) is placed on a stationary bedrock, wherein the intermediate piece (13) is arranged on the base (10), the lower reservoir (12) is arranged on the base (10) or above the base (10) in the space of the intermediate piece (13), and the upper reservoir (14) is arranged on the intermediate piece (13), wherein the intermediate piece (13) has a vertical cylinder shape, wherein the second module (8), except for the base (10), is made of sheet metal and the base (10) is made of concrete,
    or
    according to a second alternative, the first module (8) comprises a floating reservoir (6) arranged in a liquid in a base reservoir (1), wherein the floating reservoir (6) comprises an upper reservoir (14), a float (11) and an intermediate piece (13), wherein the intermediate piece (13) is arranged on the float (11) and the upper reservoir (14) is arranged on the intermediate piece (13), wherein the base reservoir (1) is the lower reservoir (12), wherein the intermediate piece (13) has a vertical cylinder shape, wherein the first module (8) is made of sheet metal,
    and according to said second alternative, the second module (8) comprises a floating reservoir (6) arranged in a liquid in a base reservoir (1), wherein the floating reservoir (6) comprises an upper reservoir (14), a float (11) and an intermediate piece (13), wherein the intermediate piece (13) is arranged on the float (11) and the upper reservoir (14) is arranged on the intermediate piece (13), wherein the base reservoir (1) is the lower reservoir (12), wherein the intermediate piece (13) has a vertical cylinder shape, wherein the second module (8) is made of sheet metal,
    or
    according to a third alternative, the first module (8) comprises a floating reservoir (6) arranged in a liquid in a base reservoir (1), wherein the floating reservoir (6) comprises an upper reservoir (14) and a lower reservoir (12), wherein the pipeline (25) with the power unit (27) are arranged for directly transferring fluid from the upper reservoir (14) to the lower reservoir (12) and for directly pumping of fluid from the lower reservoir (12) to the upper reservoir (14), wherein the first module (8) is made of sheet metal,
    and according to said third alternative, the second module (8) comprises a floating reservoir (6) arranged in a liquid in a base reservoir (1), wherein the floating reservoir (6) comprises an upper reservoir (14) and a lower reservoir (12), wherein the pipeline (25) with the power unit (27) are arranged for directly transferring fluid from the upper reservoir (14) to the lower reservoir (12) and for directly pumping of fluid from the lower reservoir (12) to the upper reservoir (14), wherein the second module (8) is made of sheet metal.

2. The pumped-storage power plant according to claim 1, wherein the spacing of the modules (8, 9) is larger and/or smaller than their diameter, or is equal to their diameter.

3. The pumped-storage power plant according to claim 1 or 2, wherein the pumped-storage power plant comprises an array (7) of modules (8, 9).

4. The pumped-storage power plant according to claim 3 wherein the array (7) of modules (8, 9) comprises groups of modules (8, 9).

5. The pumped-storage power plant according to claim 3 or 4, wherein the array (7) of modules (8, 9) comprises modules (8, 9) with different module (8, 9) heights or with different reservoir (12, 14, 15) heights according to the depth profile of the base reservoir (1) and/or according to the bearing capacity of the bedrock (4).

6. The pumped-storage power plant according to any one of claims 1 to 5, wherein, according to said second or third alternative, the floating reservoir (6) is filled with a gas having an internal overpressure equal to or greater than an external overpressure of the liquid corresponding to the greatest immersion depth of the floating reservoir (6) in the base reservoir (1).

7. The pumped-storage power plant according to any one of claims 1 to 6, wherein, according to said second or third alternative, the float (11) is divided in height into a plurality of segments (11a, 11b, 11c) which are separated from each other by a pressure partition (17a, 17b).

8. The pumped-storage power plant according to claim 7, wherein each segment (11a, 11b, 11c) of the float (11) is filled with gas, whose internal overpressure in each segment (11a, 11b, 11c) is equal to or greater than the external overpressure of the liquid corresponding to the greatest immersion depth of the respective segment (11a, 11b, 11c) in the base reservoir (1).

9. The pumped-storage power plant according to any one of claims 1 to 8, wherein, according to said second or third alternative, the pumped-storage power plant comprises a guide frame (35) for securing the floating reservoir (6) against a horizontal movement on the surface (22) of the liquid in the base reservoir (1).

10. The pumped-storage power plant according to any one of claims 1 to 9, wherein a connecting pipeline (25) is led from each reservoir (12, 14, 15) to the circumference of the pumped-storage power plant.

11. The pumped-storage power plant according to claim 10, wherein the connecting pipeline (25) is led from each reservoir (12, 14, 15) separately to the power unit (27).

12. The pumped-storage power plant according to any one of claims 1 to 11, wherein the pumped-storage power plant comprises a vent connecting pipeline (34) connecting the lower reservoir (12) and the upper reservoir (14) and/or an additional reservoir (15).

13. The pumped-storage power plant according to any one of claims 1 to 12, wherein a solar power plant (46) and/or a wind power plant (47) is arranged on an upper platform and/or on side walls of the pumped-storage power plant.

14. The pumped-storage power plant according to any one of claims 1 to 13, wherein it comprises a device (30) for removing waste heat generated from the pumping and/or comprises a device (31) for generating electricity from the waste heat generated from the pumping and/or comprises a device (30) for using the waste heat generated from the pumping to heat the surrounding buildings (40, 41, 42, 43).

15. The pumped-storage power plant according to any one of claims 1 to 14, wherein it comprises a monitoring, measuring and control system.

**Patentansprüche**

1. Ein Pumpspeicherkraftwerk zum Pumpen von Fluid zwischen einem unteren Speicher (12) und einem oberen Speicher (14),

wobei das Pumpspeicherkraftwerk eine Rohrleitung (25) und eine Antriebseinheit (27) zum Pumpen von Fluid zwischen dem unteren Speicher (12) und dem oberen Speicher (14) umfasst,
wobei der das gepumpte Fluid enthaltende Raum des unteren Speichers (12) über die Antriebseinheit (27) durch die Rohrleitung (25) mit dem das gepumpte Fluid enthaltenden Raum des oberen Speichers (14) verbunden ist, wobei die Rohrleitung (25) sowohl im unteren Speicher (12) als auch im oberen Speicher (14) Auslässe aufweist, die in dem gepumpten Fluid angeordnet sind,
wobei das Pumpspeicherkraftwerk ein erstes Modul (8) und ein zweites Modul (8) umfasst, wobei beide Module (8) eine vertikale Zylinderform mit kreisförmigem Querschnitt aufweisen, nebeneinander angeordnet und über ihre Wände miteinander verbunden sind,
wobei gemäß einer ersten Alternative das erste Modul (8) ein oberes Speicher (14), ein unteres Speicher (12), einen Sockel (10) und ein Zwischenstück (13) aufweist, wobei das erste Modul (8) auf einem stationären Felsuntergrund steht, wobei das Zwischenstück (13) auf dem Sockel (10) angeordnet ist, das untere Speicher (12) auf dem Sockel (10) oder oberhalb des Sockels (10) im Raum des Zwischenstücks (13) angeordnet ist, und der obere Speicher (14) auf dem Zwischenstück (13) angeordnet ist, wobei das Zwischenstück (13) eine vertikale Zylinderform aufweist, wobei das erste Modul (8) mit Ausnahme des Sockels (10) aus Blech und der Sockel (10) aus Beton besteht,

und gemäß der ersten Alternative das zweite Modul (8) einen oberen Speicher (14), einen unteren Speicher (12), einen Sockel (10) und ein Zwischenstück (13) umfasst, wobei das zweite Modul (8) auf einem festen Felsuntergrund steht, wobei das Zwischenstück (13) auf dem Sockel (10) angeordnet ist, der untere Speicher (12) auf dem Sockel (10) oder oberhalb des Sockels (10) im Raum des Zwischenstücks (13) angeordnet ist, und der obere Speicher (14) auf dem Zwischenstück (13) angeordnet ist, wobei das Zwischenstück (13) eine vertikale Zylinderform aufweist, wobei das zweite Modul (8) mit Ausnahme des Sockels (10) aus Blech und der Sockel (10) aus Beton besteht, oder

gemäß einer zweiten Alternative das erste Modul (8) einen Schwimmerspeicher (6) umfasst, der in einer Flüssigkeit in einem Basisspeicher (1) angeordnet ist, wobei der Schwimmerspeicher (6) einen oberen Speicher (14), einen Schwimmer (11) und ein Zwischenstück (13) umfasst, wobei das Zwischenstück (13) auf dem Schwimmer (11) und der obere Speicher (14) auf dem Zwischenstück (13) angeordnet ist, wobei der Basisspeicher (1) der untere Speicher (12) ist, wobei das Zwischenstück (13) eine vertikale Zylinderform aufweist, wobei das erste Modul (8) aus Blech besteht,

und gemäß der zweiten Alternative das zweite Modul (8) einen Schwimmerspeicher (6) umfasst, der in einer Flüssigkeit in einem Basisspeicher (1) angeordnet ist, wobei der Schwimmerspeicher (6) einen oberen Speicher (14), einen Schwimmer (11) und ein Zwischenstück (13) umfasst, wobei das Zwischenstück (13) auf dem Schwimmer (11) angeordnet ist und der obere Speicher (14) auf dem Zwischenstück (13) angeordnet ist, wobei der Basisspeicher (1) der untere Speicher (12) ist, wobei das Zwischenstück (13) eine vertikale Zylinderform aufweist, wobei das zweite Modul (8) aus Blech besteht, oder

gemäß einer dritten Alternative das erste Modul (8) einen in einer Flüssigkeit in einem Basisspeicher (1) angeordneten Schwimmerspeicher (6) umfasst, wobei der Schwimmerspeicher (6) einen oberen Speicher (14) und einen unteren Speicher (12) umfasst, wobei die Rohrleitung (25) mit der Antriebseinheit (27) so angeordnet ist, dass sie Flüssigkeit direkt vom oberen Speicher (14) zum unteren Speicher (12) leitet und Flüssigkeit direkt vom unteren Speicher (12) zum oberen Speicher (14) pumpt, wobei das erste Modul (8) aus Blech besteht,

und gemäß der dritten Alternative das zweite Modul (8) einen Schwimmerspeicher (6) umfasst, der in einer Flüssigkeit in einem Basisspeicher (1) angeordnet ist, wobei der Schwimmerspeicher (6) einen oberen Speicher (14) und einen unteren Speicher (12) umfasst, wobei die Rohrleitung (25) mit der Antriebseinheit (27) so angeordnet ist, dass sie Flüssigkeit direkt vom oberen Speicher (14) zum unteren Speicher (12) leitet und Flüssigkeit direkt vom unteren Speicher (12) zum oberen Speicher (14) pumpt, wobei das zweite Modul (8) aus Blech besteht.

2. Das Pumpspeicherkraftwerk nach Anspruch 1, wobei der Abstand der Module (8, 9) größer und/oder kleiner als ihr Durchmesser ist oder ihrem Durchmesser entspricht.

3. Das Pumpspeicherkraftwerk nach Anspruch 1 oder 2, wobei das Pumpspeicherkraftwerk eine Anordnung (7) von Modulen (8, 9) umfasst.

4. Das Pumpspeicherkraftwerk nach Anspruch 3, wobei die Anordnung (7) von Modulen (8, 9) Gruppen von Modulen (8, 9) umfasst.

5. Das Pumpspeicherkraftwerk nach Anspruch 3 oder 4, wobei die Anordnung (7) von Modulen (8, 9) Module (8, 9) mit unterschiedlichen Modulhöhen (8, 9) oder mit unterschiedlichen Stauhöhen (12, 14, 15) entsprechend dem Tiefenprofil des Basisspeichers (1) und/oder entsprechend der Tragfähigkeit des Felsuntergrunds (4) umfasst.

6. Das Pumpspeicherkraftwerk nach einem der Ansprüche 1 bis 5, wobei gemäß der zweiten oder dritten Alternative der Schwimmerspeicher (6) mit einem Gas gefüllt ist, dessen innerer Überdruck gleich oder größer ist als ein äußerer Überdruck der Flüssigkeit, der der größten Eintauchtiefe des Schwimmerspeichers (6) im Basisspeicher (1) entspricht.

7. Das Pumpspeicherkraftwerk nach einem der Ansprüche 1 bis 6, wobei gemäß der zweiten oder dritten Alternative der Schwimmer (11) in der Höhe in mehrere Segmente (11a, 11b, 11c) unterteilt ist, die durch eine Drucktrennwand (17a, 17b) voneinander getrennt sind.

8. Das Pumpspeicherkraftwerk nach Anspruch 7, wobei jedes Segment (11a, 11b, 11c) des Schwimmers (11) mit Gas gefüllt ist, dessen innerer Überdruck in jedem Segment (11a, 11b, 11c) gleich oder größer ist als der äußere Überdruck der Flüssigkeit, der der größten Eintauchtiefe des jeweiligen Segments (11a, 11b, 11c) im Basisspeicher (1) entspricht.

9. Das Pumpspeicherkraftwerk nach einem der Ansprüche 1 bis 8, wobei das Pumpspeicherkraftwerk gemäß der zweiten oder dritten Alternative einen Führungsrahmen (35) umfasst, um der Schwimmerspeicher (6) gegen eine horizontale Bewegung auf der Oberfläche (22) der Flüssigkeit im Basisspeicher (1) zu sichern.

10. Das Pumpspeicherkraftwerk nach einem der Ansprüche 1 bis 9, wobei von jedem Speicher (12, 14, 15) eine Verbindungsleitung (25) zum Umfang des Pumpspeicherkraftwerks geführt ist.

11. Das Pumpspeicherkraftwerk nach Anspruch 10, wobei die Verbindungsleitung (25) von jedem Speicher (12, 14, 15) separat zur Antriebseinheit (27) geführt ist.

12. Das Pumpspeicherkraftwerk nach einem der Ansprüche 1 bis 11, wobei das Pumpspeicherkraftwerk eine Entlüftungsverbindungsleitung (34) umfasst, die das untere Speicher (12) und das obere Speicher (14) und/oder ein zusätzliches Speicher (15) verbindet.

13. Das Pumpspeicherkraftwerk nach einem der Ansprüche 1 bis 12, wobei ein Solarkraftwerk (46) und-/oder ein Windkraftwerk (47) auf einer oberen Plattform und/oder an Seitenwänden des Pumpspeicherkraftwerks angeordnet ist.

14. Das Pumpspeicherkraftwerk nach einem der Ansprüche 1 bis 13, wobei es eine Vorrichtung (30) zum Abführen der beim Pumpen erzeugten Abwärme und/oder eine Vorrichtung (31) zur Erzeugung von Strom aus der beim Pumpen erzeugten Abwärme und/oder eine Vorrichtung (30) zur Nutzung der beim Pumpen erzeugten Abwärme zum Beheizen der umliegenden Gebäude (40, 41, 42, 43) zu nutzen.

15. Das Pumpspeicherkraftwerk nach einem der Ansprüche 1 bis 14, wobei es ein Überwachungs-, Mess- und Steuerungssystem umfasst.

**Revendications**

1. Une centrale électrique à accumulation par pompage, destinée à pomper un fluide entre un réservoir inférieur (12) et un réservoir supérieur (14),

où la centrale électrique à accumulation par pompage comprend une canalisation (25) et une unité de puissance (27) pour pomper un fluide entre le réservoir inférieur (12) et le réservoir supérieur (14),

où l'espace du réservoir inférieur (12) contenant le fluide pompé est relié à l'espace du réservoir supérieur (14) contenant le fluide pompé via l'unité de puissance (27) par la canalisation (25) qui, tant dans le réservoir inférieur (12) que dans le réservoir supérieur (14), comporte des sorties positionnées dans le fluide pompé,

où la centrale électrique à accumulation par pompage comprend un premier module (8) et un deuxième module (8), où les deux modules (8) ont une forme cylindrique verticale avec une section transversale horizontale circulaire, sont disposés côte à côte et reliés l'un à l'autre par leurs parois,

où, selon une première variante, le premier module (8) comprend un réservoir supérieur (14), un réservoir inférieur (12), une base (10) et une pièce intermédiaire (13), où le premier module (8) est placé sur un socle rocheux fixe, où la pièce intermédiaire (13) est disposée sur la base (10), le réservoir inférieur (12) est disposé sur la base (10) ou au-dessus de la base (10) dans l'espace de la pièce intermédiaire (13), et le réservoir supérieur (14) est disposé sur la pièce intermédiaire (13), où la pièce intermédiaire (13) a une forme de cylindre vertical, où le premier module (8), à l'exception de la base (10), est réalisé en tôle et la base (10) est réalisée en béton,

et selon ladite première variante, le deuxième module (8) comprend un réservoir supérieur (14), un réservoir inférieur (12), une base (10) et une pièce intermédiaire (13), où le deuxième module (8) est placé sur un socle rocheux fixe, où la pièce intermédiaire (13) est disposée sur la base (10), le réservoir inférieur (12) est disposé sur la base (10) ou au-dessus de la base (10) dans l'espace de la pièce intermédiaire (13), et le réservoir supérieur (14) est disposé sur la pièce intermédiaire (13), où la pièce intermédiaire (13) a une forme de cylindre vertical, où le deuxième module (8), à l'exception de la base (10), est réalisé en tôle et la base (10) est réalisée en béton,

ou

selon une deuxième variante, le premier module (8) comprend un réservoir flottant (6) disposé dans un liquide à l'intérieur d'un réservoir de base (1), où le réservoir flottant (6) comprend un réservoir supérieur (14), un flotteur (11) et une pièce intermédiaire (13), où la pièce intermédiaire (13) est disposée sur le flotteur (11) et le réservoir supérieur (14) est disposé sur la pièce intermédiaire (13), où le réservoir de base (1) est le réservoir inférieur (12), où la pièce intermédiaire (13) a une forme de cylindre vertical, où le premier module (8) est réalisé en tôle,

et selon ladite deuxième variante, le deuxième module (8) comprend un réservoir flottant (6) disposé dans un liquide à l'intérieur d'un réservoir de base (1), où le réservoir flottant (6) comprend un réservoir supérieur (14), un flotteur (11) et une pièce intermédiaire (13), où la pièce intermédiaire (13) est disposée sur le flotteur (11) et le réservoir supérieur (14) est disposé sur la pièce intermédiaire (13), où le réservoir de base (1) est le réservoir inférieur (12), où la pièce intermédiaire (13) a une forme de cylindre vertical, où le deuxième module (8) est réalisé en tôle,

ou

selon une troisième variante, le premier module (8) comprend un réservoir flottant (6) disposé dans un liquide à l'intérieur d'un réservoir de base (1), où le réservoir flottant (6) comprend un réservoir supérieur (14) et un réservoir inférieur (12), où la canalisation (25) avec l'unité de puissance (27) est agencée pour transférer directement du fluide du réservoir supérieur (14) vers le réservoir inférieur (12) et pour pomper directement du fluide du réservoir inférieur (12) vers le réservoir supérieur (14), où le premier module (8) est réalisé en tôle,

et selon ladite troisième variante, le deuxième module (8) comprend un réservoir flottant (6) disposé dans un liquide à l'intérieur d'un réservoir de base (1), où le réservoir flottant (6) comprend un réservoir supérieur (14) et un réservoir inférieur (12), où la canalisation (25) avec l'unité de puissance (27) est agencée pour transférer directement du fluide du réservoir supérieur (14) vers le réservoir inférieur (12) et pour pomper directement du fluide du réservoir inférieur (12) vers le réservoir supérieur (14), où le deuxième module (8) est réalisé en tôle.

2. La centrale électrique à accumulation par pompage selon la revendication 1, où l'espacement des modules (8, 9) est supérieur et/ou inférieur à leur diamètre, ou est égal à leur diamètre.

3. La centrale électrique à accumulation par pompage selon la revendication 1 ou 2, où la centrale électrique à accumulation par pompage comprend un réseau (7) de modules (8, 9).

4. La centrale électrique à accumulation par pompage selon la revendication 3, où le réseau (7) de modules (8, 9) comprend des groupes de modules (8, 9).

5. La centrale électrique à accumulation par pompage selon la revendication 3 ou 4, où le réseau (7) de modules (8, 9) comprend des modules (8, 9) présentant des hauteurs de module (8, 9) différentes ou des hauteurs de réservoir (12, 14, 15) différentes en fonction du profil de profondeur du réservoir de base (1) et/ou de la capacité portante du socle rocheux (4).

6. La centrale électrique à accumulation par pompage selon l'une quelconque des revendications 1 à 5, où, selon ladite deuxième ou troisième variante, le réservoir flottant (6) est rempli d'un gaz présentant une surpression interne égale ou supérieure à une surpression externe du liquide correspondant à la plus grande profondeur d'immersion du réservoir flottant (6) dans le réservoir de base (1).

7. La centrale électrique à accumulation par pompage selon l'une quelconque des revendications 1 à 6, où, selon ladite deuxième ou troisième variante, le flotteur (11) est divisé en hauteur en une pluralité de segments (11a, 11b, 11c) qui sont séparés les uns des autres par une cloison de pression (17a, 17b).

8. La centrale électrique à accumulation par pompage selon la revendication 7, où chaque segment (11a, 11b, 11c) du flotteur (11) est rempli de gaz, dont la surpression interne dans chaque segment (11a, 11b, 11c) est égale ou supérieure à la surpression externe du liquide correspondant à la plus grande profondeur d'immersion du segment respectif (11a, 11b, 11c) dans le réservoir de base (1).

9. La centrale électrique à accumulation par pompage selon l'une quelconque des revendications 1 à 8, où, selon ladite deuxième ou troisième variante, la centrale électrique à accumulation par pompage comprend un cadre de guidage (35) destiné à empêcher le réservoir flottant (6) de se déplacer horizontalement sur la surface (22) du liquide dans le réservoir de base (1).

10. La centrale électrique à accumulation par pompage selon l'une quelconque des revendications 1 à 9, où une conduite de raccordement (25) part de chaque réservoir (12, 14, 15) pour rejoindre la périphérie de la centrale électrique à accumulation par pompage.

11. La centrale électrique à accumulation par pompage selon la revendication 10, où la conduite de raccordement (25) part de chaque réservoir (12, 14, 15) séparément pour rejoindre l'unité de puissance (27).

12. La centrale électrique à accumulation par pompage selon l'une quelconque des revendications 1 à 11, où la centrale électrique à accumulation par pompage comprend une conduite de raccordement de purge (34) reliant le réservoir inférieur (12) et le réservoir supérieur (14) et/ou un réservoir supplémentaire (15).

13. La centrale électrique à accumulation par pompage selon l'une quelconque des revendications 1 à 12, où une centrale solaire (46) et/ou une centrale éolienne (47) est disposée sur une plate-forme supérieure et/ou sur les parois latérales de la centrale électrique à accumulation par pompage.

14. La centrale électrique à accumulation par pompage selon l'une quelconque des revendications 1 à 13, où elle comprend un dispositif (30) destiné à évacuer la chaleur perdue générée par le pompage et/ou comprend un dispositif (31) destiné à produire de l'électricité à partir de la chaleur perdue générée par le pompage et/ou comprend un dispositif (30) destiné à utiliser la chaleur perdue générée par le pompage pour chauffer les bâtiments environnants (40, 41, 42, 43).

15. La centrale électrique à accumulation par pompage selon l'une quelconque des revendications 1 à 14, où elle comprend un système de surveillance, de mesure et de commande.

DETAIL A

DETAIL B

Fig. 1

DETAIL C

Fig. 2

Fig. 3

EP 4 573 281 B1

Fig. 4a          Fig. 4b

Fig. 4

Fig. 5a

Fig. 5b

Fig. 5

Fig. 6a

Fig. 6b

Fig. 6

Fig. 7a

Fig. 7b

Fig. 7

Fig. 8

Fig. 9

Fig. 10a

Fig. 10b

Fig. 10

Fig. 11a

Fig. 11b

Fig. 11

Fig. 12a

Fig. 12b

Fig. 12c

Fig. 12

Fig. 13a

Fig. 13b

Fig. 13

Fig. 14a

Fig. 14b

Fig. 14

Fig. 15a

Fig. 15b

Fig. 15c

Fig. 15

EP 4 573 281 B1

Fig. 16a

Fig. 16b

Fig. 16

Fig. 17a

Fig. 17b

Fig. 17

Fig. 18a

Fig. 18b

Fig. 18

Fig. 19a

Fig. 19b

Fig. 19

Fig. 20a

Fig. 20b

Fig. 20

Fig. 21a

Fig. 21b

Fig. 21c

Fig. 21

EP 4 573 281 B1

7

SECTION
A-A

14

13

B

B

12

10

4

SECTION
B-B

8

A

A

Fig. 22

SECTION
A-A

7

14

13

B                    B

12

10

4

SECTION
B-B

8

A                    A

Fig. 23

Fig. 24a

Fig. 24b

Fig. 24

Fig. 25a

Fig. 25b

Fig. 25

SECTION A-A

Fig. 26a

SECTION A-A

Fig. 26b

Fig. 26

SECTION A-A

SECTION A-A

Fig. 27a

Fig. 27b

Fig. 27

EP 4 573 281 B1

14

13

8

8

26   25

SECTION
A-A

B        B

SECTION
B-B

A        A

Fig. 28

14   14

SECTION
A-A

26

13   13

25

12   12

B   B

26

13   13   27

25   27

SECTION
B-B

A   A

12, 13   12

13

Fig. 29

SECTION
A-A

SECTION
B-B

Fig. 30

Fig. 31

Fig. 32

Fig. 33a

Fig. 33b

Fig. 33

Fig. 34a

Fig. 34b

Fig. 34

Fig. 35a

Fig. 35b

Fig. 35

Fig. 36

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021221351 A
- EP 3085951 A
- WO 2013163979 A
- DE 102013015082 A1
- EP 2418375 A
- US 2018156185 A
- CN 206721844

- US 2014033700 A
- GB 1601398 A
- WO 2016128962 A
- KR 102019894 B1
- ES 2798158 A1
- EP 3085950 A1
- DE 102019118725 A1